(19)

Europäisches
Patentamt
European
Patent Office
Office européen
des brevets

(11)  **EP 2 838 264 A1**

(12)  **EUROPEAN PATENT APPLICATION**
published in accordance with Art. 153(4) EPC

(43) Date of publication:
**18.02.2015  Bulletin 2015/08**

(21) Application number: **13780642.8**

(22) Date of filing: **23.04.2013**

(51) Int Cl.:
**H04N 7/36** *(0000.00)*

(86) International application number:
**PCT/KR2013/003459**

(87) International publication number:
**WO 2013/162251 (31.10.2013 Gazette 2013/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **23.04.2012  US 201261636918 P**

(71) Applicant: **Samsung Electronics Co., Ltd.**
**Suwon-si, Gyeonggi-do, 443-742 (KR)**

(72) Inventors:
• **CHOI, Byeong-doo**
  **Siheung-si**
  **Gyeonggi-do 429-717 (KR)**
• **KIM, Jae-hyun**
  **Seoul 137-040 (KR)**
• **PARK, Jeong-hoon**
  **Seoul 151-050 (KR)**

(74) Representative: **Jones, Ithel Rhys**
  **Appleyard Lees**
  **15 Clare Road**
  **Halifax, Yorkshire HX1 2HY (GB)**

(54)  **METHOD FOR ENCODING MULTIVIEW VIDEO USING REFERENCE LIST FOR MULTIVIEW VIDEO PREDICTION AND DEVICE THEREFOR, AND METHOD FOR DECODING MULTIVIEW VIDEO USING REFERNECE LIST FOR MULTIVIEW VIDEO PREDICTION AND DEVICE THEREFOR**

(57)  Provided are methods of encoding and decoding a multiview video by performing inter-prediction and inter-view prediction on each view image of the multiview video.

A method of prediction-encoding the multiview video includes determining at least one reference picture list from among first and second reference picture lists which respectively include restored images having a same viewpoint as a current picture for inter-prediction of the current picture and restored images for inter-view prediction; determining at least one reference picture and reference block with respect to a current block of the current picture by using the determined at least one reference picture list; and performing at least one selected from inter-prediction and inter-view prediction on the current block by using the reference block.

FIG. 1A

EP 2 838 264 A1

**Description**

TECHNICAL FIELD

The inventive concept relates to encoding and decoding a multiview video.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a macroblock having a predetermined size.

Image data of a spatial domain is transformed into coefficients of a frequency region via frequency transformation. According to a video codec, an image is split into blocks having a predetermined size, discrete cosine transformation (DCT) is performed on each block, and frequency coefficients are encoded in block units, for rapid calculation of frequency transformation. In compassion to image data of a spatial domain, coefficients of a frequency region are easily compressed. In particular, since an image pixel value of a spatial domain is expressed according to a prediction error via inter-prediction or intra-prediction of a video codec, when frequency transformation is performed on the prediction error, a large amount of data may be transformed to 0. According to a video codec, an amount of data may be reduced by replacing data that is consecutively and repeatedly generated with small-sized data.

As the demand for multiview videos increases, an amount of data of a video, which increases according to the number of viewpoints, is becoming problematic. Therefore, much effort has been directed to determine how to effectively encode the multiview videos.

DETAILED DESCRIPTION OF THE INVENTIVE CONCEPT

TECHNICAL PROBLEM

The inventive concept provides a method of encoding and decoding a multiview video by performing inter-prediction and inter-view prediction on images of viewpoints of the multiview video.

TECHNICAL SOLUTION

According to one or more exemplary embodiments, there is provided a method of prediction-encoding a multiview image including determining at least one reference picture list selected from a first reference picture list that includes, from among images of the same viewpoint as a current picture, at least one restored image having a reproduction order prior to that of the current picture and at least one restored image having the same reproduction order as the current picture and a view identifier (VID) lower than that of the current picture; and a second reference picture list that includes at least one restored image having the same viewpoint as the current picture and a reproduction order later than that of the current picture and at least one restored image having the same reproduction order as the current picture and a VID higher than that of the current picture; determining at least one reference picture and reference block with respect to a current block of the current picture by using the determined at least one reference picture list; and performing at least one selected from inter-prediction and inter-view prediction on the current block by using the reference block.

ADVANTAGEOUS EFFECTS

According to an apparatus for prediction-encoding a multiview video, a reference picture list for performing inter-prediction and inter-view prediction on the multiview video may be provided. A single reference picture list may include a reference picture for inter-prediction and a reference picture for inter-view prediction.

According to an apparatus for prediction-decoding the multiview video, at least one reference picture list that includes a reference picture for inter-prediction and a reference picture for inter-view prediction may be generated. A reference picture of a current picture may be determined by referencing a single reference picture list, and a reference block may be determined from among reference pictures to thus perform at least one selected from inter-prediction and inter-view prediction.

DESCRIPTION OF THE DRAWINGS

FIG. 1A is a block diagram of a multiview video prediction-encoding apparatus, according to an embodiment of the present inventive concept;

FIG. 1B is a flowchart of a multiview video prediction-encoding method, according to an embodiment of the present inventive concept;

FIG. 2A is a block diagram of a multiview video prediction-decoding apparatus, according to an embodiment of the present inventive concept;

FIG. 2B is a flowchart of a multiview video prediction-decoding method, according to an embodiment of the present inventive concept;

FIG. 3 is a diagram of reference objects for performing inter-prediction and inter-view prediction on a current picture, according to an embodiment of the present inventive concept;

FIG. 4 is an exemplary view of a reference picture list that is configured based on the reference objects of FIG. 3, according to an embodiment of the present inventive concept;

FIGS. 5A and 5B are diagrams of a process of modifying an L0 list, according to an embodiment of the present inventive concept;

FIG. 6 is a diagram of a syntax of a picture parameter set, according to an embodiment of the present inventive concept;

FIG. 7 is a diagram of a syntax of a slice header, according to an embodiment of the present inventive concept;

FIG. 8 is a diagram of a syntax of parameters for modifying the reference picture list, according to an embodiment of the present inventive concept;

FIG. 9 is an exemplary view of a reference picture list combination, according to another embodiment of the inventive concept;

FIGS. 10 and 11 are diagrams of a process of modifying the reference picture list combination, according to another embodiment of the inventive concept;

FIG. 12 is a block diagram of a multiview video encoding apparatus including the multiview video prediction-encoding apparatus, according to an embodiment of the present inventive concept;

FIG. 13 is a block diagram of a multiview video decoding apparatus including the multiview video prediction-decoding apparatus, according to an embodiment of the present inventive concept;

FIG. 14 is a block diagram of a video encoding apparatus based on coding units having a tree structure, according to an embodiment of the present inventive concept;

FIG. 15 is a block diagram of a video decoding apparatus based on coding units having a tree structure, according to an embodiment of the present inventive concept;

FIG. 16 is a diagram of a concept of coding units according to an embodiment of the present inventive concept;

FIG. 17 is a block diagram of an image encoder based on coding units, according to an embodiment of the present inventive concept;

FIG. 18 is a block diagram of an image decoder based on coding units, according to an embodiment of the present inventive concept;

FIG. 19 is a diagram of deeper coding units according to depths, and partitions, according to an embodiment of the present inventive concept;

FIG. 20 is a diagram of a relationship between a coding unit and transformation units, according to an embodiment of the present inventive concept;

FIG. 21 is a diagram of encoding information according to depths corresponding to a coded depth, according to an embodiment of the present inventive concept;

FIG. 22 is a diagram of deeper coding units according to depths, according to an embodiment of the present inventive concept;

FIGS. 23 through 25 are diagrams for describing a relationship between coding units, prediction units, and transformation units, according to an embodiment of the present inventive concept;

FIG. 26 is a diagram for describing a relationship between a coding unit, a prediction unit, and a transformation unit, according to encoding mode information of Table 1;

FIG. 27 is a diagram of a physical structure of a disc in which a program is stored, according to an embodiment of the present inventive concept;

FIG. 28 is a diagram of a disc drive for recording and reading a program by using a disc;

FIG. 29 is a diagram of an overall structure of a content supply system for providing a content distribution service;

FIGS. 30 and 31 are diagrams respectively of an external structure and an internal structure of a mobile phone to which a video encoding method and a video decoding method are applied, according to an embodiment of the present inventive concept;

FIG. 32 is a diagram of a digital broadcast system to which a communication system is applied, according to an embodiment of the present inventive concept; and

FIG. 33 is a diagram of a network structure of a cloud computing system using a video encoding apparatus and a video decoding apparatus, according to an embodiment of the present inventive concept.

BEST MODE

According to one or more exemplary embodiments, a method of prediction-encoding a multiview video includes determining at least one reference picture list selected from a first reference picture list that includes, from among images of the same viewpoint as a current picture, at least one restored image having a reproduction order prior to that of the current picture and at least one restored image having the same reproduction order as the current picture and a view identifier (VID) lower than that of the current picture; and a second reference picture list that includes at least one restored image having the same viewpoint as the current picture and a reproduction order later than that of the current picture and at least one restored image having the same reproduction order as the current picture and a VID higher than that of the current picture; determining at least one reference picture and reference block with respect to a current block of the current picture by using the determined at least one reference picture list; and performing at least one selected from inter-prediction and inter-view prediction on the current block by using the reference block.

The determining of the at least one reference picture list may include determining whether a reference order of reference indexes of the determined at least one reference picture list may be arbitrarily modified in a current slice; and when the reference order may be arbitrarily modified in the current slice, arbitrarily modifying the reference order of the reference indexes of the determined at least one reference picture list for the current slice in the current picture.

According to one or more exemplary embodiments, a method of prediction-decoding a multiview video includes determining at least one reference picture list selected from a first reference picture list that includes, from among images of the same viewpoint as a current picture, at least one restored image having a reproduction order prior to that of the current picture and at least one restored image having the same reproduction order as the current picture and a view identifier (VID) lower than that of the current picture, and a second reference picture list that includes at least one restored image having the same viewpoint as the current picture and a reproduction order later than that of the current picture and at least one restored image having the same reproduction order as the current picture and a VID higher than that of the current picture; determining at least one reference picture and reference block with respect to a current block of the current picture by using the determined at least one reference picture list; and performing at least one selected from motion compensation and disparity compensation on the current block by using the reference block.

The determining of the at least one reference picture list may include determining whether a reference order of reference indexes of the determined at least one reference picture list may be arbitrarily modified in a current slice; and when the reference order may be arbitrarily modified in the current slice, arbitrarily modifying the reference order of the reference indexes of the determined at least one reference picture list for the current slice.

According to one or more exemplary embodiments, an apparatus for prediction-encoding a multiview video includes a reference picture list determination unit determining at least one reference picture list selected from a first reference picture list that includes, from among images of the same viewpoint as a current picture, at least one restored image having a reproduction order prior to that of the current picture and at least one restored image having the same reproduction order as the current picture and a view identifier (VID) lower than that of the current picture; and a second reference picture list that includes at least one restored image having the same viewpoint as the current picture and a reproduction order later than that of the current picture and at least one restored image having the same reproduction order as the current picture and a VID higher than that of the current picture; and a prediction unit determining at least one reference picture and reference block with respect to a current block of the current picture by using the determined at least one reference picture list; and performing at least one selected from inter-prediction and inter-view prediction on the current block by using the reference block.

According to one or more exemplary embodiments, an apparatus for prediction-decoding a multiview video includes a reference picture list determination unit determining at least one reference picture list selected from a first reference picture list that includes, from among images of the same viewpoint as a current picture, at least one restored image having a reproduction order prior to that of the current picture and at least one restored image having the same reproduction order as the current picture and a view identifier (VID) lower than that of the current picture; and a second reference picture list that includes at least one restored image having the same viewpoint as the current picture and a reproduction order later than that of the current picture and at least one restored image having the same reproduction order as the current picture and a VID higher than that of the current picture; and a compensation unit determining at least one reference picture and reference block with respect to a current block of the current picture by using the determined at least one reference picture list; and performing at least one selected from motion compensation and disparity compensation on the current block by using the reference block.

According to one or more exemplary embodiments, a non-transitory computer-readable recording medium having recorded thereon a program, which, when executed by a computer, performs the method of prediction-encoding a multiview video and the method of prediction-decoding a multiview video.

MODE OF THE INVENTIVE CONCEPT

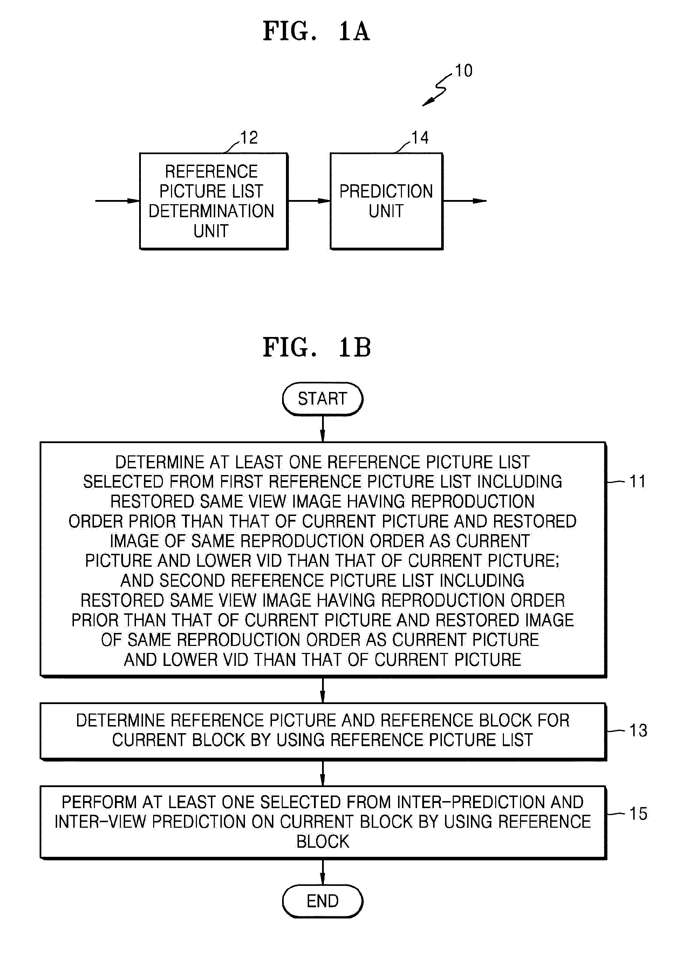

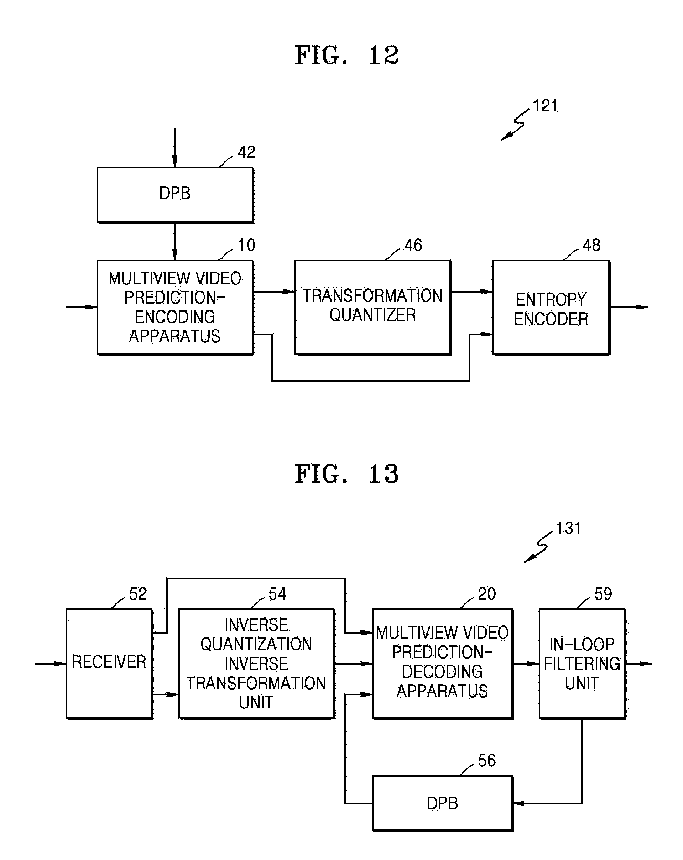

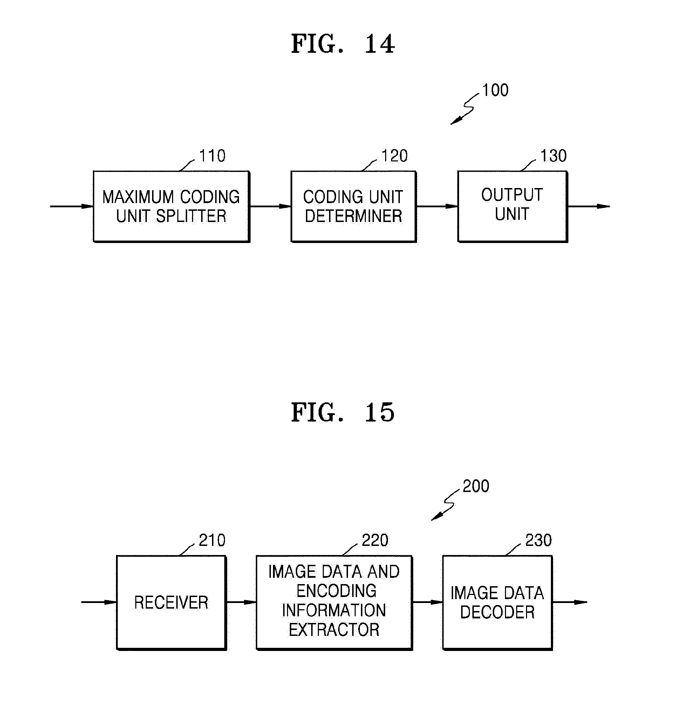

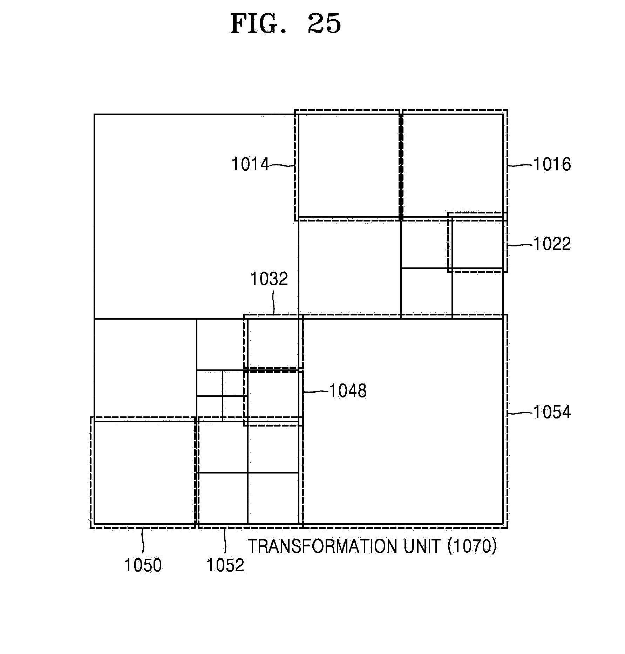

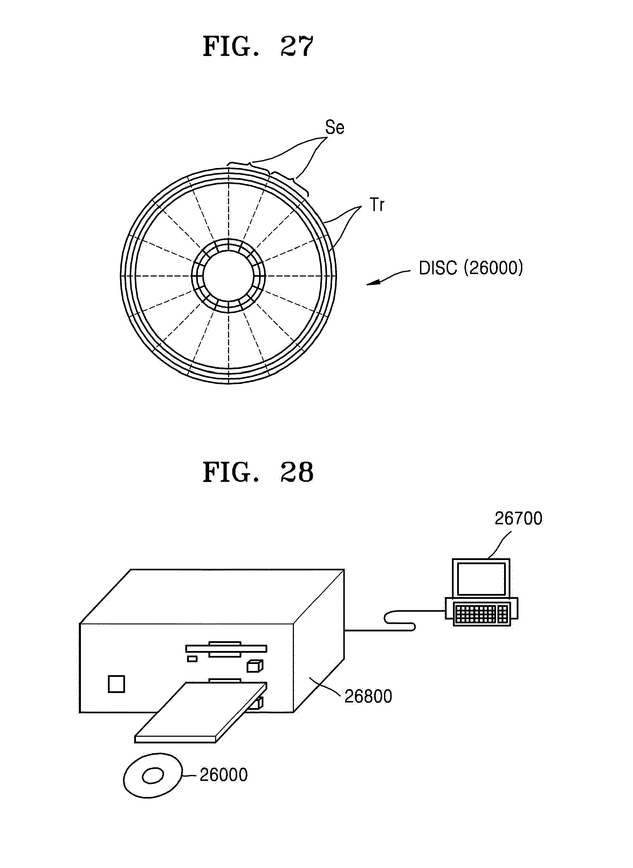

Hereinafter, according to embodiments of the present inventive concept, a multiview video prediction-encoding apparatus, a multiview video prediction-encoding method, a multiview video prediction-decoding apparatus, and a multiview video prediction-decoding method will be described with reference to FIGS. 1A to 11. In addition, a multiview video encoding apparatus including the multiview video prediction-encoding apparatus according to embodiments of the present inventive concept, and a multiview video decoding apparatus including the multiview video prediction-decoding apparatus according to embodiments of the present inventive concept will be described with reference to FIGS. 12 and 13. Furthermore, according to embodiments of the present inventive concept, a multiview video encoding apparatus, a multiview video decoding apparatus, a multiview video encoding method, and a multiview video decoding method which are based on coding units having a tree structure will be described with reference to FIGS. 14 to 26. Lastly, various embodiments to which a multiview video encoding method, a multiview video decoding method, a video encoding method, and a video decoding method are applicable will be described with reference to FIGS. 27 to 33. Hereinafter, an "image" may denote a still image or a moving image of a video, or a video itself

First, according to an embodiment of the present inventive concept, a multiview video prediction-encoding apparatus, a multiview video prediction-encoding method, a multiview video prediction-decoding apparatus, and a multiview video prediction-decoding method will be described with reference to FIGS. 1A to 11.

FIG. 1A is a block diagram of a multiview video prediction-encoding apparatus 10, according to an embodiment of the present inventive concept.

FIG. 1B is a flowchart of a multiview video prediction-encoding method, according to an embodiment of the present inventive concept. Referring to FIG. 1B, operations of the multiview video prediction-encoding apparatus 10 according to an embodiment of the present inventive concept will be described in detail.

The multiview video prediction-encoding apparatus 10 according to an embodiment of the present inventive concept includes a reference picture list determination unit 12 and a prediction unit 14.

The multiview video prediction-encoding apparatus 10 according to an embodiment of the present inventive concept encodes base view images and additional view images. For example, central view images, left view images, and right view images are encoded, in which the central view images may be encoded as base view images, the left view images may be encoded as first additional view images, and the right view images may be encoded as second additional view images. According to viewpoints, data that is generated by encoding images may be output as a separate bitstream.

When there are at least three additional viewpoints, base view images, and first additional view images of a first additional viewpoint to K-th additional view images of a K-th additional viewpoint may be encoded. Accordingly, an encoding result of the base view images may be output as a base view bitstream, and encoding results of the first through K-th additional view images may be respectively output as first through K-th additional viewpoint bitstreams.

For example, the multiview video prediction-encoding apparatus 10 may encode the base view images and thus output a default layer bitstream that includes encoding symbols and samples. Also, the multiview video prediction-encoding apparatus 10 may encode the additional view images and thus output an additional layer bitstream by referring to the encoding symbols and samples that are generated by encoding the base view images.

The multiview video prediction-encoding apparatus 10 according to an embodiment of the present inventive concept may perform encoding according to blocks of each image of a video. A block may have a square shape, a rectangular shape, or an arbitrary geometrical shape, and is not limited to a data unit having a predetermined size. The block according to an embodiment may be a maximum coding unit, a coding unit, a prediction unit, or a transformation unit, among coding units having a tree structure. Video encoding and decoding methods based on the coding units having the tree structure will be described later with reference to FIGS. 14 through 26.

The multiview video prediction-encoding apparatus 10 according to an embodiment of the present inventive concept may perform inter-prediction in which images of a same viewpoint as a current picture (hereinafter, referred to as "same view images") are referred to and thus predicted. By performing inter-prediction, a reference index indicating a reference picture of the current picture, a motion vector indicating motion information of the current picture and the reference picture, and residue data that is a difference component between the current picture and the reference picture may be generated.

Also, the multiview video prediction-encoding apparatus 10 according to an embodiment of the present inventive concept may perform inter-view prediction in which current view images are predicted by referring to images of viewpoints different than a viewpoint of the current picture (hereinafter, referred to as "different view images"). By performing inter-view prediction, a reference index indicating a reference picture for a current picture of a current viewpoint, disparity information between the current picture and a reference picture of a viewpoint different than that of the current picture, and residue data that is a difference component between the current picture and the reference picture of the viewpoint different than that of the current picture may be generated.

On the current view images, the multiview video prediction-encoding apparatus 10 according to an embodiment of the present inventive concept may perform at least one selected from inter-prediction between the same view images and inter-view prediction between the different view images. Inter-prediction and inter-view prediction may be performed based on a data unit, such as a coding unit, a prediction unit, or a transformation unit.

Hereinafter, for convenience of description, operations of the multiview video prediction-encoding apparatus 10 according to an embodiment of the present inventive concept will be described mainly in terms of prediction of images of a single viewpoint. However, the operations of multiview video prediction-encoding apparatus 10 are not performed only on the images of the single viewpoint, but also on images of viewpoints other than the single viewpoint.

Restored images that may be referenced to predict various same view images may be stored in a decoded picture buffer (DPB) according to viewpoints. However, a reference picture list for inter-prediction and/or inter-view prediction of the current picture may be determined by using some or all of restored images stored in a DPB for the current picture.

In order to perform inter-prediction on the current picture, the multiview video prediction-encoding apparatus 10 according to an embodiment of the present inventive concept may refer to an image that is restored before the current picture from among the same view images. A number indicating a reproduction order, i.e., a picture order count (POC) may be assigned to each image. Even when a POC lower than a POC of the current picture is assigned to an image, if the image is restored before the current picture, inter-prediction may be performed on the current picture by referring to the restored image.

By performing inter-prediction, the multiview video prediction-encoding apparatus 10 according to an embodiment of the present inventive concept may generate a motion vector indicating a location difference between blocks corresponding to the different view images.

In order to perform inter-view prediction on the current picture, the multiview video prediction-encoding apparatus 10 according to an embodiment of the present inventive concept may refer to an image that is restored before the current picture from among different view images having a same reproduction order as the current picture. A view identifier (VID) may be assigned to each viewpoint so as to distinguish viewpoints from one another. For example, a VID may be decreased if a viewpoint deviates leftward from a current viewpoint, and a VID may be increased if a viewpoint deviates rightward from the current viewpoint. Inter-view prediction may be performed on the current picture by referring to images that are restored first among the different view images having the same reproduction order as the current picture.

The multiview video prediction-encoding apparatus 10 according to an embodiment of the present inventive concept may generate disparity information between multiview images via inter-view prediction. The multiview video prediction-encoding apparatus 10 may generate a depth map indicating an inter-view disparity vector or an inter-view depth as disparity information between the different view images that correspond to the same scene, i.e., the same reproduction order.

In operation 11, in order to determine a reference picture of the current picture for performing at least one selected from inter-prediction and inter-view prediction, the reference picture list determination unit 12 according to an embodiment of the present inventive concept may determine a reference picture list that stores candidate images that may be a reference picture. From among the restored images stored in the DPB, a reference picture list of the current picture may store information regarding an order of restored images, which may be referenced by the current picture.

The reference picture list determination unit 12 according to an embodiment of the present inventive concept may generate one or two reference picture lists depending on a prediction mode. When the current picture is a P slice type image in which only forward prediction is permitted, or is a B slice type image in which only bi-directional prediction is permitted, the reference picture list determination unit 12 may generate an L0 list as a first reference picture list.

In operation 11, the reference picture list determination unit 12 according to an embodiment of the present inventive concept may determine an L0 list that includes at least one restored image of a reproduction order prior to that of the current picture and at least one restored image of the same reproduction order as the current picture and a VID lower than that of the current picture, from among the same view images.

Also, in operation 11, when the current picture is a B slice type image, the reference picture list determination unit 12 according to an embodiment of the present inventive concept may additionally generate an L1 list as a second reference picture list. The reference picture list determination unit 12 according to an embodiment of the present inventive concept may determine an L1 list that includes at least one restored image having a reproduction order later than that of the current picture and at least one restored image having the same reproduction order as the current picture and a VID higher than that of the current picture.

Although the L0 list may primarily include a restored image having a reproduction order prior to that of the current picture from among the same view images, but may also include a restored image having a later reproduction order. Likewise, the L0 list may primarily include a restored image having a VID lower than that of the current picture from among the different view images having the same reproduction order as the current picture, and also include a restored image having a higher VID.

Similarly, the L1 list may primarily include a restored image having a reproduction order later than that of the restored image from among the same view images, and also include a restored image having a prior reproduction order.

Likewise, the L1 list may primarily include a restored image having a VID higher than that of the current picture from among the different view images having the same reproduction order as the current picture, and also include a restored image having a lower VID.

Accordingly, the reference picture list determination unit 12 according to an embodiment of the present inventive concept may determine at least one selected from the L0 list and the L1 list as a reference picture list of the current picture for at least one selected from inter-prediction and inter-view prediction.

In operation 13, the prediction unit 14 according to an embodiment of the present inventive concept may determine at least one reference picture and a reference block for a current block of the current picture by using at least one reference picture list determined by the reference picture list determination unit 12. In operation 15, the prediction unit 14 according to an embodiment of the present inventive concept may perform at least one selected from inter-prediction and inter-view prediction on the current block by using the reference block determined in operation 13.

Also, the reference picture list determination unit 12 according to an embodiment of the present inventive concept may determine whether a reference order of reference indexes of a determined at least one reference picture list may be arbitrarily modified in a current picture.

When the reference order may be arbitrarily modified in the current picture the reference picture list determination unit 12 may modify the reference order of the reference indexes of the determined at least one reference picture list for a current slice in the current picture.

Also, regarding the current picture, the reference picture list determination unit 12 according to an embodiment of the present inventive concept may determine a first default number of at least one restored image having a reproduction order prior to that of the current picture and a second default number of at least one restored image having a VID lower than that of the current picture, from the first reference picture list. Also, regarding the current picture, the reference picture list determination unit 12 may determine a third default number of at least one restored image having a reproduction order later than that of the current picture and a fourth default number of at least one restored image having a VID higher than that of the current picture, from the second reference picture list.

In the current slice, the reference picture list determination unit 12 according to an embodiment of the present inventive concept may determine whether or not at least one selected from the first and second default numbers of the first reference picture list and the third and fourth default numbers of the second reference picture list, which are determined with respect to the current picture, may be individually replaced.

When default numbers of restored images of each reference picture list may be individually replaced, the reference picture list determination unit 12 according to an embodiment of the present inventive concept may determine at least one selected from a number of restored images of the first reference picture list and a number of restored images of the second reference picture list which are independently applicable in the current slice.

In other words, in the current slice, when the default numbers of the restored images of each reference picture list may be individually replaced, the reference picture list determination unit 12 according to an embodiment of the present inventive concept may replace a number of restored images in the first reference picture list, which have the same viewpoint as the current picture but a reproduction order prior to that of the current picture, with a first active number that is independently applied to the current slice, instead of the first default number that is commonly applied to the current picture.

Likewise, the reference picture list determination unit 12 according to an embodiment of the present inventive concept may replace a number of at least one restored image in the first reference picture list, which have the same reproduction order as the current picture and a VID lower than that of the current picture, with a second active number that is independently applied to the current slice, instead of the second default number that is commonly applied to the current picture.

Likewise, the reference picture list determination unit 12 according to an embodiment of the present inventive concept may replace a number of at least one restored image in the second reference picture list, which have the same viewpoint as the current picture but a reproduction order later than that of the current picture, with a third active number that is independently applied to the current slice, instead of the third default number that is commonly applied to the current picture.

Likewise, the reference picture list determination unit 12 according to an embodiment of the present inventive concept may replace a number of at least one restored image in the second reference picture list, which have the same reproduction order as the current picture but a VID higher than that of the current picture, with a fourth active number that is independently applied to the current slice, instead of the fourth default number that is commonly applied to the current picture.

A maximum number of reference indexes included in the first reference picture list according to an embodiment of the present inventive concept may be a total sum of the first default number of the at least one restored image having the reproduction order prior to that of the current picture, and the second default number of the at least one restored image having a VID lower than that of the current picture, in the first reference picture list.

A maximum number of reference indexes included in the second reference picture list according to an embodiment of the present inventive concept may be a total sum of the third default number of the at least one restored image having the reproduction order later than that of the current picture, and the fourth default number of the at least one restored image in the second reference picture list having the VID higher than that of the current picture, in the second reference picture list.

According to a reference order based on at least one selected from the L0 list and the L1 list determined by the reference picture list determination unit 12, the prediction unit 14 according to an embodiment of the present inventive concept may compare the current picture and the restored images stored in the DPB, and thus determine a reference picture that is used to predict the current picture. Also, the reference picture list determination unit 12 may determine a reference block by detecting a block in the reference picture which is most similar to the current block.

The prediction unit 14 according to an embodiment of the present inventive concept may determine a reference index that indicates the determined reference picture, and a location difference between the current block and the reference block as a motion vector or a disparity vector. A difference value of each pixel of the current block and the reference block may be determined as residue data.

When the prediction unit 14 according to an embodiment of the present inventive concept performs inter-prediction, a reference picture and a reference block may be determined from at least one selected from the at least one selected from the at least one restored image in the first reference picture list having the reproduction order prior to that of the current picture and the at least one restored image in the second reference picture list having the reproduction order later than that of the current picture. First residue data between the reference block determined by performing inter-prediction on the current block and the current block, a first motion vector indicating the reference block, and a first reference index indicating the reference picture may be generated as inter-prediction result data.

When the prediction unit 14 according to an embodiment of the present inventive concept performs inter-view prediction, a reference picture and a reference block may be determined from at least one selected from the at least one restored image in the first reference picture list having the VID lower than that of the current picture and the at least one restored image in the second reference picture list having the VID higher than that of the current picture. Second residue data between the reference block determined by performing inter-view prediction on the current block and the current block, a second disparity vector indicating the reference block, and a second reference index indicating the reference picture may be generated as inter-view prediction result data.

The multiview video prediction-encoding apparatus 10 according to an embodiment of the present inventive concept may include a central processor (not shown) that controls the reference picture list determination unit 12 and the prediction unit 14 in general. Alternatively, the reference picture list determination unit 12 and the prediction unit 14 may operate by self-processors included therein (not shown), and the self-processors may mutually organically operate such that the multiview video prediction-encoding apparatus 10 operates in general. Alternatively, the reference picture list determination unit 12 and the prediction unit 14 may be controlled by an external processor (not shown) of the multiview video prediction-encoding apparatus 10 according to an embodiment of the present inventive concept.

The multiview video prediction-encoding apparatus 10 according to an embodiment of the present inventive concept may include at least one data storage unit (not shown) which stores input and output data of the reference picture list determination unit 12 and the prediction unit 14. The multiview video prediction-encoding apparatus 10 may include a memory controller (not shown) that controls data input to/output from the data storage unit.

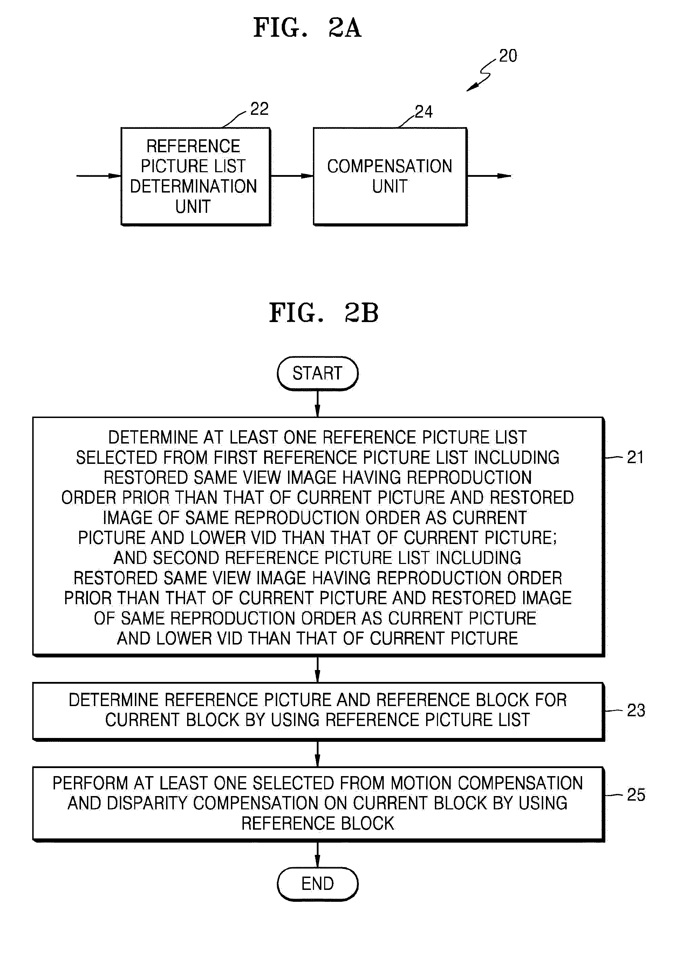

A multiview decoding apparatus and a multiview video decoding method of restoring a multiview video bitstream that is prediction-encoded according to the embodiments described above with reference to FIGS. 1A and 1B will be described below with reference to FIGS. 2A and 2B.

FIG. 2A is a block diagram of a multiview video prediction-decoding apparatus 20, according to an embodiment of the present inventive concept. FIG. 2B is a flowchart of a multiview video prediction-decoding method, according to an embodiment of the present inventive concept.

The multiview video prediction-decoding apparatus 20 according to an embodiment of the present inventive concept includes a reference picture list determination unit 22 and a compensation unit 24.

The multiview video prediction-decoding apparatus 20 according to an embodiment of the present inventive concept may receive a bitstream in which images of a plurality of viewpoints are encoded according to each viewpoint. A bitstream that stores encoded data of base view images and a bitstream that stores encoded data of additional view images may be received separately.

For example, the multiview video prediction-decoding apparatus 20 may restore the base view images by decoding a default layer bitstream. Also, the multiview video prediction-decoding apparatus 20 may selectively decode an additional layer bitstream. The additional layer bitstream may be decoded with reference to encoding symbols and samples that are restored from the default layer bitstream, and thus the additional view images may be restored. Since the additional layer bitstream is selectively decoded, only videos of desirable viewpoints may be restored from the multiview video.

For example, the multiview video prediction-decoding apparatus 20 according to an embodiment of the present inventive concept may restore central view images by decoding a base view bitstream, restore left view images by decoding a first additional viewpoint bitstream, and restore right view images by decoding a second additional viewpoint bitstream.

When there are at least three additional viewpoints, first additional view images of a first additional viewpoint may be restored from a first additional viewpoint bitstream, second additional view images of a second additional viewpoint may be restored from a second additional viewpoint bitstream, and K-th additional view images of a K-th additional viewpoint may be restored from a K-th additional viewpoint bitstream.

The multiview video prediction-decoding apparatus 20 according to an embodiment of the present inventive concept may decode according to blocks of each image of a video. A block according to an embodiment of the present inventive concept may be a maximum coding unit, a coding unit, a prediction unit, or a transformation unit, from among coding units having a tree structure.

The multiview video prediction-decoding apparatus 20 according to an embodiment of the present inventive concept may receive a motion vector generated via inter-prediction and disparity information generated via inter-view prediction, along with a bitstream that includes encoded data of images encoded according to viewpoints.

The multiview decoding apparatus 20 according to an embodiment of the present inventive concept may restore images by performing motion compensation that mutually references images predicted via inter-prediction of the same viewpoint as the current picture. Motion compensation is an operation of reconstructing a restored image of a current picture by synthesizing a reference picture determined by using a motion vector of the current picture and residue data of the current picture.

Also, the multiview video prediction-decoding apparatus 20 according to an embodiment of the present inventive concept may perform disparity compensation which references the different view images so as to restore an additional view image predicted via inter-view prediction. Disparity compensation is an operation of reconstructing a restored image of a current picture by synthesizing a reference picture of a different viewpoint, which is determined by using disparity information of the current picture, and residue data of the current picture. The multiview video prediction-decoding apparatus 20 according to an embodiment of the present inventive concept may perform disparity compensation for restoring current view images predicted by referring to the different view images.

According to an embodiment of the present inventive concept, restoration may be performed via inter-motion compensation and inter-view disparity compensation, based on a coding unit or a prediction unit.

In order to decode a bitstream according to viewpoints, the compensation unit 24 according to an embodiment of the present inventive concept may restore the current view images via inter-view prediction in which the different view images restored from a different view bitstream are referenced and inter-prediction in which the same view images are referenced.

The compensation unit 24 according to an embodiment of the present inventive concept may restore the current view images via inter-view disparity compensation in which restored images having the same reproduction order as the current picture from among the restored different view images are referenced. According to embodiments, the current view images may be restored via inter-view disparity compensation in which images of at least two different viewpoints are referenced. The reference picture list determination unit 22 may determine a reference picture list so that the compensation unit 24 accurately determines a reference picture for performing motion compensation or disparity compensation on the current picture.

Hereinafter, a method of determining a reference picture list for inter-prediction and inter-view prediction and performing at least one selected from inter-prediction and inter-view prediction by using the reference picture list method will be described with reference to FIG. 2B.

In operation 21, the reference picture list determination unit 22 according to an embodiment of the present inventive concept may determine an L0 list for forward prediction and bi-directional prediction and an L1 list for bi-directional prediction.

The reference picture list determination unit 22 according to an embodiment of the present inventive concept may determine a first reference picture list, i.e., the L0 list, which includes at least one restored image having a reproduction order prior to that of the current picture and at least one reproduction image having the same reproduction order as the current picture and a VID lower than that of the current picture, from among the same view images.

The reference picture list determination unit 22 according to an embodiment of the present inventive concept may determine a second reference picture list, i.e., the L1 list, which includes at least one restored image having a reproduction order later than that of the current picture and at least one restored image having the same reproduction order as the current picture and a VID higher than that of the current picture.

Although the L0 list may primarily include a restored image having a reproduction order prior to that of the current picture from among the same view images but may also include a restored image having a later reproduction order when there is a remaining active reference index. Likewise, the L0 list may primarily include a restored image having a VID lower than that of the current picture from among different view images having the same reproduction order as the current picture, but may also include a restored image having a higher VID when there is a remaining active reference index.

Similarly, the L1 list may primarily include a restored image having a reproduction order later than that of the current picture from among the same view images, and also include a restored image having a prior reproduction order when there is a remaining active reference index. Likewise, the L1 list may primarily include a restored image having a VID higher than that of the current picture from among the different view images having the same reproduction order as the current picture, and also include a restored image having a lower VID when there is a remaining active reference index.

The multiview video prediction-decoding apparatus 20 may store a restored image in a DPB. A reference picture list stores information regarding an order for performing motion compensation or disparity compensation on the current picture, which is referenced by restored images stored in the DPB.

In operation 23, the compensation unit 24 according to an embodiment of the present inventive concept may determine at least one reference picture and a reference picture for a current block of the current picture by using at least one reference picture list determined by the reference picture list determination unit 22.

In operation 25, with respect to a current bitstream, the compensation unit 24 according to an embodiment of the present inventive concept may restore a current picture of a current viewpoint by performing at least one selected from disparity compensation in which restored different view images having the same reproduction order as the current picture are referenced and motion compensation in which restored same view images are referenced.

In detail, the multiview video prediction-decoding apparatus 20 according to an embodiment of the present inventive concept may obtain a reference index, disparity information, and residue data for inter-view prediction by parsing a current bitstream. The compensation unit 24 according to an embodiment of the present inventive concept may determine a reference picture from the different view images by using a reference index, and determine a reference block in the reference picture by using disparity information. Also, the current picture may be restored by compensating the reference block for residue data.

Also, the compensation unit 24 according to an embodiment of the present inventive concept may restore the current picture by performing motion compensation in which the restored same view images are referenced.

In detail, the multiview video prediction-decoding apparatus 20 may obtain a reference index, a motion vector, and residue data for performing motion compensation on the current picture by parsing a bitstream. The compensation unit 24 may determine a reference picture from the restored same view images by using a reference index, determine a reference block from the reference picture by using a motion vector, and thus restore the current picture by compensating the reference block for residue data.

The reference picture list determination unit 22 according to an embodiment of the present inventive concept may determine whether a reference order of reference indexes of at least one reference picture list may be arbitrarily modified in a current picture. Since a reference index of a reference picture list indicates a reference order of restored images corresponding to the reference index, when the reference index is modified, the reference order of the restored images corresponding to the reference index may be modified.

According to an embodiment of the present inventive concept, when the reference order of the reference picture list may be arbitrarily modified in the current picture, the reference picture list determination unit 22 according to an embodiment of the present inventive concept may arbitrarily modify a reference order of reference indexes of at least one reference picture list for a current slice in the current picture.

Also, regarding the current picture, the reference picture list determination unit 22 according to an embodiment of the present inventive concept may determine a first default number of at least one restored image in a first reference picture list having a reproduction order prior to that of the current picture, a second default number of at least one restored image in the first reference picture list having a VID lower than that of the current picture, a third default number of at least one restored image in a second reference picture list having a reproduction order later than that of the current picture, and a fourth default number of at least one restored image in the second reference picture list having a VID higher than that of the current picture.

In the current slice, the reference picture list determination unit 22 according to an embodiment of the present inventive concept may individually replace at least one selected from the first and second default numbers of the first reference picture list and the third and fourth default numbers of the second reference picture list, which are determined with respect to the current picture.

In other words, in the current slice, when the default numbers of the restored images of each reference picture list may be independently replaced, the reference picture list determination unit 22 according to an embodiment of the present inventive concept may replace a number of restored images in the first reference picture list, which have the same viewpoint as the current picture but a reproduction order prior to that of the current picture, with a first active number that is independently applied to the current slice, instead of the first default number that is commonly applied to the current picture.

Likewise, the reference picture list determination unit 22 according to an embodiment of the present inventive concept may replace a number of at least one restored image in the first reference picture list, which have the same reproduction order as the current picture and a VID lower than that of the current picture, with a second active number that is independently applied to the current slice, instead of the second default number that is commonly applied to the current picture.

Likewise, the reference picture list determination unit 22 according to an embodiment of the present inventive concept may replace a number of at least one restored image in the second reference picture list, which have the same viewpoint as the current picture but a reproduction order later than that of the current picture, with a third active number that is independently applied to the current slice, instead of the third default number that is commonly applied to the current picture.

Likewise, the reference picture list determination unit 22 according to an embodiment of the present inventive concept may replace a number of at least one restored image in the second reference picture list, which have the same reproduction order as the current picture but a VID higher than that of the current picture, with a fourth active number that is independently applied to the current slice, instead of the fourth default number that is commonly applied to the current picture.

The maximum number of reference indexes in the first reference picture list according to an embodiment of the present inventive concept may be a total sum of the first default number of the at least one restored image in the first reference picture list having a reproduction order prior to that of the current picture, and the second default number of the at least one restored image having a VID lower than that of the current picture.

The maximum number of reference indexes included in the second reference picture list according to an embodiment of the present inventive concept may be a total sum of the third default number of the at least one restored image in the second reference picture list having a reproduction order later than that of the current picture, and the fourth default number of the at least one restored image in the second reference picture list having a VID higher than that of the current picture

The compensation unit 24 may perform at least one selected from motion compensation and disparity compensation by using the determined reference picture list. The reference picture list according to an embodiment of the present inventive concept may store information regarding restored images for inter-prediction and restored images for inter-view prediction. Therefore, at least one selected from motion compensation and disparity compensation may be performed by using a single reference picture list.

The multiview video prediction-decoding apparatus 20 according to an embodiment of the present inventive concept may receive a reference index, residue data and a motion vector or a disparity vector for the current block of the current picture. Depending on whether the received reference index indicates a restored same view image or a different view image having the same POC as the current picture in the reference picture list, a received vector may be a motion vector or a disparity vector.

Therefore, the compensation unit 24 according to an embodiment of the present inventive concept may determine a reference picture which is indicated by a reference index from among the reference picture list; when the determined reference picture is a restored same view image, determine a reference block in the restored image that is indicated by a motion vector; compensate the reference block for residue data; and thus, restore the current block.

Also, the compensation unit 24 according to an embodiment of the present inventive concept may determine a reference picture that is indicated by a reference index from among the reference picture list; when the determined reference picture is a restored different view image, may determine a reference block in the restored image that is indicated by a disparity vector; compensate the reference block for residue data; and thus, restore the current block.

Like the above-described process of restoring the current view images from the current view bitstream, second view images may be restored from a second view bitstream.

The multiview video prediction-decoding apparatus 20 according to an embodiment of the present inventive concept may include a central processor (not shown) that controls the reference picture list determination unit 22 and the compensation unit 24 in general. Alternatively, the reference picture list determination unit 22 and the compensation unit 24 may operate by self-processors included therein (not shown), and the self-processors may mutually organically operate such that the multiview video prediction-decoding apparatus 20 operates in general. Alternatively, the reference picture list determination unit 22 and the compensation unit 24 may be controlled by an external processor (not shown) of the multiview video prediction-decoding apparatus 20 according to an embodiment of the present inventive concept.

The multiview video prediction-decoding apparatus 20 according to an embodiment of the present inventive concept may include at least one data storage unit (not shown) which stores input and output data of the reference picture list determination unit 22 and the compensation unit 24. The multiview video prediction-decoding apparatus 20 may include a memory controller (not shown) that controls data input to/output from the data storage unit.

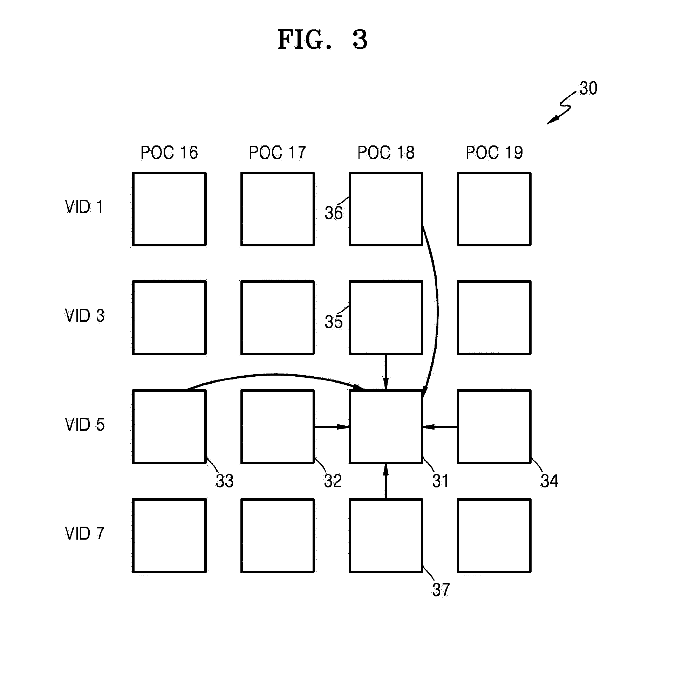

Hereinafter, an example of three restoration blocks for inter-prediction and three restoration blocks for inter-view prediction in a reference picture list will be described with reference to FIGS. 3, 4, 5A, and 5B.

FIG. 3 is a diagram of reference objects for performing inter-prediction and inter-view prediction on a current picture 31, according to an embodiment of the present inventive concept.

For example, images 30 of four viewpoints are encoded, and a reference picture list for inter-prediction of the current picture 31, which has a reproduction order number POC 18 and a VID VID 5, is determined from among the images 30. Also, for inter-prediction, it is supposed that the current picture 31 may refer to three images 32, 33, and 34 from among images of the VID VID 5, which have been restored prior to the current picture 31. Also, for inter-view prediction, it is supposed that the current picture 31 may refer to three images 35, 36, and 37 from among different view images having a reproduction order number POC 18, which have been restored prior to the current picture 31.

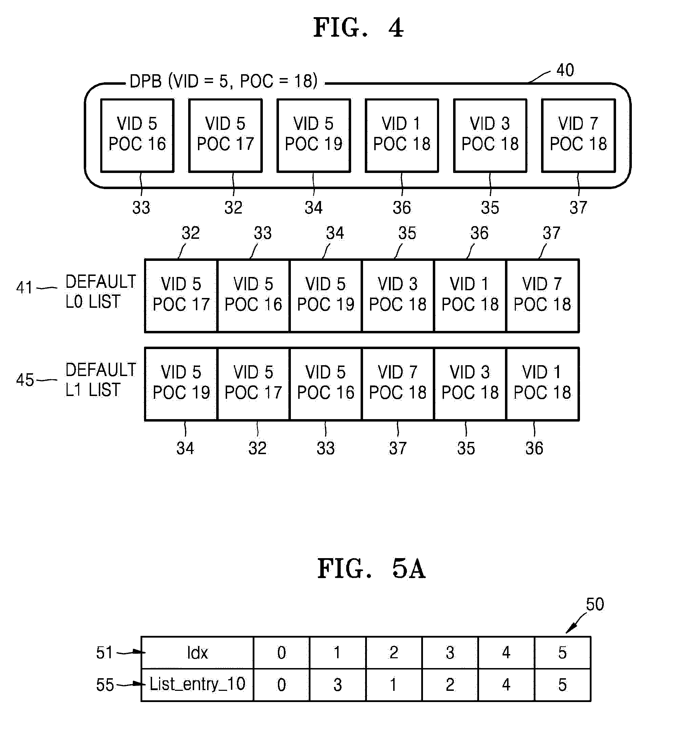

FIG. 4 is an exemplary view of a reference picture list that is configured based on the reference objects of FIG. 3, according to an embodiment of the present inventive concept.

In relation to FIG. 3, restored images 32, 33, 34, 35, 36, and 37, which may be referred to by the current picture 31 for prediction, may be stored in a DPB DPB 40 for the current picture 31.

In a default L0 list 41 according to an embodiment of the present inventive concept, reference orders are primarily assigned to restored images for forward prediction from among types of inter-prediction, and prior reference orders may be assigned to restored images that are closer to a current picture. Reference orders assigned to restored images for inter-prediction may be prior to those assigned to restored images for inter-view prediction. Between images restored according to viewpoints for inter-view prediction, reference orders assigned to restored images having a VID lower than that of the current viewpoint may be prior to those assigned to restored images having a higher VID.

Also, in a default L1 list 45 according to an embodiment of the present inventive concept, prior reference orders may be assigned to restored images that are closer to a current picture, as in the default L0 list 41. Reference orders assigned to restored images for inter-prediction may be prior to those assigned to restored images for inter-view prediction. However, in the default L1 list 45, reference orders are primarily assigned to restored images for backward prediction from among types of inter-prediction. Also, between images restored according to viewpoints for inter-view prediction, reference orders assigned to restored images having a VID higher than that of the current viewpoint may be prior to those assigned to restored images having a lower VID.

For convenience of description, an image having a VID A and a reproduction order number B is referred to as a "VID A/POC B image".

Therefore, according to a reference order, restored images in the default L0 list 41 may be referred to as a same viewpoint VID 5/POC 17 image 32, a VID 5/POC 16 image 33, a VID 5/POC 19 image 34, a VID 3/POC 18 image 35, a VID 1/POC 18 image 36, and a VID 7/POC 18 image 37.

Also, according to a reference order, restored images in the default L1 list 45 may be referred to as a VID 5/POC 19 image 34, a VID 5/POC 17 image 32, a VID 5/POC 16 image 33, a VID 7/POC 18 image 37, a VID 3/POC 18 image 35, and a VID 1/POC 18 image 36.

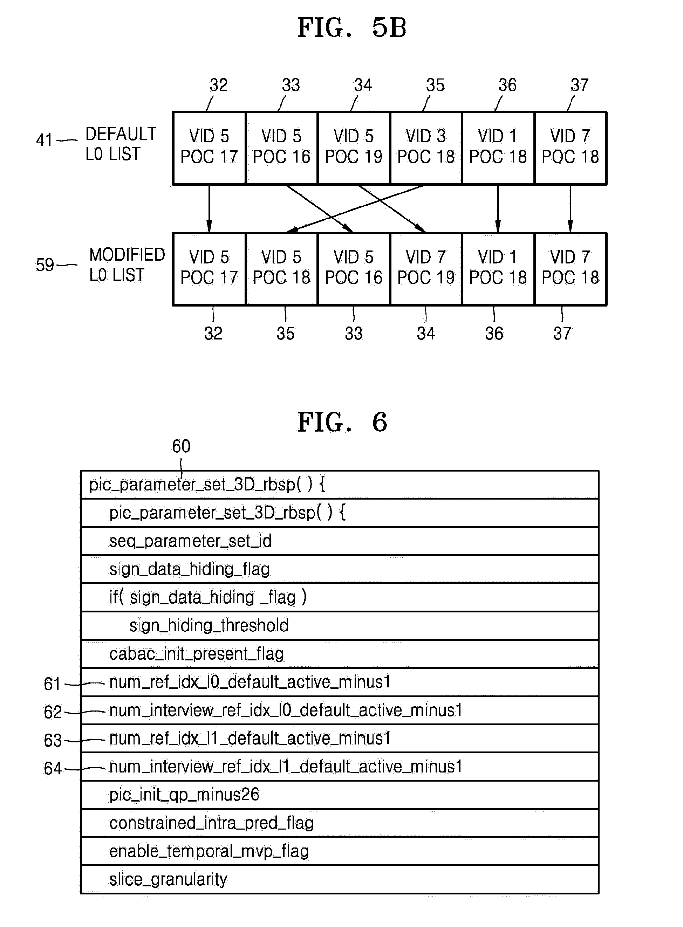

FIGS. 5A and 5B are diagrams of a process of modifying an L0 list, according to an embodiment of the present inventive concept.

In a reference index table 50 according to an embodiment of the present inventive concept, a reference index Idx 51 generally indicates a default order of restored images in a reference picture list. In general, a reference index of a reference picture list may indicate a reference order. Therefore, restored images that correspond to reference indexes may be referred to in an order of the reference indexes.

However, by arbitrarily modifying a reference order, a reference order indicated by a reference index at a current slice may be temporarily modified. A modified index List_entry_I0 55 in the reference index table 50 according to an embodiment of the present inventive concept may be defined to arbitrarily modify a reference order of a current picture, which is determined in the default L0 list 41.

In this case, "Idx 0, 1, 2, 3, 4, and 5" in the default L0 list 41 respectively indicate the VID 5/POC 17 image 32, the VID 5/POC 16 image 33, the VID 5/POC 19 image 34, the VID 3/POC 18 image 35, the VID 1/POC 18 image 36, and the VID 7/POC 18 image 37.

In other words, since the reference order is changed to "Idx 0, 3, 1, 2, 4, and 5" according to the modified index List_entry_I0 55, according to a reference order, restored images in a modified L0 list 59 may be changed to the VID 5/POC 17 image 32, the VID 3/POC 18 image 35, the VID 5/POC 16 image 33, the VID 5/POC 19 image 34, the VID 1/POC 18 image 36, and the VID 7/POC 18 image 37.

Therefore, in the default L0 list 41, after the VID 5/POC 17 image 32, which is a restored image, is referenced first for inter-prediction, subsequently, the VID 5/POC 16 image 33 may be referenced for inter-prediction. After the restored same view images for inter-prediction have been all referenced, restored different view images for inter-view prediction may be referenced.

However, in the modified L0 list 59 that is modified according to the modified index List-entry_I0 55 according to an embodiment of the present inventive concept, after the VID 5/POC 17 image 32, which is a restored same view image, is referenced first for inter-prediction, subsequently, the VID 5/POC 17 image 32, which is a restored different view image that may be referenced first for inter-view prediction, may be referenced.

Although an example in which the L0 list 41 for prediction-encoding of a current picture includes three same view restored images 32, 33, and 34 and three different view restored images 35, 36, and 37 is described above, the number of restored images included in a reference picture list according to an embodiment of the present inventive concept is not limited thereto.

FIG. 6 is a diagram of a syntax of a picture parameter set 60, according to an embodiment of the present inventive concept.

The multiview video prediction-encoding apparatus 10 according to an embodiment of the present inventive concept may generate the picture parameter set 60 that includes information regarding a default setting that is commonly applied in a current picture. In particular, regarding a reference picture list, information regarding a default number of restored images respectively included in an L0 list and an L1 list, which are used for at least one selected from inter-prediction and inter-view prediction, by each prediction block in the current picture may be included in the picture parameter set 60.

For example, 'num_ref_idx_l0_default_active_minus1' 61 indicates a default number of active restored images in the L0 list which have the same viewpoint as the current picture and reproduction orders prior to a reproduction order of the current picture. 'num_interview_ref_idx_l0_default_active_minus1' 62 indicates a default number of active restored images in the L0 list which have the same reproduction orders as the current picture and VIDs lower than a VID of a current viewpoint. 'num_ref_idx_l1_default_active_minus1' 63 indicates a default number of active restored images in the L1 list which have the same viewpoint as the current picture and reproduction orders later than the reproduction order of the current picture. 'num_interview_ref_idx_l1_default_active_minus1' 64 indicates a default number of active restored images in the L1 list which have the same reproduction orders as the current picture and VIDs that are higher than the VID of the current viewpoint.

The multiview video prediction-decoding apparatus 20 according to an embodiment of the present inventive concept may extract the picture parameter set 60 from a received bitstream. The multiview video prediction-decoding apparatus 20 may parse 'num_ref_idx_l0_default_active_minus1' 61 from the picture parameter set 60, and read the default number of the active restored images in the L0 list which have the same viewpoint as the current picture and reproduction orders prior to a reproduction order of the current picture. The multiview video prediction-decoding apparatus 20 according to an embodiment of the present inventive concept may parse 'num_interview_ref_idx_l0_default_active_minus1' 62, and read the default number of the active restored images in the L0 list which have the same reproduction orders as the current picture and VIDs lower than a VID of a current viewpoint. The multiview video prediction-decoding apparatus 20 according to an embodiment of the present inventive concept may parse 'num_ref_idx_l1_default_active_minus1' 63, and read the default number of active restored images in the L1 list which have the same viewpoint as the current picture and reproduction orders later than the reproduction order of the current picture. The multiview video prediction-decoding apparatus 20 according to an embodiment of the present inventive concept may parse 'num_interview_ref_idx_l1_default_active_minus1' 64, and read the default number of active restored images in the L1 list which have the same reproduction orders as the current picture and VIDs that are higher than the VID of the current viewpoint.

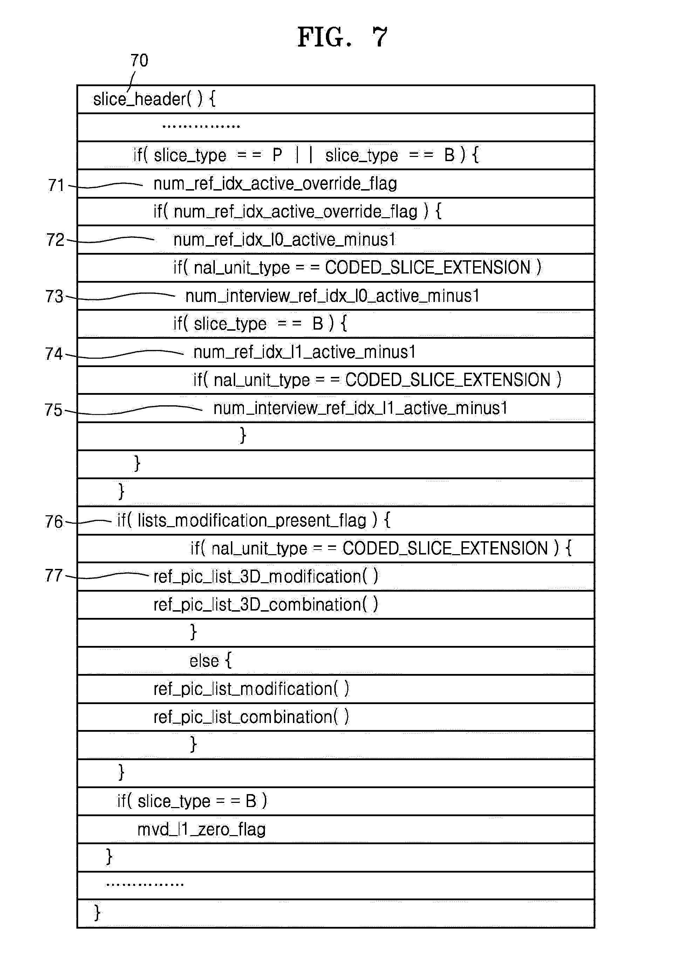

FIG. 7 is a diagram of a syntax of a slice header 70, according to an embodiment of the present inventive concept.

The multiview video prediction-encoding apparatus 10 according to an embodiment of the present inventive concept may generate the slice header 70 that includes information regarding a setting that is commonly applied in a current slice. In particular, with regard to the reference picture list, information that is arbitrarily modified in the current slice instead of a default setting determined in a current picture may be included in the slice header 70.

When the current slice is in a forward prediction mode or a bi-directional prediction mode as a P slice or B slice type, the slice header 70 may include 'num_ref_idx_active_override_flag' 71. The 'num_ref_idx_active_override_flag' 71 indicates whether or not at least one selected from a default number of restored images in the 'num_ref_idx_l0_default_active_minus1' 61, the 'num_interview_ref_idx_l0_default_active_minus1' 62, the 'num_ref_idx_l1_default_active_minus1' 63, and the 'num_interview_ref_idx_l1_default_active_minus1' 64 determined in a current picture parameter set 60 may be replaced with other values in the current slice.

If the default number of the restored images may be replaced with other values in the current slice by using 'num_ref_idx_active_override_flag' 71, the slice header 70 may first include 'num_ref_idx_l0_active_minus1' 72 which indicates a number of active restored images for inter-prediction in the L0 list. Also, when encoding/decoding of a 3-dimensional (3D) video in connection with a current network abstraction layer (NAL) unit, slice header 70 may also include a number of active restored images for inter-view prediction in the L0 list, i.e., 'num_interview_ref_idx_l0_active_minus1' 73.

Also, when the default number of the restored images may be replaced with other values in the current slice by using the 'num_ref_idx_active_override_flag' 71 and the current slice is a B slice type, the slice header 70 may include 'num_ref_idx_l1_active_minus1' 74 which indicates a number of active restored images for inter-prediction in the L1 list. Also, when it is possible to encode/decode the 3D video in connection with the current NAL unit, the slice header 70 may include 'num_interview_ref_idx_l1_active_minus1' 75 which indicates a number of active restored images for inter-view prediction in the L1 list.

The multiview video prediction-decoding apparatus 20 according to an embodiment of the present inventive concept may extract the slice header 70 from a received bitstream. When the current slice is in a forward prediction mode or a bi-directional prediction mode as a P slice or B slice type, the multiview video prediction-decoding apparatus 20 may parse the 'num_ref_idx_active_override_flag' 71 from the slice header 70, and read whether or not the default number of the restored images in the reference picture list determined in the current picture may be replaced with other values in the current slice.

When the default number of the restored images of the reference picture list, the multiview video prediction-decoding apparatus 20 may parse the 'num_ref_idx_I0_active_minus1' 72 from the slice header 70, and read the number of active restored images for inter-prediction in the L0 list. Also, when it is possible to encode/decode the 3D video in connection with the current NAL unit, the multiview video prediction-decoding apparatus 20 may parse the 'num_interview_ref_idx_I0_active_minus1' 73 from the slice header 70, and read the number of active restored images for inter-view prediction in the L0 list.

When the default number of the restored images may be replaced with other values in the current slice by using the 'num_ref_idx_active_override_flag' 71 and the current slice is a B slice type, the multiview video prediction-decoding apparatus 20 may parse the 'num_ref_idx_I1_active_minus1' 74 from the slice header 70, and read the number of active restored images for inter-prediction in the L1 list. Also, when it is possible to encode/decode the 3D video in connection with the current NAL unit, the multiview video prediction-decoding apparatus 20 may parse the 'num_interview_ref_idx_I1_active_minus1' 75 from the slice header 70, and read the number of active restored images for inter-view prediction in the L1 list.

The multiview video prediction-encoding apparatus 10 and the multiview video prediction-decoding apparatus 20 may determine whether or not it is possible to modify a reference order that is predetermined in the reference picture list in the current slice (76). When it is possible to modify the reference order of the reference picture list in the current slice and encode/decode the 3D video in connection with the current NAL unit, a reference picture list modification parameter set 77 may be called.

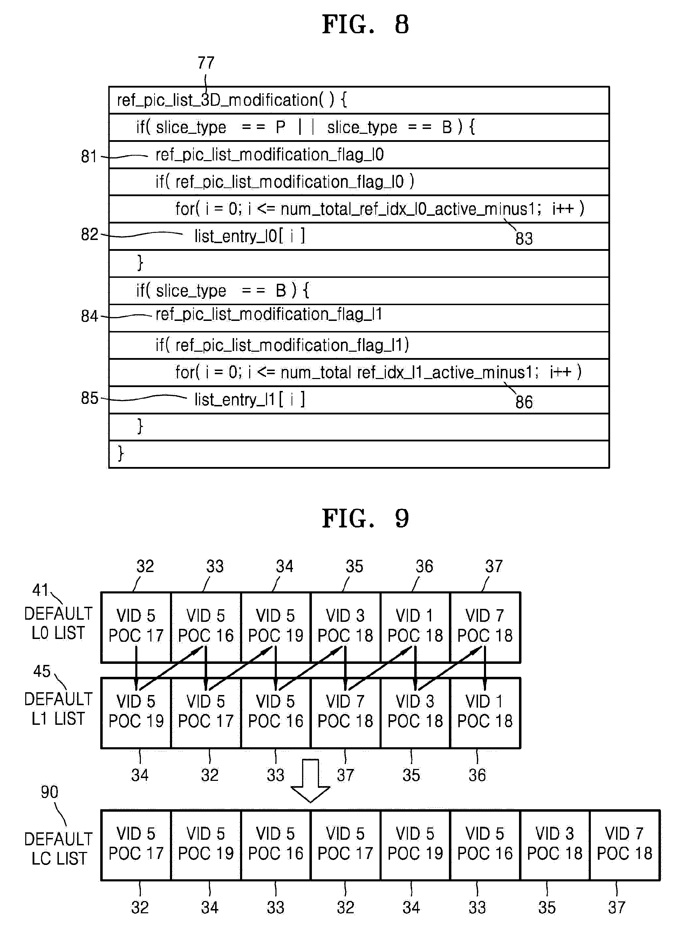

FIG. 8 is a diagram of a syntax of parameters for modifying the reference picture list, according to an embodiment of the present inventive concept.

The reference picture list modification parameter set 77 according to an embodiment of the present inventive concept may include 'ref_pic_list_modification_flag_I0' 81 which indicates information regarding whether or not to arbitrarily modify a reference order of restored images in an L0 list when a current slice is in a forward prediction mode or a bi-directional prediction mode as a P slice or B slice type.

When it is possible to arbitrarily modify the reference order in the current slice, reference indexes 'list_entry_I0' 82 of the L0 list for forward prediction or bi-directional prediction of the current slice may be arbitrarily modified. In this case, a maximum number 83 of reference indexes in the L0 list may be a total sum of a default number 61 of at least one restored image having a reproduction order prior to that of a current picture and a default number 62 of at least one restored image having a VID lower than that of the current picture, in the L0 list. Therefore, new reference indexes are matched with the reference indexes 'list_entry_I0' 82 in the L0 list as much as the maximum number 83 of reference indexes in the L0 list, and thus, a reference order of the restored images corresponding to each reference index in the current slice may be arbitrarily modified.

The reference picture list modification parameter set 77 according to an embodiment of the present inventive concept may include 'ref_pic_list_modification_flag_I1' 84 which indicates information about whether or not to arbitrarily modify a reference order of restored images in an L1 list when the current slice is in a forward prediction mode or a bi-directional prediction mode as a P slice or B slice type.

When it is possible to arbitrarily modify the reference order in the current slice, reference indexes 'list_entry_I1' 85 of the L1 list for directional prediction of the current slice may be arbitrarily modified. In this case, a maximum number 86 of reference indexes in the L1 list may be a total sum of a default number 63 of at least one restored image having a reproduction order prior to that of the current picture and a default number 64 of at least one restored image having a VID lower than that of the current picture. Therefore, new reference indexes are matched with reference indexes 'list_entry_I1' 85 in the L1 list as much as the maximum number 86 of reference indexes in the L1 list, and thus, a reference order of the restored images corresponding to each reference index in the current slice may be arbitrarily modified.

Accordingly, the multiview video prediction-decoding apparatus 20 according to an embodiment of the present inventive concept may parse the 'ref_pic_list_modification_flag_I0' 81 or the 'ref_pic_list_modification_flag_I1' 84 from the reference picture list modification parameter set 77, and read whether or not a reference order is arbitrarily modified in the L0 list or the L1 list. When it is determined that a reference order of the L0 list has been arbitrarily modified, the reference order of the L0 list may be modified according to the reference indexes 'list_entry_I0' 82 that have been arbitrarily modified in the current slice as much as the maximum number 83 of reference indexes in the L0 list. Likewise, when it is determined that a reference order of the L1 list has been arbitrarily modified, the reference order of the L1 list may be modified according to the reference indexes 'list_entry_I1' 85 that have been arbitrarily modified in the current slice as much as the maximum number 86 of reference indexes in the L1 list.

According to another embodiment, the multiview video prediction-encoding apparatus 10 and the multiview video prediction-decoding apparatus 20 may perform inter-prediction or inter-view prediction by using a new reference picture list generated by combining existing reference picture lists.

FIG. 9 is an exemplary view of a reference picture list combination, according to another embodiment of the inventive concept.

In other words, a default LC list 90 may be generated by combining the restored images in the default L0 list 41 and restored images in the default L1 list 45.

A reference order of restored images in the default LC list 90 according to another embodiment may be determined as an order in which the restored images in the default L1 list 41 and the default L1 list 45 are alternately referenced in a zigzag form.

For example, the default LC list 90 may be determined in a reference order of VID 5/POC 17 image 32 which is a first restored image of the default L0 list 41, the VID 5/POC 19 image 34 of the default L1 list 45, the VID 5/POC 16 image 33 of the default L0 list 41, the VID 5/POC 17 image 32 of the default L1 list 45, the VID 5/POC 19 image 34 of the default L0 list 41, the VID 5/POC 16 image 33 of the default L1 list 45, the VID 3/POC 18 image 35 of the default L0 list 41, the VID 7/POC 18 image 37 of the default L1 list 45.

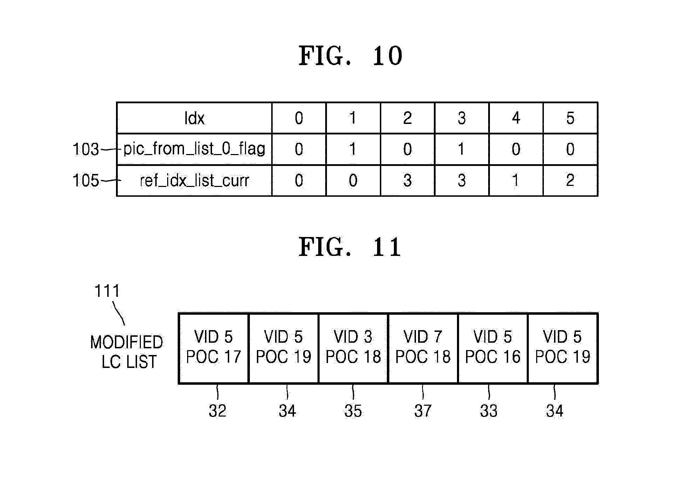

FIGS. 10 and 11 are diagrams of a process of modifying the reference picture list combination, according to another embodiment of the inventive concept.

According to another embodiment, the multiview video prediction-encoding apparatus 10 and the multiview video prediction-decoding apparatus 20 may arbitrarily modify a reference order of restored images in a reference picture list combination, i.e., the default LC list 90, in the current slice. Accordingly, the default LC list 90 is not used for the current slice. Instead, the multiview video prediction-encoding apparatus 10 and the multiview video prediction-decoding apparatus 20 may refer to a reference index table of FIG. 10, use the restored images of the default L0 list 41 and the default L1 list 45 again, and thus, generate a modified LC list 111.

In the reference index table according to an embodiment of the present inventive concept, a reference index Idx indicates a reference order of restored images in the modified LC list 111. 'pic_from_list_0_flag' 103 may indicate whether each restored image of the modified LC list 111 are included in the default L0 list 41 or the default L1 list 45. 'ref_idx_list_curr' 105 may indicate a reference index of a restored image in the current default L0 list 41 and the default L1 list 45.

Therefore, based on the 'pic_from_list_0_flag' 103 and the 'ref_idx_list_curr' 105, according to a reference order, the restored images in the modified LC list 111 may be determined as the VID 5/POC 17 image 32 of the default L0 list 41, the VID 5/POC 19 image 34 of the default L1 list 45, the VID 3/POC 18 image 35 of the default L0 list 41, the VID 7/POC 18 image 37 of the default L1 list 45, the VID 5/POC 16 image 33 of the default L0 list 41, and the VID 5/POC 19 image 34 of the default L0 list 41.

Therefore, when the multiview video prediction-encoding apparatus 10 and the multiview video prediction-decoding apparatus 20 according to another embodiment uses an LC list, if it is possible to encode/decode a 3D video in connection with a current NAL unit, not only the reference picture list modification parameter set 'ref_pic_list_3D_modification' 77, but also a reference picture list combination parameter set 'ref_pic_list_3D_combination' may be included in a slice header for a current slice. A reference picture list combination parameter set 'ref_pic_list_3D_combination' according to another embodiment may include parameters for determining a reference picture list combination.

The multiview video prediction-decoding apparatus 20 according to another embodiment may parse the reference picture list combination parameter set 'ref_pic_list_3D_combination' from the slice header, combine an L0 list and an L1 list based on the 'ref_pic_list_3D_combination', and thus read whether an LC list is used. When it is determined that the LC list is being used, a maximum number of reference indexes in the LC list may be read. Since restored images of the L0 list and the L1 list are included in the LC list in a zigzag order as a default, when the maximum number of reference indexes in the LC list is identified, restored images in the LC list and a reference order thereof will also be determined.

Also, the multiview video prediction-decoding apparatus 20 according to another embodiment may read whether the reference order of the restored images in the LC list may be modified, from the slice header. If the reference order of the restored images in the LC list may be modified, a current reference order of reference indexes in a modified LC list may be newly determined, as many as a maximum number of restored images in the LC list.

FIG. 12 is a block diagram of a multiview video encoding apparatus 121 including the multiview video prediction-encoding apparatus 10, according to an embodiment of the present inventive concept

The multiview video encoding apparatus 121 according to an embodiment of the present inventive concept includes a DPB 42, the multiview video prediction-encoding apparatus 10, a transformation quantizer 46, and an entropy encoder 48.

The DPB 42 according to an embodiment of the present inventive concept stores images that have been restored first and have the same viewpoint as a current picture, and images that have been restored first and have the same POC number as the current picture. Reference pictures for inter-prediction and inter-view prediction may be determined from among the restored images in the DPB 42. The multiview video prediction-encoding apparatus 10 according to an embodiment of the present inventive concept may perform the operations described with reference to FIGS. 1A and 1B, and 3 to 8 in the multiview video encoding apparatus 121.

The multiview video prediction-encoding apparatus 10 according to an embodiment of the present inventive concept may determine an L0 list that includes, from among images of the same viewpoint as a P slice type or B slice type current picture, at least one restored image to which a POC prior to that of the current picture is assigned and at least one restored image to which the same POC as the current picture is assigned and has a VID lower than that of the current picture. Also, the multiview video prediction-encoding apparatus 10 may determine an L1 list that includes, from among images of the same viewpoint as the B slice type current picture, at least one restored image to which a POC later than that of the current picture is assigned and at least one restored image to which the same POC as the current picture is assigned and has a VID higher than that of the current picture.

Accordingly, the multiview video prediction-encoding apparatus 10 may determine the L0 list and the L1 list for inter-prediction and inter-view prediction of multiview videos by using the restored images stored in the DPB 42. According to embodiments, a reference order of restored images defined in the L0 list and the L1 list may be arbitrarily modified in a predetermined slice.

The multiview video prediction-encoding apparatus 10 according to an embodiment of the present inventive concept may determine a reference picture of the current picture by referring to the L0 list and/or the L1 list, determine a reference block from the reference picture, and thus perform at least one selected from inter-prediction and inter-view prediction.

The multiview video prediction-encoding apparatus 10 according to an embodiment of the present inventive concept may configure a reference picture list by using the restored images stored in the DPB 42, and generate residue data by performing inter-prediction and inter-view prediction on the current picture by using a reference picture selected from the reference picture list.

The transformation quantizer 46 according to an embodiment of the present inventive concept may generate a quantized transformation coefficient by performing transformation and quantization on the residue data generated in the multiview video prediction-encoding apparatus 10. The entropy encoder 48 according to an embodiment of the present inventive concept may perform entropy encoding on the quantized transformation coefficient and symbols that include motion vectors and reference indexes.

The multiview video encoding apparatus 121 according to an embodiment of the present inventive concept may encode a video by performing inter-prediction on images of the video according to blocks, generating a quantized transformation coefficient according to blocks by performing transformation and quantization on residue data of each block generated by inter-prediction or inter-view prediction, and outputting a bitstream by performing entropy encoding on the quantized transformation coefficient.

Also, the multiview video encoding apparatus 121 may generate a restored image of the current picture by performing motion compensation or disparity compensation on the current picture with reference to previously restored images stored in the DPB 42. The restored image of the current picture may be used as a reference picture for inter-prediction or inter-view prediction of other images. Therefore, the multiview video encoding apparatus 121 may perform operations of the multiview video prediction-decoding apparatus 20, which performs motion compensation or disparity compensation, for inter-prediction and inter-view prediction.

In order to output a video encoding result, the multiview video encoding apparatus 121 according to an embodiment of the present inventive concept may operate in cooperation with an internal video encoding processor installed therein or an external video encoding processor so as to perform video encoding operations including intra-prediction, inter-prediction, transformation, and quantization. The video encoding operations according to an embodiment of the present inventive concept may be performed not only when the multiview video encoding apparatus 121 according to an embodiment of the present inventive concept includes a separate internal video encoding processor, but also when a central processing apparatus or a graphic processing apparatus, which control the multiview video encoding apparatus 121 or the multiview video encoding apparatus 121, includes a video encoding processing module.

FIG. 13 is a block diagram of a multiview video decoding apparatus 131 including the multiview video prediction-decoding apparatus 20, according to an embodiment of the present inventive concept.

The multiview video decoding apparatus 131 according to an embodiment of the present inventive concept may include a receiver 52, an inverse quantization inverse transformation unit 54, a DPB 56, the multiview video prediction-decoding apparatus 20, and an in-loop filtering unit 59.

The receiver 52 according to an embodiment of the present inventive concept may receive a bitstream, perform entropy decoding on a received video stream, and parse encoded image data.

The inverse quantization inverse transformation unit 54 according to an embodiment of the present inventive concept may restore residue data by performing inverse quantization and inverse transformation on the encoded image data that is parsed by the receiver 52.

The receiver 52 according to an embodiment of the present inventive concept may parse a motion vector and/or a disparity vector from the video stream. The DPB 56 according to an embodiment of the present inventive concept may store restored images first. The restored images may be used as reference pictures for motion compensation or disparity compensation of other images. The multiview video prediction-decoding apparatus 20 according to an embodiment of the present inventive concept may configure a reference picture list by using the restored images that are stored in the DPB 56, and by using the reference picture list, perform motion compensation that uses a motion vector and residue data, or disparity compensation that uses a disparity vector and residue data.

The multiview video decoding apparatus 131 according to an embodiment of the present inventive concept may perform operations that are the same as the operations of the multiview video prediction-decoding apparatus 20 described above with reference to FIGS. 2A and 2B.

With respect to a P slice type or a B slice type current picture, the multiview video prediction-decoding apparatus 20 according to an embodiment of the present inventive concept may determine an L0 list that includes at least one restored image to which a POC prior to that of a current picture is assigned and at least one restored image to which the same POC as the current picture is assigned and has a VID lower than that of the current picture, from among same view images that are stored in the DPB 56.

Also, with respect to the B slice type current picture, the multiview video prediction-decoding apparatus 20 may determine an L1 list that includes, from among images of the same viewpoint as the B slice type current picture, at least one restored image to which a POC later than that of the current picture is assigned and at least one restored image to which the same POC as the current picture is assigned and has a VID higher than that of the current picture.

Accordingly, the multiview video prediction-decoding apparatus 20 may determine the L0 list and the L1 list for inter-prediction and inter-view prediction of multiview videos. According to embodiments, a reference order of restored images defined in the L0 list and the L1 list may be arbitrarily modified in a predetermined slice.

The multiview video prediction-decoding apparatus 20 according to an embodiment of the present inventive concept may determine a reference picture of the current picture by referring to the L0 list and/or L1 list, determine a reference block from the reference picture, and thus perform at least one selected from motion compensation and disparity compensation.

The multiview video decoding apparatus 131 according to an embodiment of the present inventive concept may restore a video by decoding images of viewpoints of the video according to blocks. The receiver 52 may parse data encoded according to blocks and a motion vector or disparity information. The inverse quantization inverse transformation unit 54 may perform inverse quantization and inverse transformation on the data encoded according to blocks, and thus, may restore residue data according to blocks. The multiview video prediction-decoding apparatus 20 may determine a reference block indicated by a motion vector or a disparity vector in the reference picture for each block, synthesize residue data with the reference block, and thus generate restored blocks.

The in-loop filtering unit 59 may perform deblocking filtering and sample adaptive offset (SAO) filtering on a restored image that is restored and output by the multiview video prediction-decoding apparatus 20. The in-loop filtering unit 59 may perform filtering according to blocks and thus output a final restored image. Also, an output image of the in-loop filtering unit 59 may be stored in the DPB 56 and used as a reference picture for performing motion compensation on a next image.

In order to output a video encoding result, the multiview video decoding apparatus 131 according to an embodiment of the present inventive concept may operate in cooperation with an internal video decoding processor installed therein or an external video encoding processor so as to perform video decoding operations including inverse quantization, inverse transformation, intra-prediction, and motion compensation. The video decoding operations according to an embodiment of the present inventive concept may be performed not only when the multiview video decoding apparatus 131 according to an embodiment of the present inventive concept includes a separate internal video decoding processor, but also when the multiview video decoding apparatus 131, the multiview video decoding apparatus 131, or a graphic processing apparatus includes a video decoding processing module.

As described above, an inter-prediction apparatus 10 according to an embodiment of the present inventive concept may split blocks of video data into coding units having a tree structure, and prediction units may be used for inter-prediction of the coding units. Hereinafter, a video encoding method, a video encoding apparatus, a video decoding method, and a video decoding apparatus based on coding units having a tree structure and transformation units according to an embodiment of the present inventive concept tree structure will be described with reference to FIGS. 8 to 20.

As described above, according to an embodiment of the present inventive concept, the multiview video prediction-encoding apparatus 10, the multiview video prediction-decoding apparatus 20, the multiview video encoding apparatus 121, and the multiview video decoding apparatus 131 may split blocks of video data into coding units having a tree structure, and coding units, prediction units, and transformation units may be used for inter-view prediction or inter-prediction of the coding units. Hereinafter, a video encoding method, a video encoding apparatus, a video decoding method, and a video decoding apparatus based on coding units having a tree structure and transformation units according to an embodiment of the present inventive concept tree structure will be described with reference to FIGS. 14 to 26.

In principle, during encoding/decoding processes for a multiview video, encoding/decoding processes for base view images and encoding/decoding processes for additional view images are separately performed. In other words, when inter-view prediction is performed on a multiview video, encoding/decoding result of single view videos may be mutually referred to, but separate encoding/decoding processes are performed according to the single view videos.

Accordingly, since video encoding and decoding processes based on coding units having a tree structure as described below with reference to FIGS. 14 to 26 are video encoding and decoding processes for processing a single view video, only performing inter-prediction and motion compensation will be described for convenience of description. However, as described above with reference to FIGS. 1A to 13, in order to encode/decode a multiview video inter-view prediction and inter-view disparity compensation are performed on base view images and additional view images.

Accordingly, in order to prediction-encode a multiview video based on coding units having a tree structure, the multiview video prediction-encoding apparatus 10 and the multiview video encoding apparatus 121 according to an embodiment of the present inventive concept may include as many video encoding apparatuses 100 of FIG. 14 as a number of viewpoints of the multiview video so as to perform video encoding on each single view video, and control the video encoding apparatuses 100 such that they encode single view videos assigned thereto. Also, a video encoding apparatus 100 that encodes single view videos may perform inter-view prediction by using an encoding result of a single viewpoint of each video encoding apparatus 100 that encodes different view videos. Therefore, the multiview video prediction-encoding apparatus 10 and the multiview video encoding apparatus 121 may generate a bitstream that includes encoding results according to viewpoints.

Similarly, in order to prediction-decode a multiview video based on coding units having a tree structure, the multiview video prediction-decoding apparatus 20 and the multiview video decoding apparatus 131 according to an embodiment of the present inventive concept may include as many video decoding apparatuses 200 of FIG. 15 as a number of viewpoints of the multiview video so as to perform video decoding on each single view video, and control the video decoding apparatuses 200 such that they decode single view videos assigned thereto. Also, a video decoding apparatus 200 that decodes single view videos may perform inter-view prediction by using a decoding result of a single viewpoint of each video decoding apparatus 200 that decodes different view videos. Therefore, the multiview video prediction-decoding apparatus 20 and the multiview video decoding apparatus 131 may generate a bitstream that includes decoding results according to viewpoints.

FIG. 14 is a block diagram of a video encoding apparatus 100 based on coding units having a tree structure, according to an embodiment of the present inventive concept.

According to an embodiment of the present inventive concept, the video encoding apparatus 100 involving video prediction based on the coding units having a tree structure includes a coding unit determiner 120 and an output unit 130. Hereinafter, for convenience of description, "the video encoding apparatus 100 involving video prediction based on the coding units having a tree structure" according to an embodiment of the present inventive concept will only be referred to as the "video encoding apparatus 100."

The coding unit determiner 120 may split a current picture based on a maximum coding unit that is a coding unit having a maximum size for a current picture of an image. If the current picture is larger than the maximum coding unit, image data of the current picture may be split into at least one maximum coding unit. The maximum coding unit according to an embodiment of the present inventive concept may be a data unit having a size of 32x32, 64x64, 128x128, 256x256, etc., of which a shape is a square having a width and length in squares of 2.

A coding unit according to an embodiment of the present inventive concept may be characterized by a maximum size and a depth. The depth denotes a number of times the coding unit is spatially split from the maximum coding unit, and as the depth deepens, deeper coding units according to depths may be split from the maximum coding unit to a minimum coding unit. A depth of the maximum coding unit is an uppermost depth, and a depth of the minimum coding unit is a lowermost coding depth. Since a size of a coding unit corresponding to each depth decreases as the depth of the maximum coding unit deepens, a coding unit corresponding to an upper depth may include a plurality of coding units corresponding to a plurality of lower depths.

As described above, the image data of the current picture is split into maximum coding units according to a maximum size of the coding unit, and each maximum coding unit may include deeper coding units that are split according to depths. Since the maximum coding units according to an embodiment of the present inventive concept are split according to depths, image data of a spatial domain included in a maximum coding unit may be hierarchically classified according to depths.

A maximum depth and a maximum size of a coding unit, which limit the total number of times that a height and a width of the maximum coding unit may be hierarchically split, may be predetermined.

The coding unit determiner 120 encodes at least one split region obtained by splitting a region of the maximum coding unit according to depths, and determines a depth to output a final encoding result according to the at least one split region. In other words, the coding unit determiner 120 determines a coded depth by encoding the image data in the deeper coding units according to depths, according to the maximum coding unit of the current picture, and selecting a depth having the least encoding error. The determined coded depth and image data according to the determined maximum coding unit are output to the output unit 130.

The image data in the maximum coding unit is encoded based on the deeper coding units according to at least one depth equal to or below a maximum depth, and results of encoding the image data are compared based on each of the deeper coding units. A depth having the least encoding error may be selected after comparing encoding errors of the deeper coding units. At least one coded depth may be selected for each maximum coding unit.

A size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth into a lower depth by measuring an encoding error of the image data of the each coding unit, separately. Accordingly, even when image data is included in one maximum coding unit, the encoding errors according to depths may differ according to regions in the maximum coding unit, and thus the coded depths may differ according to regions in the image data. Thus, at least one coded depth may be determined in one maximum coding unit, and the image data of the maximum coding unit may be divided according to coding units of at least one coded depth.

Accordingly, the coding unit determiner 120 according to an embodiment of the present inventive concept may determine coding units having a tree structure in a current maximum coding unit. The "coding units having a tree structure" according to an embodiment of the present inventive concept include coding units corresponding to a depth determined to be the coded depth, from among all deeper coding units included in the current maximum coding unit. A coding unit of a coded depth may be hierarchically determined according to depths in the same region of the maximum coding unit, and may be independently determined in other regions. Similarly, a coded depth in a current region may be independently determined from a coded depth in another region.

A maximum depth according to an embodiment of the present inventive concept is an index related to the number of splitting times from a maximum coding unit to a minimum coding unit. A first maximum depth according to an embodiment of the present inventive concept may denote a total number of splitting times from the maximum coding unit to the minimum coding unit. A second maximum depth according to an embodiment of the present inventive concept may denote a total number of depth levels from the maximum coding unit to the minimum coding unit. For example, when a depth of the maximum coding unit is 0, a depth of a coding unit in which the maximum coding unit is split once may be set to 1, and a depth of a coding unit in which the maximum coding unit is split twice may be set to 2. In this case, if the minimum coding unit is a coding unit in which the maximum coding unit is split four times, 5 depth levels of depths 0, 1, 2, 3, and 4 exist, and thus the first maximum depth may be set to 4, and the second maximum depth may be set to 5.

Prediction-encoding and transformation may be performed according to the maximum coding unit. Prediction-encoding and transformation are also performed based on the deeper coding units according to a depth equal to or depths less than the maximum depth, according to the maximum coding unit.

Since the number of deeper coding units increases whenever the maximum coding unit is split according to depths, encoding, including prediction-encoding and transformation, is performed on all of the deeper coding units generated as the depth deepens. Hereinafter, for convenience of description, prediction-encoding and transformation will be described based on a coding unit of a current depth in at least one maximum coding unit.

The video encoding apparatus 100 according to an embodiment of the present inventive concept may variously select a size or a shape of a data unit for encoding the image data. In order to encode the image data, operations, such as prediction-encoding, transformation, and entropy encoding, are performed. The same data unit may be used for all operations or different data units may be used for each operation.

For example, the video encoding apparatus 100 may select not only a coding unit for encoding the image data, but also a data unit different from the coding unit so as to perform prediction-encoding on the image data of the coding unit.

In order to perform prediction-encoding on the maximum coding unit, prediction-encoding may be performed based on a coding unit corresponding to a coded depth according to an embodiment of the present inventive concept, i.e., a coding unit that is no longer split into coding units corresponding to a lower depth. Hereinafter, the coding unit that is no longer split and becomes a basis unit for prediction-encoding will be referred to as a "prediction unit." A partition obtained by splitting the prediction unit may include a prediction unit and a data unit obtained by splitting at least one selected from a height and a width of the prediction unit. The partition is a data unit where a prediction unit of a coding unit is split, and a prediction unit may be a partition having the same size as a coding unit.

For example, when a coding unit of 2Nx2N (where N is a positive integer) is no longer split, the coding unit becomes a prediction unit of 2Nx2N and a size of a partition may be 2Nx2N, 2NxN, Nx2N, or NxN. Examples of a partition type according to an embodiment of the present inventive concept may selectively include symmetrical partitions that are obtained by symmetrically splitting a height or width of the prediction unit, partitions that are obtained by asymmetrically splitting the height or width of the prediction unit by 1:n, n:1, etc., partitions that are obtained by geometrically splitting the height or width of the prediction unit, and partitions having arbitrary shapes.

A prediction mode of the prediction unit may be at least one selected from an intra mode, an inter mode, and a skip mode. For example, the intra mode and the inter mode may be performed on a partition of 2Nx2N, 2NxN, Nx2N, or NxN. Also, the skip mode may be performed only on the partition of 2Nx2N. Encoding is independently performed on one prediction unit in a coding unit, and thus a prediction mode having a least encoding error may be selected.

The video encoding apparatus 100 according to an embodiment of the present inventive concept may perform transformation on the image data in the coding unit based on not only the coding unit for encoding the image data, but also a data unit that is different from the coding unit. In order to perform transformation in the coding unit, transformation may be performed based on a transformation unit having a size smaller than or equal to the coding unit. For example, the transformation unit may include a data unit for the intra mode and a transformation unit for the inter mode.

The transformation unit in the coding unit may be recursively split into smaller sized transformation units in a manner similar to that in which the coding unit having a tree structure according to an embodiment of the present inventive concept. Thus, residual data in the coding unit may be divided according to a transformation unit having a tree structure according to transformation depths.

A transformation depth indicating the number of splitting times to reach the transformation unit by splitting the height and width of the coding unit may also be set in the transformation unit according to an embodiment of the present inventive concept. For example, in a current coding unit of 2Nx2N, a transformation depth may be 0 when the transformation unit is 2Nx2N, may be 1 when the transformation unit is NxN, and may be 2 when the transformation unit is N/2xN/2. In order words, the transformation unit having a tree structure may be determined according to the transformation depths.

Encoding information according to coded depths requires not only information regarding the coded depths, but also information regarding prediction and transformation. Accordingly, the coding unit determiner 120 may not only determine a coded depth having a least encoding error, but also partition types of prediction units, a prediction mode according to the prediction units, and a size of a transformation unit for transformation.

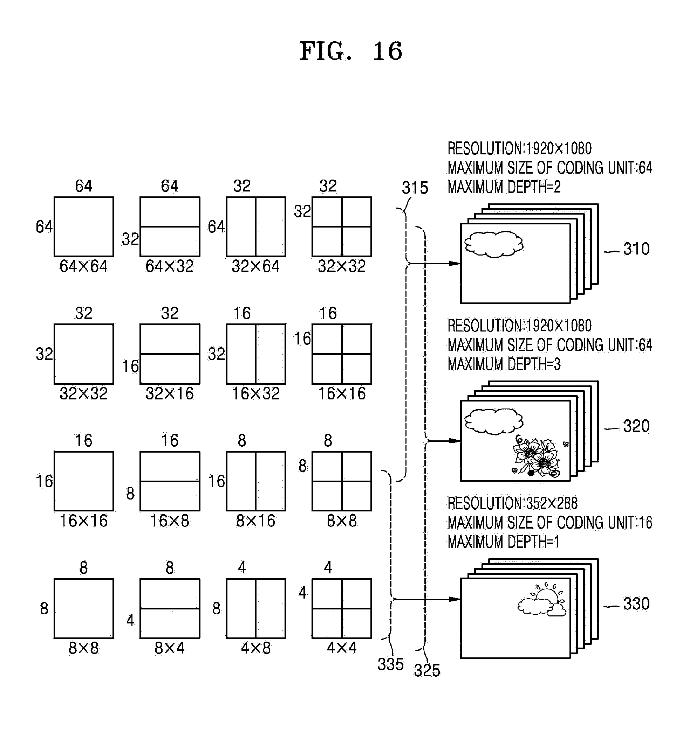

A method of determining coding units having a tree structure in a maximum coding unit according to an embodiment of the present inventive concept, prediction unit/partition, and a transformation unit will be described in detail below with reference to FIGS. 16 to 26.

The coding unit determiner 120 may measure an encoding error of a deeper coding unit by using Rate-Distortion Optimization based on Lagrangian multipliers.

The output unit 130 outputs the image data of the maximum coding unit, which is encoded based on the at least one coded depth determined by the coding unit determiner 120, and information regarding encoding modes according to the depths, in bitstreams.

The encoded image data may be obtained by encoding residual data of an image.

The information regarding the encoding modes according to the coded depths may include information regarding the coded depths, information regarding partition type in the prediction unit, information regarding the prediction mode, and information regarding a size of the transformation unit.

Information regarding the coded depths, may be defined by using split information according to depths, which indicates whether encoding is performed on coding units of a lower depth instead of a current depth. If a current depth of a current coding unit is the coded depth, the current coding unit is encoded to the current depth, and thus split information of the current depth may be defined not to split the current coding unit to a lower depth. Alternatively, if the current depth of the current coding unit is not the coded depth, encoding is performed on the coding unit of the lower depth, and thus the split information of the current depth may be defined to split the current coding unit to a lower depth.

If the current depth is not the coded depth, encoding is performed on a coding unit that is split to a lower depth. Since at least one coding unit of a lower depth exists in a coding unit of the current depth, encoding is repeatedly performed on each coding unit of the lower depth, and thus encoding may be recursively performed on each coding unit having the same depth.

Since coding units having a tree structure are determined in a maximum coding unit and information regarding at least one encoding mode is determined for each coding unit of a coded depth, information regarding at least one encoding mode may be determined with respect to the maximum coding unit. Also, a coded depth may be different according to regions since image data of the maximum coding unit is hierarchically split according to depths, and thus, information regarding the coded depth and the encoding mode may be determined with respect to the image data.

Accordingly, the output unit 130 according to an embodiment of the present inventive concept may assign encoding information regarding a corresponding coded depth and an encoding mode to at least one selected from the coding units, the prediction units, and the minimum unit included in the maximum coding unit.

The minimum unit according to an embodiment of the present inventive concept is a square data unit obtained by splitting the minimum coding unit constituting the lowermost depth by 4. The minimum unit according to an embodiment of the present inventive concept may be a maximum square data unit that may be included in all coding units, prediction unit, partition units, and transformation units in the maximum coding unit.

For example, encoding information output by the output unit 130 may be classified into encoding information according to deeper coding units and encoding information according to prediction units. The encoding information according to deeper coding units may include information regarding the prediction mode and partition sizes. The encoding information according to the prediction units may include information regarding an estimation direction of an inter mode, information regarding a reference picture index of the inter mode, information regarding a motion vector, information regarding a chroma component in an intra mode, and information regarding an interpolation method of the intra mode.

Information regarding a maximum size of the coding unit defined according to pictures, slices, or GOPs, and information regarding a maximum depth may be inserted into a header of a bitstream, a sequence parameter set, or a picture parameter set.

Information regarding a maximum size of the transformation unit permitted with respect to a current video, and information regarding a minimum size of the transformation unit may also be output through a header of a bitstream, a sequence parameter set, or a picture parameter set. The output unit 130 may encode and output reference information related to prediction, prediction information, and slice type information.

According to the most simplified embodiment of the video encoding apparatus 100, the deeper coding unit may be a coding unit obtained by dividing a height or width of a coding unit of an upper depth, which is one layer above, by 2. In other words, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may for the coding units having a tree structure by determining coding units having an optimum shape and size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100, image compression efficiency may be increased since a coding unit is adjusted considering characteristics of an image while increasing a maximum size of a coding unit considering a size of the image.

The multiview video prediction-encoding apparatus 10 described above with reference to FIG. 1A may include as many video encoding apparatuses 100 as the number of viewpoints, so as to encode single view images according to viewpoints of the multiview video.

When the video encoding apparatus 100 encodes the single view images, the coding unit determiner 120 may determine, for each maximum coding unit, a prediction unit for inter-prediction according to coding units having a tree structure, and perform inter-prediction according to each prediction unit.

In particular, the coding unit determiner 120 may perform inter-prediction in which restored same view images are referred to, and inter-view prediction in which restored different view images are referred to. The coding unit determiner 120 according to an embodiment of the present inventive concept may determine an L0 list that includes, from among images of a same viewpoint as a P slice type or B slice type current picture, at least one restored image to which a POC prior to that of the current picture is assigned and at least one restored image to which the same POC as the current picture is assigned and has a VID lower than that of the current picture. Also, the coding unit determiner 120 may determine an L1 list that includes, from among images of the same viewpoint as the B slice type current picture, at least one restored image to which a POC later than that of the current picture is assigned and at least one restored image to which the same POC as the current picture is assigned and has a VID higher than that of the current picture.

Accordingly, the coding unit determiner 120 may determine the L0 list and the L1 list for inter-prediction and inter-view prediction of multiview videos by using the restored images stored in a DPB. According to embodiments, a reference order of restored images defined in the L0 list and the L1 list may be arbitrarily modified in a predetermined slice.

The coding unit determiner 120 according to an embodiment of the present inventive concept may determine a reference picture of the current picture by referring to the L0 list and/or the L1 list, determine a reference block from the reference picture, and thus perform at least one selected from inter-prediction and inter-view prediction.

FIG. 15 is a block diagram of a video decoding apparatus based on coding units having a tree structure, according to an embodiment of the present inventive concept.

According to an embodiment of the present inventive concept, the video decoding apparatus 200 that involves video prediction based on coding units having a tree structure includes a receiver 210, an image data and encoding information extractor 220, and an image data decoder 230. Hereinafter, for convenience of description, "the video decoding apparatus 200 involving video prediction based on the coding units having a tree structure" according to an embodiment of the present inventive concept will only be referred to as the "video decoding apparatus 200."

Definitions of various terms, such as a coding unit, a depth, a prediction unit, a transformation unit, and information regarding various encoding modes, for decoding operations of the video decoding apparatus 200 according to an embodiment of the present inventive concept are identical to those described with reference to FIG. 14 and the video encoding apparatus 100.

The receiver 210 receives and parses a bitstream of an encoded video. The image data and encoding information extractor 220 extracts encoded image data for each coding unit, wherein the coding units have a tree structure in each maximum coding unit, from the parsed bitstream, and outputs the extracted image data to the image data decoder 230.

The image data and encoding information extractor 220 may extract information regarding a maximum size of a coding unit of a current picture, from a header regarding the current picture, a sequence parameter set, or a picture parameter set.

Also, the image data and encoding information extractor 220 extracts information regarding a coded depth and an encoding mode for the coding units having a tree structure according to each maximum coding unit, from the parsed bitstream. The extracted information regarding the coded depth and the encoding mode is output to the image data decoder 230. In other words, the image data in a bitstream is split into the maximum coding unit so that the image data decoder 230 decodes the image data for each maximum coding unit.

The information regarding the coded depth and the encoding mode according to each maximum coding unit may be determined with respect to information regarding at least one coded depth. Information regarding an encoding mode may include information regarding a partition type of a corresponding coding unit, information regarding a prediction mode, and information regarding a size of a transformation unit. Also, split information according to depths may be extracted as the information regarding the coded depth.

The information regarding the coded depth and the encoding mode according to each maximum coding unit extracted by the image data and encoding information extractor 220 is information regarding a coded depth and an encoding mode determined to result in a least encoding error when an encoder, such as the video encoding apparatus 100, repeatedly performs encoding for each deeper coding unit according to depths according to each maximum coding unit. Accordingly, the video decoding apparatus 200 may restore an image by decoding image data according to an encoding mode that generates the least encoding error.

According to an embodiment of the present inventive concept, since information regarding the coded depth and the coding unit may be assigned to a predetermined data unit from among a corresponding coding unit, a prediction unit, and a minimum unit, the image data and encoding information extractor 220 may extract the information regarding the coded depth and the encoding mode according to predetermined data units. If information regarding a coded depth and encoding mode of a corresponding maximum coding unit is recorded according to the predetermined data units, the predetermined data units to which the same information regarding the coded depth and the encoding mode is assigned may be inferred to be data units included in the same maximum coding unit.

The image data decoder 230 restores the current picture by decoding the image data of each maximum coding unit based on the information regarding the coded depth and the encoding mode according to each maximum coding unit. In other words, the image data decoder 230 may decode the encoded image data based on a partition type, a prediction mode, and a transformation unit that is read according to each coding unit from among the coding units having a tree structure in the maximum coding unit. A decoding process may include a prediction process including intra-prediction and motion compensation, and an inverse transformation process.

The image data decoder 230 may perform intra-prediction or motion compensation according to a partition and a prediction mode of each coding unit, based on information regarding a partition type and a prediction mode of coding units according to coded depths.

In addition, in order to perform inverse transformation according to the maximum coding units, the image data decoder 230 may read information regarding a transformation unit having a tree structure according to coding units, and thus, perform inverse transformation based on transformation units of each coding unit. By performing inverse transformation, a pixel value of a spatial domain of the coding unit may be restored.

The image data decoder 230 may determine a coded depth of a current maximum coding unit by using split information according to depths. If the split information indicates that image data is no longer split in a current depth, the current depth is the coded depth. Accordingly, regarding the image data of the current maximum coding unit, the image data decoder 230 may decode a coding unit of the current depth by using information regarding a partition type of a prediction unit, the information regarding a prediction mode, and the information regarding a size of a transformation unit.

In other words, data units containing encoding information including the same split information may be gathered by observing encoding information assigned to a predetermined data unit from among the coding unit, the prediction unit, and the minimum unit, and the gathered data units may be considered to be a single data unit to be decoded by the image data decoder 230 in the same encoding mode. A current coding unit may be decoded by obtaining information regarding an encoding mode of each coding unit determined according to the above-described process.

The multiview video prediction-encoding apparatus 10 and the multiview video encoding apparatus 121 described above with reference to FIGS. 1A and 12 may include as many image data decoders 230 of the video decoding apparatus 200 as the number of viewpoints, so as to generate a reference picture for performing inter-prediction and inter-view prediction according to viewpoints of the multiview video.

Also, the multiview video prediction-decoding apparatus 20 and the multiview video decoding apparatus 131 described above with reference to FIGS. 2A and 13 may include as many video decoding apparatuses 200 as the number of viewpoints, so as to restore images of each viewpoint by decoding respectively received bitstreams.

When a bitstream of a predetermined view video from the multiview video is received, the image data decoder 230 of the video decoding apparatus 200 may split samples of images extracted by the image data and encoding information extractor 220 from the bitstream into coding units having a tree structure in a maximum coding unit. The image data decoder 230 may restore the images by performing motion compensation according to prediction units for inter-prediction, on each coding unit having a tree structure of the samples of the images.

In particular, the image data decoder 230 may perform inter-prediction in which restored same view images are referred to, and inter-view prediction in which restored different view images are referred to. The image data decoder 230 according to an embodiment of the present inventive concept may determine an L0 list that includes, from among images of a same viewpoint as a P slice type or B slice type current picture, at least one restored image to which a POC prior to that of the current picture is assigned and at least one restored image to which the same POC as the current picture is assigned and has a VID lower than that of the current picture. Also, the image data decoder 230, may determine an L1 list that includes, from among images of the same viewpoint as the B slice type current picture, at least one restored image to which a POC later than that of the current picture is assigned and at least one restored image to which the same POC as the current picture is assigned and has a VID higher than that of the current picture.

Accordingly, the image data decoder 230 may determine the L0 list and the L1 list for inter-prediction and inter-view prediction of multiview videos by using the restored images stored in a DPB. According to embodiments, a reference order of restored images defined in the L0 list and the L1 list may be arbitrarily modified in a predetermined slice.

The data decoder 230 according to an embodiment of the present inventive concept image may determine a reference picture of the current picture by referring to the L0 list and/or the L1 list. By using a motion vector or a disparity vector that is parsed from the image data and encoding information extractor, the image data decoder 230 may determine a reference prediction unit from the reference picture. Residue data may be compensated with respect to the reference prediction unit by performing at least one selected from motion compensation and disparity compensation, and thus the current prediction unit may be restored.

Thus, the video decoding apparatus 200 may obtain information regarding at least one coding unit that generates the least encoding error when encoding is recursively performed for each maximum coding unit, and may use the information to decode the current picture. In other words, encoded image data of the coding units having the tree structure determined to be the optimum coding units in each maximum coding unit may be decoded.

Accordingly, even if image data has a high resolution and a large amount of data, the image data may be efficiently decoded and restored by using a size of a coding unit and an encoding mode, which are adaptively determined according to characteristics of the image data, by using information regarding an optimum encoding mode received from an encoder.

FIG. 16 is a diagram of a concept of coding units according to an embodiment of the present inventive concept.

A size of a coding unit may be expressed by "width x height," and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 16 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than that of the video data 330 may be 64.

Since the maximum depth of the video data 310 is 2, a coding unit 315 of the video data 310 may include a maximum coding unit having a long axis size of 64, and coding units having long axis sizes of 32 and 16 since depths are deepened by two layers by splitting the maximum coding unit twice. Since the maximum depth of the video data 330 is 1, a coding unit 335 of the video data 330 may include a maximum coding unit having a long axis size of 16, and coding units having a long axis size of 8 since depths are deepened by one layer by splitting the maximum coding unit once.

Since the maximum depth of the video data 320 is 3, a coding unit 325 of the video data 320 may include a maximum coding unit having a long axis size of 64, and coding units having long axis sizes of 32, 16, and 8 since the depths are deepened by three layers by splitting the maximum coding unit three times. As a depth deepens, detailed information may be precisely expressed.

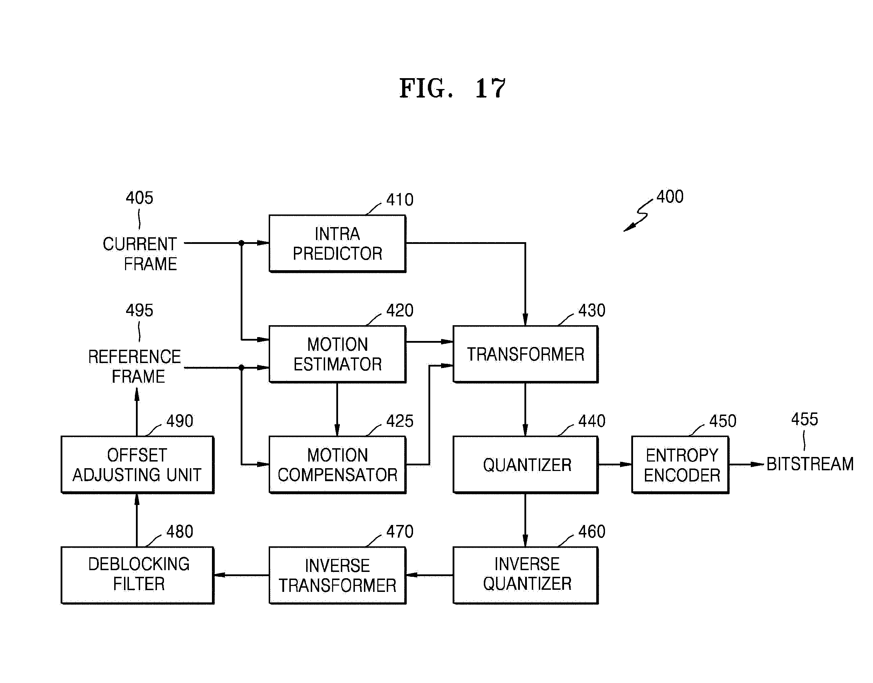

FIG. 17 is a block diagram of an image encoder 400 based on coding units, according to an embodiment;

The image encoder 400 according to an embodiment of the present inventive concept performs operations of the coding unit determiner 120 of the video encoding apparatus 100 to encode image data. In other words, an intra-predictor 410 performs intra-prediction on coding units in an intra mode, from among a current frame 405, and a motion estimator 420 and a motion compensator 425 respectively perform inter-estimation and motion compensation by using a current frame 405 and a reference frame 495 in an inter mode.

Data output from the intra-predictor 410, the motion estimator 420, and the motion compensator 425 is output as a quantized transformation coefficient through a transformer 430 and a quantizer 440. The quantized transformation coefficient is restored as data in a spatial domain through an inverse quantizer 460 and an inverse transformer 470, and the restored data in the spatial domain is output as the reference frame 495 after being post-processed through a deblocking unit 480 and an offset adjusting unit 490. The quantized transformation coefficient may be output as a bitstream 455 through an entropy encoder 450.

In order to be applied in the video encoding apparatus 100 according to an embodiment of the present inventive concept, all elements of the image encoder 400, i.e., the intra-predictor 410, the motion estimator 420, the motion compensator 425, the transformer 430, the quantizer 440, the entropy encoder 450, the inverse quantizer 460, the inverse transformer 470, the deblocking unit 480, and the offset adjusting unit 490 perform operations based on each of coding units having a tree structure while regarding a maximum depth of each maximum coding unit.

In particular, the intra-predictor 410, the motion estimator 420, and the motion compensator 425 determine partitions and a prediction mode of each of the coding units having a tree structure with regard to a maximum size and a maximum depth of a current maximum coding unit, and the transformer 430 determines a size of a transformation unit in each of the coding units having a tree structure.

The motion estimator 420 may estimate motions between images by performing inter-prediction in which same view images are referred to according to prediction units. Also, the motion estimator 420 may estimate inter-view disparity by performing inter-view prediction in which different view images having a same reproduction order as the current picture are referred to according to the prediction units.

Also, the motion compensator 425 may restore a prediction unit by performing motion compensation in which the same view images are referred to according to the prediction units, or by performing disparity compensation in which the different view images having the same reproduction order as the current picture are referred to according to the prediction units.

The motion estimator 420 and the motion compensator 425 determines a reference picture list by using the same method as that described with reference to FIGS. 1A to 11.

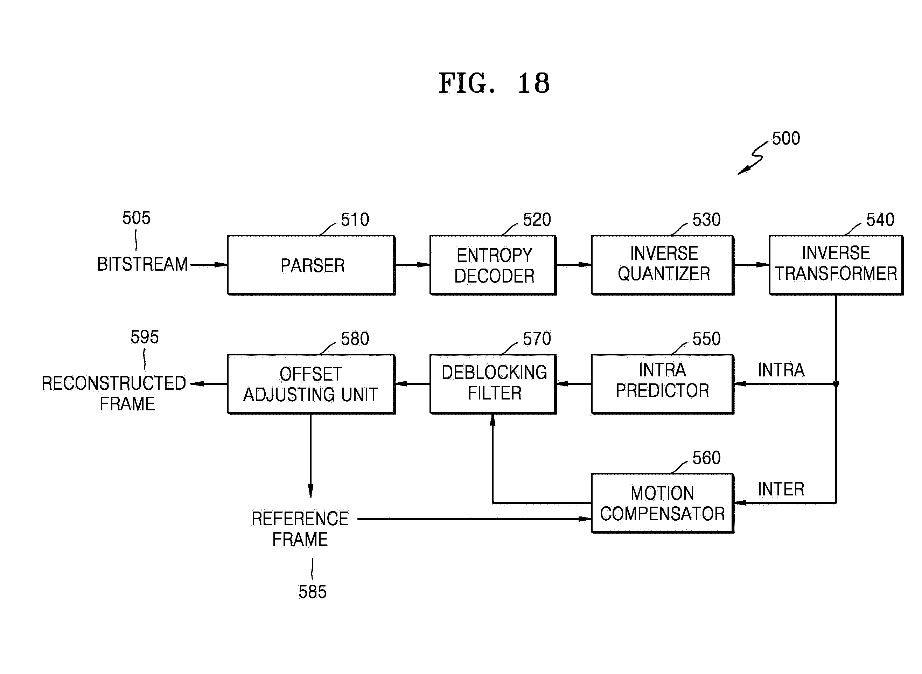

FIG. 18 is a block diagram of an image decoder 500 based on coding units, according to an embodiment;

A parser 510 parses encoded image data to be decoded and encoding information required for decoding from a bitstream 505. The encoded image data is output as inverse quantized data through an entropy decoder 520 and an inverse quantizer 530, and the inverse quantized data is restored to image data in a spatial domain through an inverse transformer 540.

An intra-predictor 550 performs intra-prediction on coding units in an intra mode with respect to the image data in the spatial domain, and a motion compensator 560 performs motion compensation on coding units in an inter mode by using a reference frame 585.

The image data in the spatial domain, which passed through the intra-predictor 550 and the motion compensator 560, may be output as a restored frame 595 after being post-processed through a deblocking unit 570 and an offset adjusting unit 580. Also, image data that is post-processed through the deblocking unit 570 and an offset adjusting unit 580 may be output as the reference frame 585.

In order to decode the image data in the image data decoder 230 of the video decoding apparatus 200, the image decoder 500 according to an embodiment of the present inventive concept may perform operations that are performed after the parser 510.

In order to be applied in the video decoding apparatus 200 according to an embodiment of the present inventive concept, all elements in the image decoder 500, i.e., the parser 510, the entropy decoder 520, the inverse quantizer 530, the inverse transformer 540, the intra-predictor 550, the motion compensator 560, the deblocking unit 570, and the offset adjusting unit 580, perform operations based on coding units having a tree structure for each maximum coding unit.

In particular, the intra-predictor 550 and the motion compensator 560 determine partitions and a prediction mode of each of the coding units having a tree structure, and the inverse transformer 540 determines a size of a transformation unit in each coding unit.

The motion compensator 560 may restore a prediction unit by performing motion compensation in which the same view images are referred to according to the prediction units, or by performing disparity compensation in which the different view images having the same reproduction order as the current picture are referred to according to the prediction units. The motion compensator 560 determines a reference picture list by using the same method as that described with reference FIGS. 1A to 11.

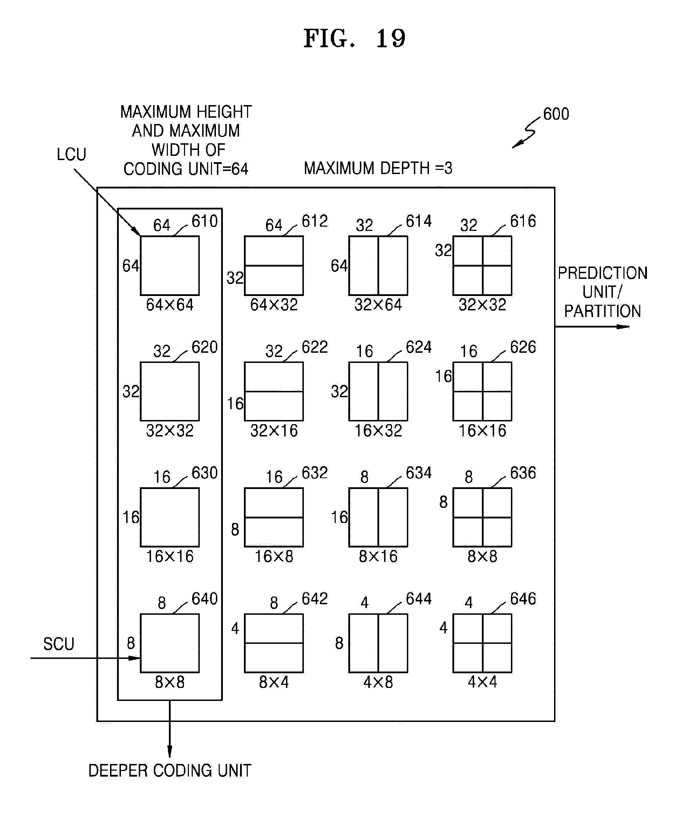

FIG. 19 is a diagram of deeper coding units according to depths, and partitions, according to an embodiment of the present inventive concept.

The video encoding apparatus 100 according to an embodiment of the present inventive concept and the video decoding apparatus 200 according to an embodiment of the present inventive concept use hierarchical coding units so as to consider characteristics of an image. A maximum height, a maximum width, and a maximum depth of coding units may be adaptively determined according to the characteristics of the image, or may be differently determined according to users. Sizes of the deeper coding units according to depths may be determined according to a predetermined maximum size of a coding unit.

In a hierarchical structure 600 of the coding units according to an embodiment of the present inventive concept may have a maximum height and a maximum width of 64, and a maximum depth of 3. In this case, the maximum depth refers to a total number of times the coding unit is split from a maximum coding unit to a minimum coding unit. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0, and a size, i.e., a height and a width, is 64x64. The depth deepens along the vertical axis, there are and a coding unit 620 having a size of 32x32 and a depth of 1, a coding unit 630 having a size of 16x16 and a depth of 2, a coding unit 640 having a size of 8x8 and a depth of 3. The coding unit 640 having a size of 8x8 and a depth of 3 is the minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions included in the coding unit 610, i.e. a partition 610 having a size of 64x64, partitions 612 having a size of 64x32, partitions 614 having a size of 32x64, or partitions 616 having a size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

In order to determine a coded depth of the maximum coding unit 610, the coding unit determiner 120 of the video encoding apparatus 100 performs encoding for coding units corresponding to each depth included in the maximum coding unit 610.

A number of deeper coding units according to depths including data in the same range and the same size increases as the depth deepen. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are independently encoded.

In order to perform encoding according to depths, a representative encoding error, i.e., a least encoding error may be selected for a current depth by performing encoding for each prediction unit in the deeper coding units according to depths, along the horizontal axis of the hierarchical structure 600. Alternatively, the least encoding error may be found by comparing representative encoding errors according to depths, by performing encoding for each depth as the depth deepens along the vertical axis of the hierarchical structure 600. A depth and a partition having the least encoding error in the maximum coding unit 610 may be selected as the coded depth and a partition type of the maximum coding unit 610.

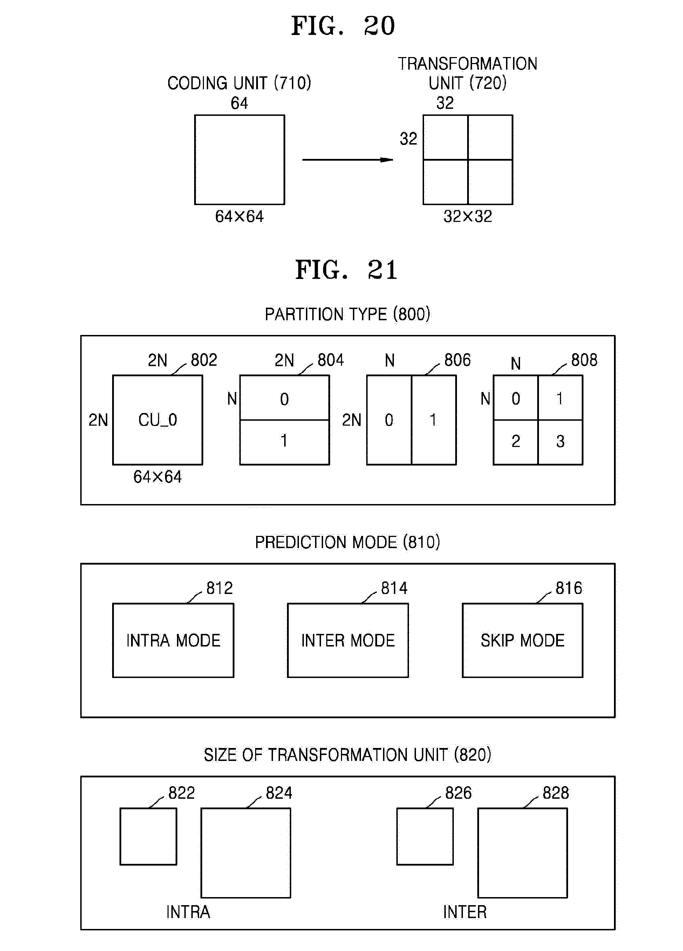

FIG. 20 is a diagram of a relationship between a coding unit and transformation units, according to an embodiment of the present inventive concept.

The video encoding apparatus 100 according to an embodiment of the present inventive concept or the video decoding apparatus 200 according to an embodiment of the present inventive concept encodes or decodes an image according to coding units having sizes smaller than or equal to a size of a maximum coding unit for each maximum coding unit. Sizes of transformation units for transformation during an encoding process may be selected based on data units that are not larger than a corresponding coding unit.

For example, in the video encoding apparatus 100 or the video decoding apparatus 200, if a size of the current coding unit 710 is 64x64, transformation may be performed by using the transformation units 720 having a size of 32x32.

Also, data of the coding unit 710 having the size of 64x64 may be encoded by performing transformation on each of the transformation units having a size of 32x32, 16x16, 8x8, and 4x4, which are smaller than 64x64, and then a transformation unit having the least coding error may be selected.

FIG. 21 is a diagram of encoding information according to depths, according to an embodiment of the present inventive concept.

The output unit 130 of the video encoding apparatus 100 may encode and transmit information 800 regarding a partition type, information 810 regarding a prediction mode, and information 820 regarding a size of a transformation unit for each coding unit corresponding to a coded depth, as information regarding an encoding mode.

The information 800 indicates information regarding a shape of a partition obtained by splitting a prediction unit of a current coding unit, wherein the partition is a data unit for prediction-encoding the current coding unit. For example, a current coding unit CU_0 having a size of 2Nx2N may be split into any one selected from a partition 802 having a size of 2Nx2N, a partition 804 having a size of 2NxN, a partition 806 having a size of Nx2N, and a partition 808 having a size of NxN. In this case, the information 800 is determined such that it indicates one selected from the partition 804 having the size of 2NxN, the partition 806 having the size of Nx2N, and the partition 808 having the size of NxN.

The information 810 indicates a prediction mode of each partition. For example, the information 810 may indicate a mode of prediction-encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second intra transformation unit 828.

The image data and encoding information extractor 220 of the video decoding apparatus 200 may extract and use the information 800, 810, and 820 for decoding, according to each deeper coding unit.

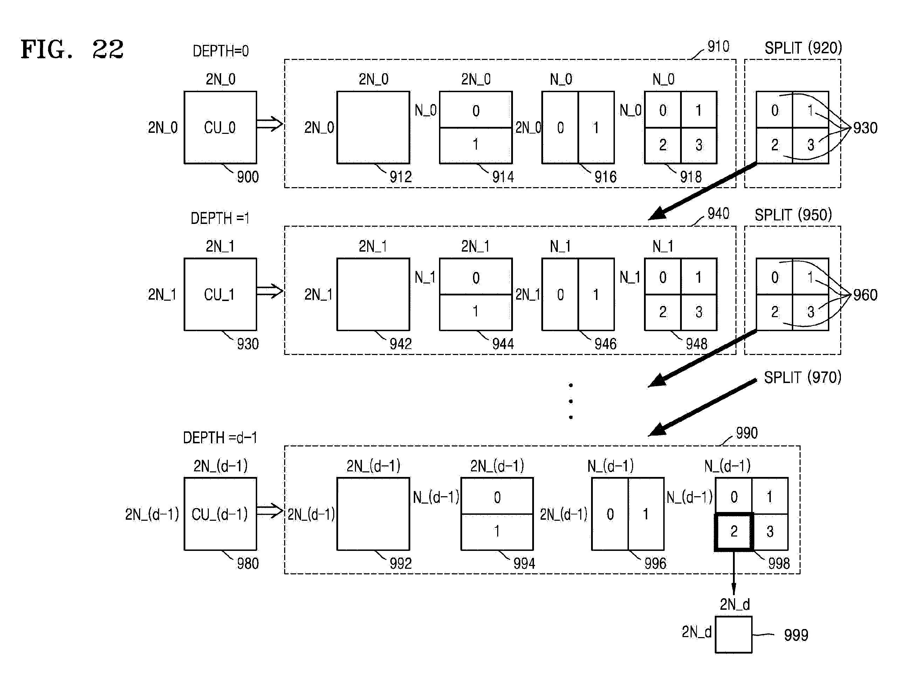

FIG. 22 is a diagram of deeper coding units according to depths, according to an embodiment of the present inventive concept.

Split information may be used to indicate a change of a depth. The spilt information indicates whether a coding unit of a current depth is split into coding units of a lower depth.

A prediction unit 910 for prediction-encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 22 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction-encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction-encoding in an intra mode and an inter mode may be performed on the partitions having the sizes of 2N_0x2N_0, N_0x2N_0, 2N_0xN_0, and N_0xN_0. The prediction-encoding in a skip mode is performed only on the partition having the size of 2N_0x2N_0.

If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding unit 930 having a depth of 2 and a size of N_0xN_0 to search for a least encoding error.

A prediction unit 940 for prediction-encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a least encoding error.

When a maximum depth is d, deeper coding units according to depths may be determined up to a depth of d-1, and split information may be determined up to a depth of d-2. In other words, when a coding unit corresponding to a depth of d-2 is split in operation 970 and then encoding is performed up to when the depth is d-1, a prediction unit 990 for prediction-encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction-encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 to 998 to search for a partition type having a least encoding error.

Even when the partition type 998 has the least encoding error, since a maximum depth is d, a coding unit CU_(d-1) having a depth of d-1 is no longer split to a lower depth, and a coded depth of a current maximum coding unit 900 is determined to be d-1 and a partition type of the current maximum coding unit 900 may be determined to be N_(d-1)xN_(d-1). Also, since the maximum depth is d, split information is not determined for a coding unit 952 having a depth of d-1.

A data unit 999 may be a "minimum unit" for the current maximum coding unit. A minimum unit according to an embodiment of the present inventive concept may be a square data unit obtained by splitting a minimum coding unit, i.e., a lowest encoding depth, by 4. By performing the encoding repeatedly, the video encoding apparatus 100 may select a depth having the least encoding error by comparing encoding errors according to depths of the coding unit 900 to determine a coded depth, and determine a corresponding partition type and a prediction mode as an encoding mode of the coded depth.

Accordingly, the least encoding errors according to depths are compared in all of the depths of 0 to d, and a depth having the least encoding error may be determined as a coded depth. The coded depth, the partition type of the prediction unit, and the prediction mode may be encoded and transmitted as information regarding the encoding mode. Also, since a coding unit is split from the depth of 0 to the coded depth, only split information of the coded depth is set to 0, and split information of depths excluding the coded depth is set to 1.

The image data and encoding information extractor 220 of the video decoding apparatus 200 may extract and use the information regarding the coded depth and the prediction unit of the coding unit 900 to decode the partition 912. The video decoding apparatus 200 may determine a depth, in which split information is 0, as the coded depth by using split information according to depths, and use information regarding the encoding mode of the corresponding depth for decoding.

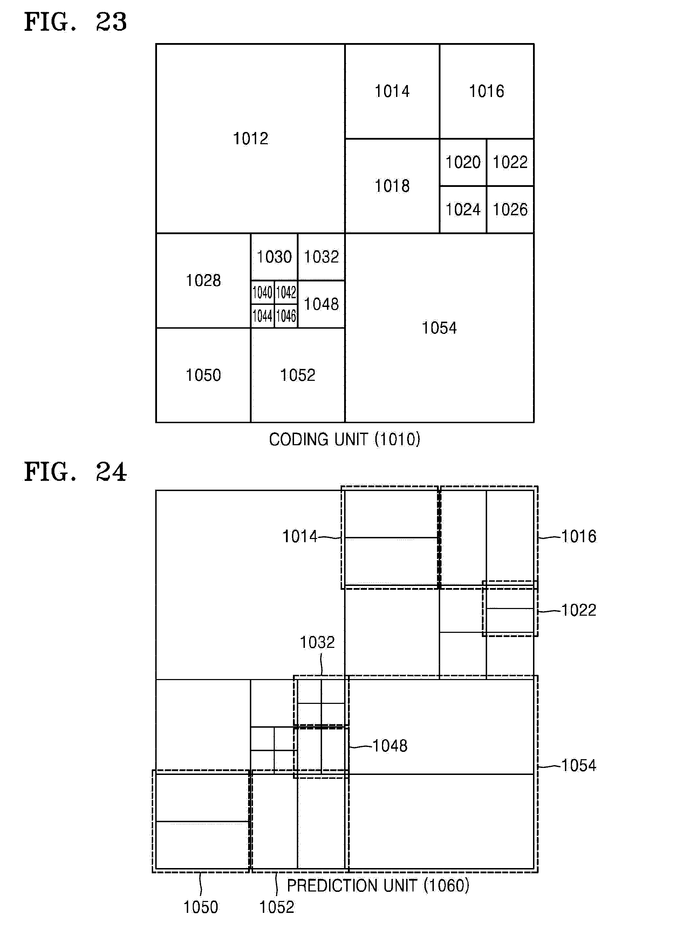

FIGS. 23 through 25 are diagrams for describing a relationship between coding units, prediction units, and transformation units, according to an embodiment of the present inventive concept.

Coding units 1010 are coding units according to coded depths determined by the video encoding apparatus 100 with respect to a maximum coding unit. Prediction units 1060 are partitions of prediction units of each of the coding units according to coded depths from among the coding units 1010, and transformation units 1070 are transformation units of each of the coding units according to coded depths.

When a depth of the maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some partitions 1014, 1016, 1022, 1032, 1048, 1050, 1052, and 1054 are obtained by splitting the coding units. In other words, the partitions 1014, 1022, 1050, and 1054 have a size of 2NxN, the partitions 1016, 1048, and 1052 have a size of Nx2N, and the partition 1032 has a size of NxN. Prediction units and partitions of the coding units 1010 according to depths are smaller than or equal to each coding unit.

Transformation or inverse transformation is performed on image data of a transformation unit 1052 in the transformation units 1070 in a data unit that is smaller than the coding unit 1052. Also, transformation units 1014, 1016, 1022, 1032, 1048, 1050, and 1052 in the transformation units 1070 are different from those in corresponding prediction units and partitions in terms of sizes and shapes. In other words, the video encoding and decoding apparatuses 100 and 200 may perform intra-prediction, motion estimation, motion compensation, transformation, and inverse transformation individually on a data unit in the same coding unit.

Accordingly, an optimum coding unit is determined by recursively performing encoding on each coding unit having a hierarchical structure according to maximum coding units, and thus coding units having a recursive tree structure may be obtained. Encoding information may include split information regarding a coding unit, information regarding a partition type, information regarding a prediction mode, and information regarding a size of a transformation unit. Table 1 shows the encoding information that may be determined by the video encoding and decoding apparatuses 100 and 200.

[Table 1]

| Split Information 0 (Encodinc. on Coding Unit having Size of 2Nx2N and Current Depth of d) | | | | | Split Information 1 |
|---|---|---|---|---|---|
| Prediction Mode | Partition Type | | Size of Transformation Unit | | Repeatedly encode coding units having lower depth of d+1 |
| Intra Inter Skip (Only 2Nx2N) | Symmetrical Partition Type | Asymmetrical Partition Type | Split Information 0 of Transformation Unit | Split Information 1 of Transformation Unit | |
| | 2Nx2N 2NxN Nx2N NxN | 2NxnU 2NxnD nLx2N nRx2N | 2Nx2N | NxN (Symmetrical Type) N/2xN/2 (Asymmetrical Type) | |

The output unit 130 of the video encoding apparatus 100 may output encoding information regarding coding units having a tree structure, and the encoding information extractor 220 of the video decoding apparatus 200 may extract the encoding information regarding the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus the information regarding a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information regarding the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1.

The size of the transformation unit may be determined to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, the size of the transformation unit may be NxN, and if the partition type of the current coding unit is an asymmetrical partition type, the size of the transformation unit may be N/2xN/2.

The encoding information regarding the coding units having a tree structure may be assigned to at least one selected from a coding unit corresponding to a coded depth, a prediction unit, and a minimum unit. The coding unit corresponding to the coded depth may include at least one selected from a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted with reference to adjacent data units, encoding information of data units in the deeper coding units adjacent to the current coding unit may be directly referred to and used.

Alternatively, if a current coding unit is predicted with reference to adjacent data units, data adjacent to the current coding unit are searched for by using the encoding information of the data units, and adjacent coding units may be referred to.

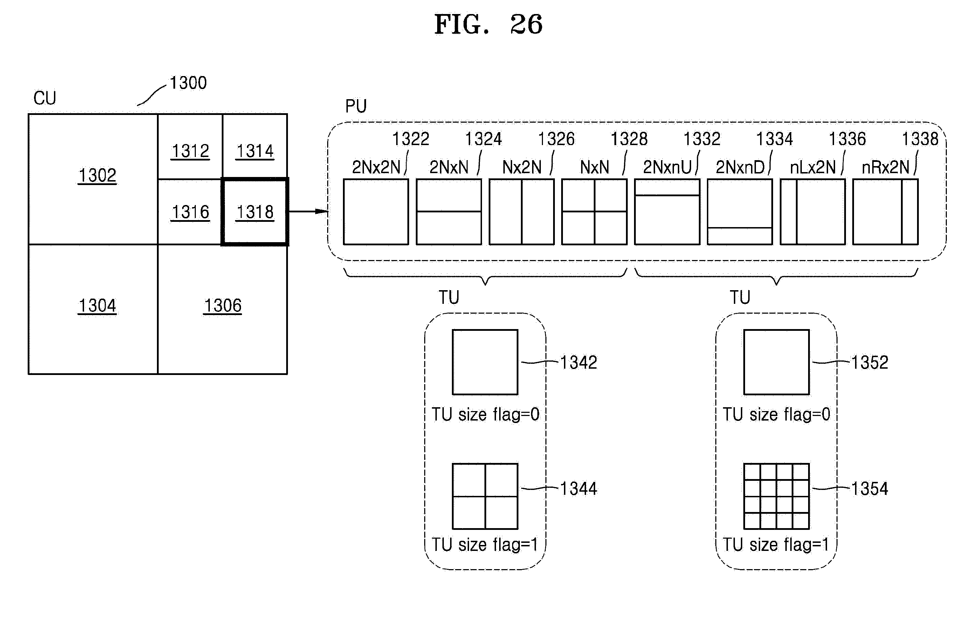

FIG. 26 is a diagram for describing a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information regarding a partition type of the coding unit 1318 having a size of 2Nx2N may be set to be any one selected from a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Transformation unit split information (TU size flag) is a type of a transformation index. A size of the transformation unit corresponding to the transformation index may be changed according to a prediction unit type or partition type of the coding unit.

For example, when the partition type is set to be symmetrical, i.e. the partition type 1322, 1324, 1326, or 1328, a transformation unit 1342 having a size of 2Nx2N is set if a TU size flag of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

Referring to FIG. 26, the TU size flag is a flag having a value or 0 or 1, but the TU size flag is not limited to 1 bit, and a transformation unit may be hierarchically split while the TU size flag increases from 0 depending on a setting. The TU size flag may be an example of a transformation index.

In this case, a size of the transformation unit that has been actually used may be expressed by using the TU size flag according to an embodiment of the present inventive concept together with a maximum size and minimum size of the transformation unit. The video encoding apparatus 100 is capable of encoding maximum transformation unit size information, minimum transformation unit size information, and maximum TU size flag. The result of encoding the maximum transformation unit size information, the minimum transformation unit size information, and the maximum TU size flag may be inserted into an SPS. The video decoding apparatus 200 may decode a video by using the maximum transformation unit size information, the minimum transformation unit size information, and the maximum TU size flag.

For example, (a) if a size of a current coding unit is 64x64 and a maximum transformation unit size is 32x32, (a-1) then the size of the transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag may not be set to a value other than 0, since the size of the transformation unit may not be less than 32x32.

As another example, (c) if the size of the current coding unit is 64x64 and a maximum TU size flag is 1, then the TU size flag may be 0 or 1. Here, the TU size flag may not be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that may be determined in a current coding unit, may be defined by Equation (1):

$$\text{CurrMinTuSize}$$
$$= \max(\text{MinTransformSize}, \text{RootTuSize}/(2^{\wedge}\text{MaxTransformSizeIndex})) \dots (1)$$

Compared to the current minimum transformation unit size 'CurrMinTuSize' that may be determined in the current coding unit, a transformation unit size 'RootTuSize' of when the TU size flag is 0 may denote a maximum transformation unit size that may be selected in the system. In Equation (1), 'RootTuSize/(2^MaxTransformSizeIndex)' denotes a transformation unit size obtained by splitting the transformation unit size 'RootTuSize' of when the TU size flag is 0 by a number of times corresponding to the maximum TU size flag, and 'MinTransformSize' denotes a minimum transformation size. Thus, a smaller value from among 'RootTuSize/(2^MaxTransformSizeIndex)' and 'MinTransform-Size' may be the current minimum transformation unit size 'CurrMinTuSize' that can be determined in the current coding unit.

According to an embodiment of the present inventive concept, the maximum transformation unit size 'RootTu-Size' may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$\text{RootTuSize} = \min(\text{MaxTransformSize}, \text{PUSize}) \dots\dots (2)$$

That is, if the current prediction mode is the inter mode, the transformation unit size 'RootTuSize' of when the TU size flag is 0 may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$\text{RootTuSize} = \min(\text{MaxTransformSize}, \text{PartitionSize}) \dots\dots (3)$$

That is, if the current prediction mode is the intra mode, the transformation unit size 'RootTuSize' of when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present inventive concept is not limited thereto.

According to the video encoding method based on coding units having a tree structure as described with reference to FIGS. 14 to 26, image data of a spatial domain is encoded for each coding unit of a tree structure. According to the video decoding method based on coding units having a tree structure, decoding is performed for each maximum coding unit to restore image data of a spatial domain. Thus, a picture and a video that is a picture sequence may be restored. The restored video may be reproduced by a reproducing apparatus, stored in a storage medium, or transmitted through a network.

The embodiments may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

For convenience of description, the video encoding method according to the multiview video prediction method, the multiview video prediction restoration method, or the multiview video encoding method described above with reference to FIGS. 1A to 20 will be collectively referred to as a 'video encoding method according to the present inventive concept.' In addition, the video decoding method according to the multiview video prediction restoration method or the multiview video decoding method described above with reference to FIGS. 1A to 20 will be referred to as a 'video decoding method according to the present inventive concept.'

Also, a video encoding apparatus including the multiview video prediction-encoding apparatus 10, the multiview video encoding apparatus 121, the video encoding apparatus 100, or the image encoder 400, which has been described with reference to FIGS. 1A to 26, will be referred to as a 'video encoding apparatus according to the present inventive concept.' In addition, a video decoding apparatus including the multiview video prediction-decoding apparatus 20, the multiview video decoding apparatus 131, the video decoding apparatus 200, or the image decoder 500, which has been described with reference to FIGS. 1A to 26, will be referred to as a 'video decoding apparatus according to the present inventive concept.'

A computer-readable recording medium storing a program, e.g., a disc 26000, according to an embodiment of the present inventive concept will now be described in detail.

FIG. 27 is a diagram of a physical structure of the disc 26000 in which a program is stored, according to an embodiment of the present inventive concept. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantization parameter determining method, the video encoding method, and the video decoding method described above may be assigned and stored.

A computer system embodied using a storage medium that stores a program for executing the video encoding method and the video decoding method as described above will be described with reference to FIG. 28.

FIG. 28 is a diagram of a disc drive 26800 for recording and reading a program by using the disc 26000. A computer system 27000 may store a program that executes at least one selected from the video encoding method and the video decoding method according to an embodiment of the present inventive concept, in the disc 26000 via the disc drive 26800. To run the program stored in the disc 26000 in the computer system 27000, the program may be read from the disc 26000 and be transmitted to the computer system 26700 by using the disc drive 27000.

The program that executes at least one selected from the video encoding method and the video decoding method according to an embodiment of the present inventive concept may be stored not only in the disc 26000 illustrated in FIG. 27 and 28 but also in a memory card, a ROM cassette, or a solid state drive (SSD).

A system to which the video encoding method and the video decoding method described above are applied will be described below.

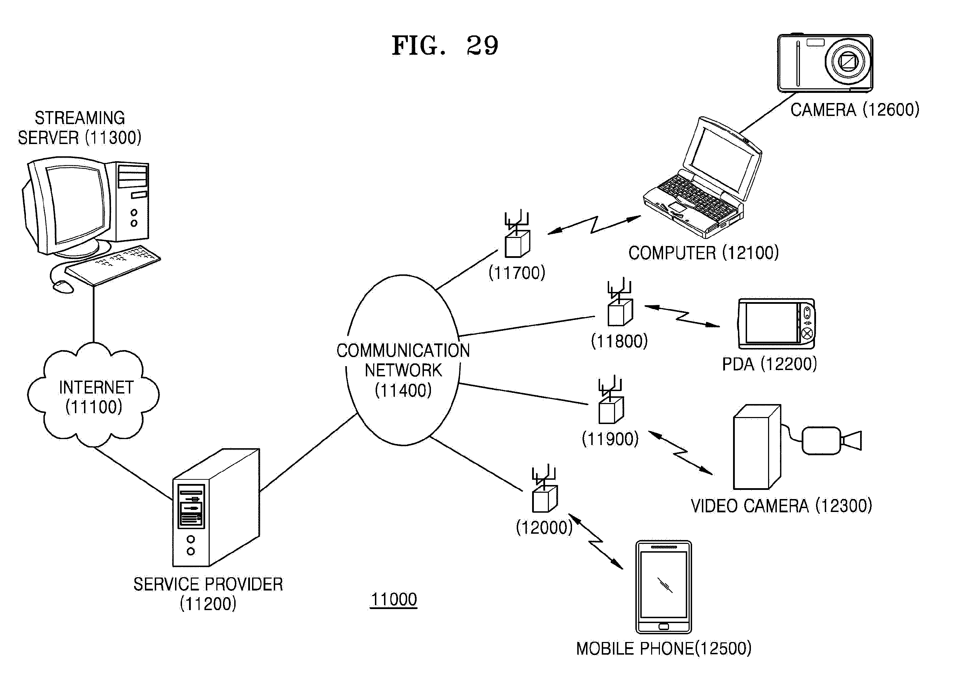

FIG. 29 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 29, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded by using the camera 12600 or the computer 12100. Software that performs encoding and decoding of a video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may be encoded by a large scale integrated circuit (LSI) system installed in the video camera 12300, the mobile phone 12500, or the camera 12600.

The content supply system 11000 may encode content data recorded by a user using the video camera 12300, the camera 12600, the mobile phone 12500, or other imaging devices, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to an embodiment of the present inventive concept.

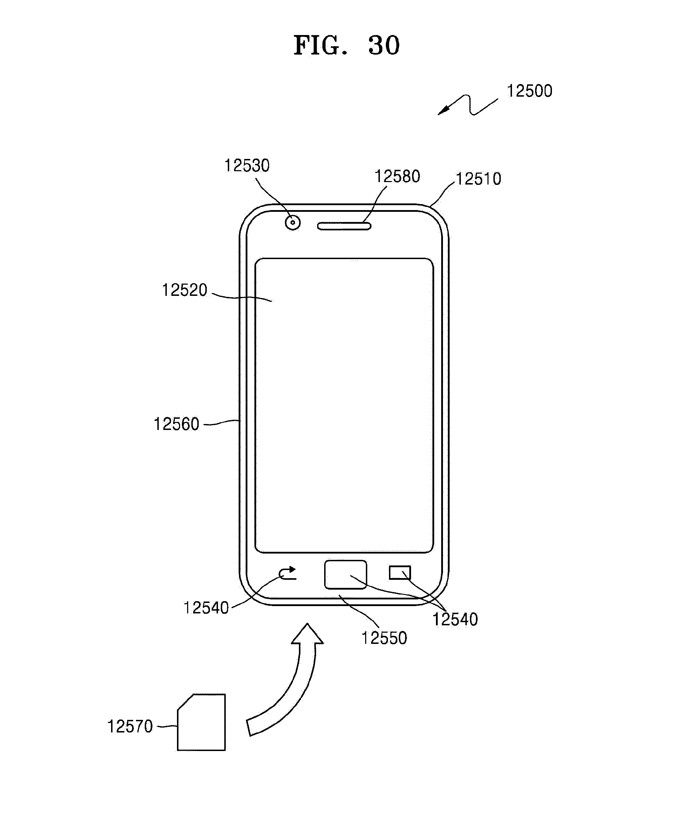

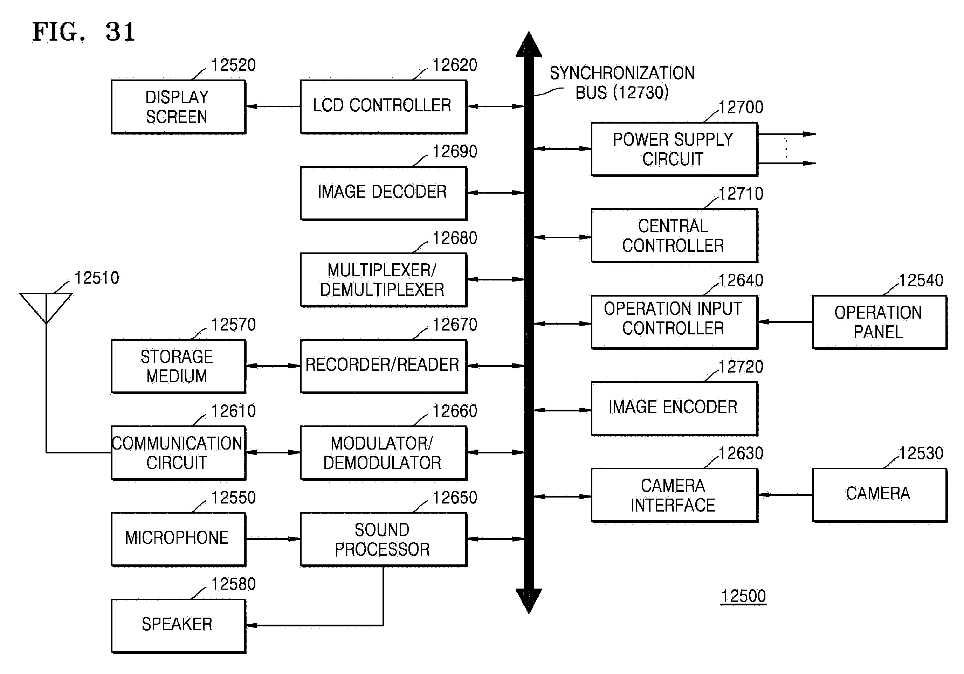

The mobile phone 12500 included in the content supply system 11000 according to an embodiment of the present inventive concept will now be described in greater detail with reference to FIGS. 30 and 31.

FIG. 30 illustrates an external structure of the mobile phone 12500 to which a video encoding method and a video decoding method are applied, according to an embodiment of the present inventive concept. The mobile phone 12500 may be a smart phone, the functions of which are not limited and many functions of which may be changed or expanded.

The mobile phone 12500 includes an internal antenna 12510 via which a radio-frequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound output unit, and a microphone 12550 for inputting voice and sound or another type sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 31 illustrates an internal structure of the mobile phone 12500, according to an embodiment of the present inventive concept. To systemically control parts of the mobile phone 12500 including the display screen 12520 and the operation panel 12540, a power supply circuit 12700, an operation input controller 12640, an image encoding unit 12720, a camera interface 12630, an LCD controller 12620, an image decoding unit 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoding unit 12720 may generate a digital image signal, and text data of a message may be generated via the operation panel 12540 and the operation input controller 12640. When a digital signal is transmitted to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. Under control of the central controller 12610, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoding unit 12720 via the camera interface 12630. The captured image data may be directly displayed on the display screen 12520 via the camera interface 12630 and the LCD controller 12620.

A structure of the image encoding unit 12720 may correspond to that of the video encoding apparatus 100 described above. The image encoding unit 12720 may transform the image data received from the camera 12530 into compressed and encoded image data according to the video encoding method described above, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoding unit 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, under control of the central controller 12710.

When data of a video file accessed at an Internet website is received in the data communication mode, a signal received from the wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoding unit 12690 may correspond to that of the video decoding apparatus 200 described above. The image decoding unit 12690 may decode the encoded video data to obtain restored video data and provide the restored video data to the display screen 12520 via the LCD controller 12620, according to a video decoding method employed by the video decoding apparatus 200 or the image decoder 500 described above.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to an embodiment of the present inventive concept, may be a transmitting terminal including only the video encoding apparatus, or may be a receiving terminal including only the video decoding apparatus.

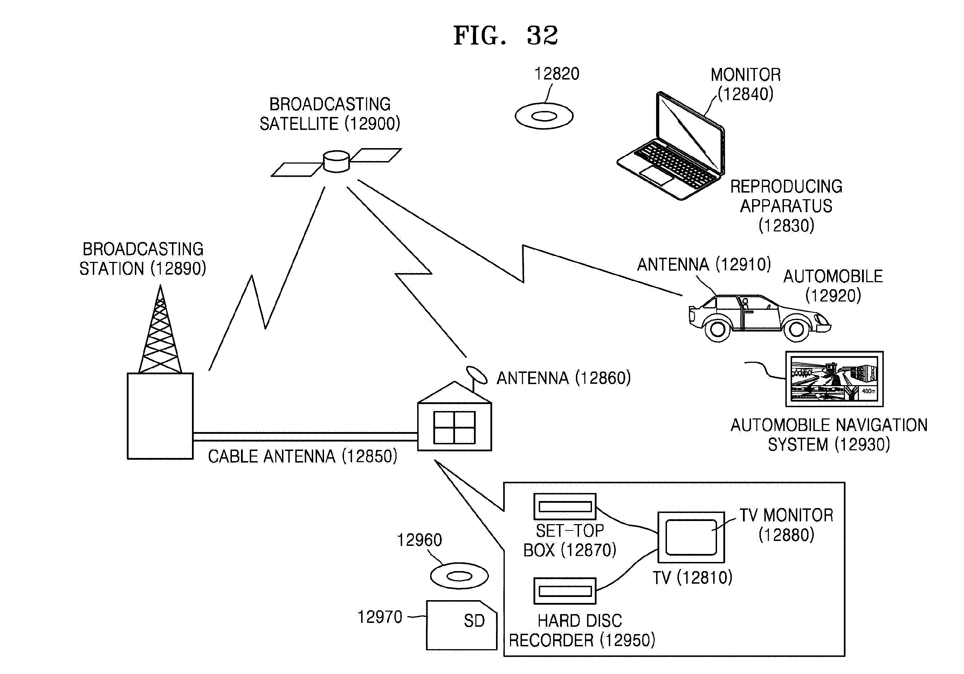

A communication system according to the present inventive concept is not limited to the communication system described above with reference to FIG. 30. For example, FIG. 32 illustrates a digital broadcasting system employing a communication system, according to an embodiment of the present inventive concept. The digital broadcasting system of FIG. 32 may receive a digital broadcast transmitted via a satellite or a terrestrial network by using a video encoding apparatus and a video decoding apparatus according to an embodiment of the present inventive concept.

In detail, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When a video decoding apparatus according to an embodiment of the present inventive concept is implemented in a reproducing apparatus 12830, the reproducing apparatus 12830 may parse and decode an encoded video stream recorded on a storage medium 12820, such as a disc or a memory card. Thus, a restored video signal may be reproduced, for example, on a monitor 12840.

In the set-top box 12870 connected to the antenna 12860 for a satellite/terrestrial broadcast or a cable antenna 12850for receiving a cable television (TV) broadcast, a video decoding apparatus according to an embodiment of the present inventive concept may be installed. Data output from the set-top box 12870 may also be reproduced on a TV monitor 12880.

As another example, a video decoding apparatus according to an embodiment of the present inventive concept may be installed in the TV receiver 12810 instead of the set-top box 12870.

An automobile 12920 that has an appropriate antenna 12910 may receive a signal transmitted from the satellite 12900 or the wireless base station 11700. A decoded video may be reproduced on a display screen of an automobile navigation system 12930 installed in the automobile 12920.

A video signal may be encoded by a video encoding apparatus according to an embodiment of the present inventive concept and may then be stored in a storage medium. In detail, an image signal may be stored in a DVD disc 12960 by a DVD recorder or may be stored in a hard disc by a hard disc recorder 12950. As another example, the video signal may be stored in an SD card 12970. If the hard disc recorder 12950 includes a video decoding apparatus according to an embodiment of the present inventive concept, a video signal recorded on the DVD disc 12960, the SD card 12970, or other storage media may be reproduced on the TV monitor 12880.

The automobile navigation system 12930 may not include the camera 12530, the camera interface 12630, and the image encoding unit 12720 of FIG. 31. For example, the computer 12100 and the TV receiver 12810 may not include the camera 12530, the camera interface 12630, and the image encoding unit 12720 of FIG. 2631.

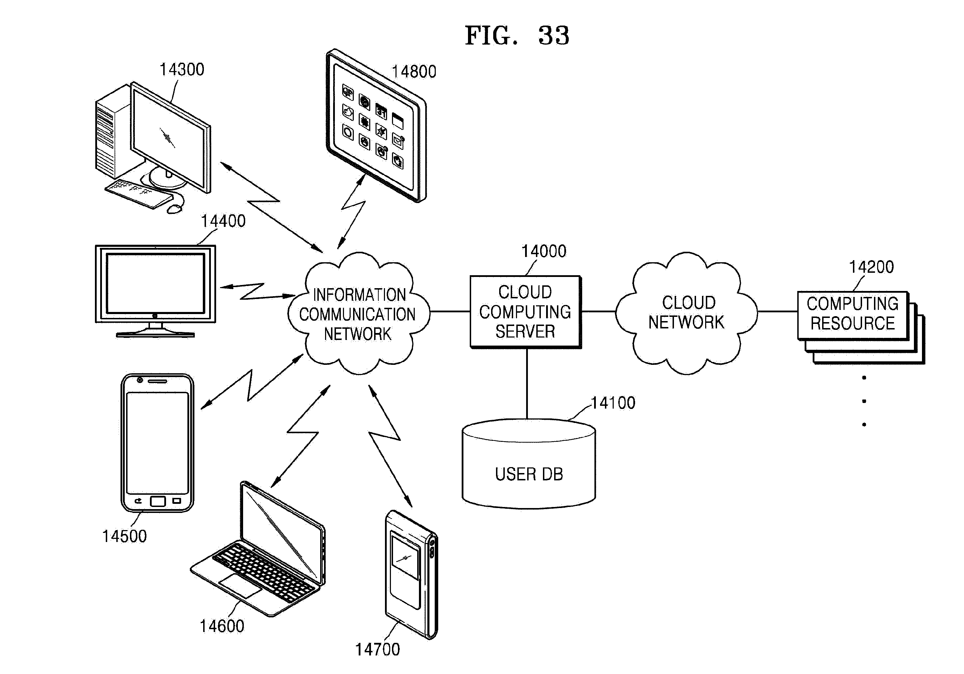

FIG. 33 is a diagram illustrating a network structure of a cloud computing system using a video encoding apparatus and a video decoding apparatus, according to an embodiment of the present inventive concept.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information regarding users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information regarding a video stored in the user DB 14100 may be shared between user devices. For example, when a video service is provided to the notebook computer 14600 in response to a request from the notebook computer 14600, a reproduction history of the video service is stored in the user DB 14100. When a request to reproduce the video service is received from the smart phone 14500, the cloud computing server 14000 searches for and reproduces the video service, based on the user DB 14100. When the smart phone 14500 receives a video data stream from the cloud computing server 14000, a process of reproducing video by decoding the video data stream is similar to operations of the mobile phone 12500 described above with reference to FIG. 30.

The cloud computing server 14000 may refer to a reproduction history of a desired video service, stored in the user DB 14100. For example, the cloud computing server 14000 receives a request to reproduce a video stored in the user DB 14100, from a user terminal. If the video was being reproduced, then a method of streaming the video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include a video decoding apparatus as described above with reference to FIGS. 1A to 26. As another example, the user terminal may include a video encoding apparatus as described above with reference to FIGS. 1A to 26. Alternatively, the user terminal may include both the video decoding apparatus and the video encoding apparatus as described above with reference to FIGS. 1A to 26.

Various applications of a video encoding method, a video decoding method, a video encoding apparatus, and a video decoding apparatus according to embodiments of the present inventive concept described above with reference to FIGS. 1A to 26 have been described above with reference to FIGS. 27 to 33. However, methods of storing the video encoding method and the video decoding method in a storage medium, or various embodiments of implementing the video encoding apparatus and the video decoding apparatus in a device, which have been described above with reference to FIGS. 1A to 26, are not limited to the embodiments described above with reference to FIGS. 27 to 33.

While the inventive concept has been particularly shown and described with reference to exemplary embodiments thereof, it will be understood that various changes in form and details may be made therein without departing from the spirit and scope of the following claims.

**Claims**

1. A method of prediction-encoding a multiview video, the method comprising:

   determining at least one reference picture list selected from a first reference picture list that includes, from among images of the same viewpoint as a current picture, at least one restored image having a reproduction order prior to that of the current picture and at least one restored image having the same reproduction order as the current picture and a view identifier (VID) lower than that of the current picture; and a second reference picture list that includes at least one restored image having the same viewpoint as the current picture and a reproduction order later than that of the current picture and at least one restored image having the same reproduction order as the current picture and a VID higher than that of the current picture;
   determining at least one reference picture and reference block with respect to a current block of the current picture by using the determined at least one reference picture list; and
   performing at least one selected from inter-prediction and inter-view prediction on the current block by using the reference block.

2. The method of claim 1, wherein the determining of the at least one reference picture list comprises:

   determining whether a reference order of reference indexes of the determined at least one reference picture list may be arbitrarily modified in a current slice; and
   when the reference order may be arbitrarily modified in the current slice, arbitrarily modifying the reference order of the reference indexes of the determined at least one reference picture list for the current slice in the current picture.

3. The method of claim 1, wherein the determining of the at least one reference picture list comprises:

   determining, with respect to a current picture, a first default number of at least one restored image having a reproduction order prior to that of the current picture and a second default number of at least one restored image having a VID lower than that of the current picture, from the first reference picture list, a third default number of at least one restored image having a reproduction order later than that of the current picture and a fourth default number of at least one restored image having a VID higher than that of the current picture, from the second reference picture list.

4. The method of claim 3, wherein the determining of the at least one reference picture list further comprises:

   determining whether or not at least one selected from the first and second default numbers of the first reference picture list and the third and fourth default numbers of the second reference picture list, which are determined with respect to the current picture, may be individually replaced in a current slice; and

when the default numbers may be individually replaced, in the current slice, determining at least one selected from a first active number of the at least one restored image having the reproduction order prior to that of the current picture and a second active number of the at least one restored image having the VID lower than that of the current picture, from the first reference picture list, a third active number of the at least one restored image having the reproduction order later than that of the current picture and a fourth active number of the at least one restored image having the VID higher than that of the current picture, from the second reference picture list.

5. The method of claim 3, wherein a maximum number of reference indexes included in the first reference picture list is a total sum of the first default number of the at least one restored image having the reproduction order prior to that of the current picture and the second default number of the at least one restored image having the VID lower than that of the current picture, in the first reference picture list; and

wherein a maximum number of reference indexes included in the second reference picture list is a total sum of the third default number of the at least one restored image having the reproduction order later than that of the current picture and the fourth default number of the at least one restored image in the second reference picture list having the VID higher than that of the current picture, in the second reference picture list.

6. The method of claim 1, wherein the performing of at least one selected from inter-prediction and inter-view prediction comprises:

when inter-prediction is performed, determining a reference picture and a reference block from at least one selected from the at least one restored image in the first reference picture list having the reproduction order prior to that of the current picture and the at least one restored image in the second reference picture list having the reproduction order later than that of the current picture; performing inter-prediction with respect to the current block by using the determined reference block; and determining first residue data of the current block generated by inter-prediction, a first motion vector indicating the determined reference block, and a first reference index indicating the determined reference picture; and

when inter-view prediction is performed, determining a reference picture and a reference block from at least one selected from the at least one selected from the at least one restored image in the first reference picture list having the VID lower than that of the current picture and the at least one restored image in the second reference picture list having the VID higher than that of the current picture; and determining second residue data of current block generated by inter-view prediction, a second motion vector indicating the determined reference block, and a second reference index indicating the determined reference picture.

7. A method of prediction-decoding a multiview video, the method comprising:

determining at least one reference picture list selected from a first reference picture list that includes, from among images of the same viewpoint as a current picture, at least one restored image having a reproduction order prior to that of the current picture and at least one restored image having the same reproduction order as the current picture and a view identifier (VID) lower than that of the current picture, and a second reference picture list that includes at least one restored image having the same viewpoint as the current picture and a reproduction order later than that of the current picture and at least one restored image having the same reproduction order as the current picture and a VID higher than that of the current picture;

determining at least one reference picture and reference block with respect to a current block of the current picture by using the determined at least one reference picture list; and

performing at least one selected from motion compensation and disparity compensation on the current block by using the reference block.

8. The method of claim 7, wherein the determining of the at least one reference picture list comprises:

determining whether a reference order of reference indexes of the determined at least one reference picture list may be arbitrarily modified in a current slice; and

when the reference order may be arbitrarily modified in the current slice, arbitrarily modifying the reference order of the reference indexes of the determined at least one reference picture list for the current slice.

9. The method of claim 7, wherein the determining of the at least one reference picture list comprises:

determining, with respect to a current picture, a first default number of at least one restored image having a reproduction order prior to that of the current picture and a second default number of at least one restored image having a VID lower than that of the current picture, from the first reference picture list, a third default number of at least one restored image having a reproduction order later than that of the current picture and a fourth default number of at least one restored image having a VID higher than that of the current picture, from the second reference picture list.

10. The method of claim 9, wherein the determining of the at least one reference picture list further comprises:

determining whether or not at least one selected from the first and second default numbers of the first reference picture list and the third and fourth default numbers of the second reference picture list, which are determined with respect to the current picture, may be individually replaced in a current slice; and
when the default numbers may be individually replaced, in the current slice, determining at least one selected from a first active number of the at least one restored image having the reproduction order prior to that of the current picture and a second active number of the at least one restored image having the VID lower than that of the current picture, from the first reference picture list, a third active number of the at least one restored image having the reproduction order later than that of the current picture and a fourth active number of the at least one restored image having the VID higher than that of the current picture, from the second reference picture list.

11. The method of claim 9, wherein a maximum number of reference indexes included in the first reference picture list is a total sum of the first default number of the at least one restored image having the reproduction order prior to that of the current picture and the second default number of the at least one restored image having the VID lower than that of the current picture, in the first reference picture list; and
wherein a maximum number of reference indexes included in the second reference picture list is a total sum of the third default number of the at least one restored image having the reproduction order later than that of the current picture and the fourth default number of the at least one restored image in the second reference picture list having the VID higher than that of the current picture, in the second reference picture list.

12. The method of claim 7, wherein the performing of at least one selected from motion compensation and disparity compensation comprises:

receiving a reference index, residue data and a motion vector or a disparity vector for the current block of the current picture;
determining a reference picture from at least one selected from the at least one restored image in the first reference picture list having the reproduction order prior to that of the current picture and the at least one restored image in the second reference picture list having the reproduction order later than that of the current picture;
performing inter-prediction with respect to the current block by using the determined reference block;
determining a reference block that is indicated by the motion vector or the disparity vector of the current block, from the determined reference picture; and
compensating the residue data for the determined reference block.

13. An apparatus for prediction-encoding a multiview video, the apparatus comprising:

a reference picture list determination unit determining at least one reference picture list selected from a first reference picture list that includes, from among images of the same viewpoint as a current picture, at least one restored image having a reproduction order prior to that of the current picture and at least one restored image having the same reproduction order as the current picture and a view identifier (VID) lower than that of the current picture; and a second reference picture list that includes at least one restored image having the same viewpoint as the current picture and a reproduction order later than that of the current picture and at least one restored image having the same reproduction order as the current picture and a VID higher than that of the current picture; and
a prediction unit determining at least one reference picture and reference block with respect to a current block of the current picture by using the determined at least one reference picture list; and performing at least one selected from inter-prediction and inter-view prediction on the current block by using the reference block.

14. An apparatus for prediction-decoding a multiview video, the apparatus comprising:

a reference picture list determination unit determining at least one reference picture list selected from a first reference picture list that includes, from among images of the same viewpoint as a current picture, at least one restored image having a reproduction order prior to that of the current picture and at least one restored image having the same reproduction order as the current picture and a view identifier (VID) lower than that of the current picture; and a second reference picture list that includes at least one restored image having the same viewpoint as the current picture and a reproduction order later than that of the current picture and at least one restored image having the same reproduction order as the current picture and a VID higher than that of the current picture; and

a compensation unit determining at least one reference picture and reference block with respect to a current block of the current picture by using the determined at least one reference picture list; and performing at least one selected from motion compensation and disparity compensation on the current block by using the reference block.

15. A non-transitory computer-readable recording medium having recorded thereon a program, which, when executed by a computer, performs the method of any one of claims 1 and 7.

# FIG. 1A

/10

```
      ,12                        ,14
┌─────────────────┐      ┌─────────────────┐
│   REFERENCE     │      │                 │
│  PICTURE LIST   │─────▶│   PREDICTION    │────▶
│  DETERMINATION  │      │      UNIT       │
│      UNIT       │      │                 │
└─────────────────┘      └─────────────────┘
```

# FIG. 1B

( START )

┌─────────────────────────────────────────────────────────────┐
│ DETERMINE AT LEAST ONE REFERENCE PICTURE LIST                 │
│ SELECTED FROM FIRST REFERENCE PICTURE LIST INCLUDING          │
│ RESTORED SAME VIEW IMAGE HAVING REPRODUCTION                  │
│ ORDER PRIOR THAN THAT OF CURRENT PICTURE AND RESTORED         │
│ IMAGE OF SAME REPRODUCTION ORDER AS CURRENT                   │── 11
│ PICTURE AND LOWER VID THAN THAT OF CURRENT PICTURE;           │
│ AND SECOND REFERENCE PICTURE LIST INCLUDING                   │
│ RESTORED SAME VIEW IMAGE HAVING REPRODUCTION ORDER            │
│ PRIOR THAN THAT OF CURRENT PICTURE AND RESTORED IMAGE         │
│ OF SAME REPRODUCTION ORDER AS CURRENT PICTURE                 │
│ AND LOWER VID THAN THAT OF CURRENT PICTURE                    │
└─────────────────────────────────────────────────────────────┘

┌─────────────────────────────────────────────────────────────┐
│ DETERMINE REFERENCE PICTURE AND REFERENCE BLOCK FOR           │── 13
│ CURRENT BLOCK BY USING REFERENCE PICTURE LIST                 │
└─────────────────────────────────────────────────────────────┘

┌─────────────────────────────────────────────────────────────┐
│ PERFORM AT LEAST ONE SELECTED FROM INTER-PREDICTION AND       │
│ INTER-VIEW PREDICTION ON CURRENT BLOCK BY USING REFERENCE     │── 15
│ BLOCK                                                         │
└─────────────────────────────────────────────────────────────┘

( END )

# FIG. 2A

```
                                                        20

        ┌─────────────┐ 22        ┌─────────────┐ 24
        │  REFERENCE  │           │             │
───────▶│ PICTURE LIST│──────────▶│ COMPENSATION│──────▶
        │DETERMINATION│           │    UNIT     │
        │    UNIT     │           │             │
        └─────────────┘           └─────────────┘
```

# FIG. 2B

```
                    ( START )
                        │
                        ▼
```

DETERMINE AT LEAST ONE REFERENCE PICTURE LIST
SELECTED FROM FIRST REFERENCE PICTURE LIST INCLUDING
RESTORED SAME VIEW IMAGE HAVING REPRODUCTION
ORDER PRIOR THAN THAT OF CURRENT PICTURE AND RESTORED
IMAGE OF SAME REPRODUCTION ORDER AS CURRENT
PICTURE AND LOWER VID THAN THAT OF CURRENT PICTURE;
AND SECOND REFERENCE PICTURE LIST INCLUDING
RESTORED SAME VIEW IMAGE HAVING REPRODUCTION ORDER
PRIOR THAN THAT OF CURRENT PICTURE AND RESTORED IMAGE
OF SAME REPRODUCTION ORDER AS CURRENT PICTURE
AND LOWER VID THAN THAT OF CURRENT PICTURE — 21

DETERMINE REFERENCE PICTURE AND REFERENCE BLOCK FOR
CURRENT BLOCK BY USING REFERENCE PICTURE LIST — 23

PERFORM AT LEAST ONE SELECTED FROM MOTION COMPENSATION
AND DISPARITY COMPENSATION ON CURRENT BLOCK BY USING
REFERENCE BLOCK — 25

```
                    ( END )
```

# FIG. 3

# FIG. 4

DPB (VID = 5, POC = 18) ⎯⎯ 40

| VID 5 POC 16 | VID 5 POC 17 | VID 5 POC 19 | VID 1 POC 18 | VID 3 POC 18 | VID 7 POC 18 |
|---|---|---|---|---|---|
| 33 | 32 | 34 | 36 | 35 | 37 |

| | 32 | 33 | 34 | 35 | 36 | 37 |
|---|---|---|---|---|---|---|
| 41 — DEFAULT L0 LIST | VID 5 POC 17 | VID 5 POC 16 | VID 5 POC 19 | VID 3 POC 18 | VID 1 POC 18 | VID 7 POC 18 |

| | | | | | | |
|---|---|---|---|---|---|---|
| 45 — DEFAULT L1 LIST | VID 5 POC 19 | VID 5 POC 17 | VID 5 POC 16 | VID 7 POC 18 | VID 3 POC 18 | VID 1 POC 18 |
| | 34 | 32 | 33 | 37 | 35 | 36 |

# FIG. 5A

50

| | Idx | 0 | 1 | 2 | 3 | 4 | 5 |
|---|---|---|---|---|---|---|---|
| 51 → | Idx | 0 | 1 | 2 | 3 | 4 | 5 |
| 55 → | List_entry_l0 | 0 | 3 | 1 | 2 | 4 | 5 |

# FIG. 5B

|  | 32 | 33 | 34 | 35 | 36 | 37 |
|---|---|---|---|---|---|---|
| 41 — DEFAULT L0 LIST | VID 5 POC 17 | VID 5 POC 16 | VID 5 POC 19 | VID 3 POC 18 | VID 1 POC 18 | VID 7 POC 18 |
| 59 — MODIFIED L0 LIST | VID 5 POC 17 | VID 5 POC 18 | VID 5 POC 16 | VID 7 POC 19 | VID 1 POC 18 | VID 7 POC 18 |
|  | 32 | 35 | 33 | 34 | 36 | 37 |

# FIG. 6

60

```
pic_parameter_set_3D_rbsp( ) {
    pic_parameter_set_3D_rbsp( ) {
    seq_parameter_set_id
    sign_data_hiding_flag
    if( sign_data_hiding _flag )
        sign_hiding_threshold
    cabac_init_present_flag
61 —— num_ref_idx_l0_default_active_minus1
62 —— num_interview_ref_idx_l0_default_active_minus1
63 —— num_ref_idx_l1_default_active_minus1
64 —— num_interview_ref_idx_l1_default_active_minus1
    pic_init_qp_minus26
    constrained_intra_pred_flag
    enable_temporal_mvp_flag
    slice_granularity
```

# FIG. 7

70

```
slice_header( ) {

                ..............

        if( slice_type  = =  P  | |  slice_type  = =  B ) {
71          num_ref_idx_active_override_flag
        if( num_ref_idx_active_override_flag ) {
72              num_ref_idx_l0_active_minus1
            if( nal_unit_type = = CODED_SLICE_EXTENSION )
73                  num_interview_ref_idx_l0_active_minus1
            if( slice_type  = =  B ) {
74                  num_ref_idx_l1_active_minus1
                if( nal_unit_type = = CODED_SLICE_EXTENSION )
75                      num_interview_ref_idx_l1_active_minus1
                }
            }
        }
76      if( lists_modification_present_flag ) {
            if( nal_unit_type = = CODED_SLICE_EXTENSION ) {
77              ref_pic_list_3D_modification( )
                ref_pic_list_3D_combination( )
                }
            else {
                ref_pic_list_modification( )
                ref_pic_list_combination( )
                }
            }
        if( slice_type = = B )
            mvd_l1_zero_flag
        }
                ..............
    }
```

## FIG. 8

```
77
ref_pic_list_3D_modification( ) {
    if( slice_type  = =  P  | |  slice_type  = =  B ) {
81 ──      ref_pic_list_modification_flag_l0
        if( ref_pic_list_modification_flag_l0 )
            for( i = 0; i <= num_total_ref_idx_l0_active_minus1;  i++ )
82 ──              list_entry_l0[ i ]                              83
    }
    if( slice_type  = =  B ) {
84 ──      ref_pic_list_modification_flag_l1
        if( ref_pic_list_modification_flag_l1)
            for( i = 0; i <= num_total ref_idx_l1_active_minus1;  i++ )
85 ──              list_entry_l1 [ i ]                             86
    }
}
```

## FIG. 9

## FIG. 10

| Idx | 0 | 1 | 2 | 3 | 4 | 5 |
|---|---|---|---|---|---|---|
| 103 — pic_from_list_0_flag | 0 | 1 | 0 | 1 | 0 | 0 |
| 105 — ref_idx_list_curr | 0 | 0 | 3 | 3 | 1 | 2 |

## FIG. 11

111

MODIFIED LC LIST

| VID 5 POC 17 | VID 5 POC 19 | VID 3 POC 18 | VID 7 POC 18 | VID 5 POC 16 | VID 5 POC 19 |
|---|---|---|---|---|---|
| 32 | 34 | 35 | 37 | 33 | 34 |

# FIG. 12

121

| 42 |
|---|
| DPB |

| 10 | 46 | 48 |
|---|---|---|
| MULTIVIEW VIDEO PREDICTION-ENCODING APPARATUS | TRANSFORMATION QUANTIZER | ENTROPY ENCODER |

# FIG. 13

131

| 52 | 54 | 20 | 59 |
|---|---|---|---|
| RECEIVER | INVERSE QUANTIZATION INVERSE TRANSFORMATION UNIT | MULTIVIEW VIDEO PREDICTION-DECODING APPARATUS | IN-LOOP FILTERING UNIT |

| 56 |
|---|
| DPB |

# FIG. 14

100

| 110 | 120 | 130 |
|---|---|---|
| MAXIMUM CODING UNIT SPLITTER | CODING UNIT DETERMINER | OUTPUT UNIT |

# FIG. 15

200

| 210 | 220 | 230 |
|---|---|---|
| RECEIVER | IMAGE DATA AND ENCODING INFORMATION EXTRACTOR | IMAGE DATA DECODER |

# FIG. 16

RESOLUTION:1920×1080
MAXIMUM SIZE OF CODING UNIT:64
MAXIMUM DEPTH=2

315

310

RESOLUTION:1920×1080
MAXIMUM SIZE OF CODING UNIT:64
MAXIMUM DEPTH=3

320

RESOLUTION:352×288
MAXIMUM SIZE OF CODING UNIT:16
MAXIMUM DEPTH=1

330

335  325

64×64   64×32   32×64   32×32

32×32   32×16   16×32   16×16

16×16   16×8   8×16   8×8

8×8   8×4   4×8   4×4

# FIG. 17

# FIG. 18

EP 2 838 264 A1

# FIG. 19

MAXIMUM HEIGHT
AND MAXIMUM
WIDTH OF
CODING UNIT=64    MAXIMUM DEPTH =3

LCU

SCU

DEEPER CODING UNIT

PREDICTION
UNIT/
PARTITION

600

| 64  /610 | 64  /612 | 32  /614 | 32  /616 |
|---|---|---|---|
| 64  64×64 | 32  64×32 | 64  32×64 | 32  32×32 |
| 32  /620 | 32  /622 | 16  /624 | 16  /626 |
| 32  32×32 | 16  32×16 | 32  16×32 | 16  16×16 |
| 16  /630 | 16  /632 | 8  /634 | 8  /636 |
| 16  16×16 | 8  16×8 | 16  8×16 | 8  8×8 |
| 8  /640 | 8  /642 | 4  /644 | 4  /646 |
| 8  8×8 | 4  8×4 | 8  4×8 | 4  4×4 |

# FIG. 20

CODING UNIT (710)

TRANSFORMATION UNIT (720)

64

32

64×64

32×32

32

# FIG. 21

PARTITION TYPE (800)

2N ⎓802    2N ⎓804    N ⎓806    N ⎓808

2N  CU_0

N  0
   1

2N  0  1

N  0  1
   2  3

64×64

PREDICTION MODE (810)

⎓812
INTRA MODE

⎓814
INTER MODE

⎓816
SKIP MODE

SIZE OF TRANSFORMATION UNIT (820)

⎓822  ⎓824

⎓826  ⎓828

INTRA

INTER

# FIG. 22

DEPTH=0

2N_0

2N_0 | CU_0 | — 900

910

2N_0

2N_0 | | 912

2N_0

N_0 | 0 |
| 1 | 914

N_0

2N_0 | 0 | 1 | 916

N_0

N_0 | 0 | 1 |
| 2 | 3 | 918

SPLIT (920)

| 0 | 1 |
| 2 | 3 | → 930

DEPTH =1

2N_1

2N_1 | CU_1 | — 930

940

2N_1

2N_1 | | 942

2N_1

N_1 | 0 |
| 1 | 944

N_1

2N_1 | 0 | 1 | 946

N_1

N_1 | 0 | 1 |
| 2 | 3 | 948

SPLIT (950)

| 0 | 1 |
| 2 | 3 | → 960

SPLIT (970)

DEPTH =d−1

2N_(d−1)

2N_(d−1) | CU_(d−1) | — 980

990

2N_(d−1)

2N_(d−1) | | 992

2N_(d−1)

N_(d−1) | 0 |
| 1 | 994

N_(d−1)

2N_(d−1) | 0 | 1 | 996

N_(d−1)

N_(d−1) | 0 | 1 |
| 2 | 3 | 998

2N_d

2N_d | | — 999

EP 2 838 264 A1

53

FIG. 23

CODING UNIT (1010)

FIG. 24

PREDICTION UNIT (1060)

# FIG. 25

1014 — 
— 1016

— 1022

1032

— 1048

— 1054

1050   1052   TRANSFORMATION UNIT (1070)

## FIG. 26

CU

1300

| | | |
|---|---|---|
| 1302 | 1312 | 1314 |
| | 1316 | **1318** |
| 1304 | 1306 | |

PU

| 1322 | 1324 | 1326 | 1328 | 1332 | 1334 | 1336 | 1338 |
|---|---|---|---|---|---|---|---|
| 2Nx2N | 2NxN | Nx2N | NxN | 2NxnU | 2NxnD | nLx2N | nRx2N |

TU

1342
TU size flag=0

1344
TU size flag=1

TU

1352
TU size flag=0

1354
TU size flag=1

EP 2 838 264 A1

# FIG. 27

# FIG. 28

FIG. 29

STREAMING SERVER (11300)

CAMERA (12600)

COMPUTER (12100)

(11700)

INTERNET (11100)

COMMUNICATION NETWORK (11400)

(11800)

PDA (12200)

(11900)

VIDEO CAMERA (12300)

(12000)

SERVICE PROVIDER (11200)

11000

MOBILE PHONE(12500)

EP 2 838 264 A1

# FIG. 30

12500

12530    12580    12510

12520

12560

12540

12550    12540

12570

**FIG. 31**

# FIG. 32

EP 2 838 264 A1

# FIG. 33

14300

14800

14400

14000

CLOUD
COMPUTING
SERVER

14200

COMPUTING
RESOURCE

INFORMATION
COMMUNICATION
NETWORK

CLOUD
NETWORK

14100

USER DB

14500

14600

14700

EP 2 838 264 A1

## INTERNATIONAL SEARCH REPORT

International application No.

**PCT/KR2013/003459**

| A. CLASSIFICATION OF SUBJECT MATTER |
|---|
| ***H04N 7/36(2006.01)i*** |
| According to International Patent Classification (IPC) or to both national classification and IPC |

| B. FIELDS SEARCHED |
|---|
| Minimum documentation searched (classification system followed by classification symbols) <br> H04N 7/36; H04N 7/24; H04N 13/00; H04N 7/32; H04N 7/12 |
| Documentation searched other than minimum documentation to the extent that such documents are included in the fields searched <br> Korean Utility models and applications for Utility models: IPC as above <br> Japanese Utility models and applications for Utility models: IPC as above |
| Electronic data base consulted during the international search (name of data base and, where practicable, search terms used) <br> eKOMPASS (KIPO internal) & Keywords: multi-view point, video, restoration, reference and similar terms |

| C. DOCUMENTS CONSIDERED TO BE RELEVANT | | |
|---|---|---|
| Category* | Citation of document, with indication, where appropriate, of the relevant passages | Relevant to claim No. |
| X <br> Y <br> A | KR 10-2008-0034752 A (UNIVERSITY-INDUSTRY COOPERATION GROUP OF KYUNG HEE UNIVERSITY) 22 April 2008 <br> See paragraphs [0116]-[0155], [0264]-[0285]; and figure 12. | 1,7,13-15 <br> 2,8 <br> 3-6,9-12 |
| Y | KR 10-2009-0099093 A (LG ELECTRONICS INC.) 21 September 2009 <br> See paragraphs [0049], [0129]; and figure 13. | 2,8 |
| A | US 2010-0189173 A1 (CHEN, Ying et al.) 29 July 2010 <br> See paragraphs [0094]-[0102]; figures 5-6; and claim 1. | 1-15 |
| A | US 2008-0089428 A1 (NAKAMURA, Hiroya et al.) 17 April 2008 <br> See paragraphs [0072]-[0080], [0185]-[0201]; figures 2-3, 15. | 1-15 |
| A | US 2010-0091844 A1 (JEON, Byeong Moon et al.) 15 April 2010 <br> See paragraphs [0079]-[0084], [0100]-[0104]; and figures 3-4. | 1-15 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 AUGUST 2013 (27.08.2013) | **27 AUGUST 2013 (27.08.2013)** |

| Name and mailing address of the ISA/KR | Authorized officer |
|---|---|
| Korean Intellectual Property Office <br> Government Complex-Daejeon, 189 Seonsa-ro, Daejeon 302-701, Republic of Korea <br> Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/003459**

| Patent document cited in search report | Publication date | Patent family member | Publication date |
|---|---|---|---|
| KR 10-2008-0034752 A | 22/04/2008 | NONE | |
| KR 10-2009-0099093 A | 21/09/2009 | AU 2007-232607 A1 | 11/10/2007 |
| | | AU 2007-232607 B2 | 16/09/2010 |
| | | CA 2647735 A1 | 11/10/2007 |
| | | CN 101449585 A | 03/06/2009 |
| | | CN 101455082 A | 10/06/2009 |
| | | CN 101455082 B | 13/02/2013 |
| | | CN 101455084 A | 10/06/2009 |
| | | CN 101461242 A | 17/06/2009 |
| | | CN 101461242 B | 03/08/2011 |
| | | CN 101473655 A | 01/07/2009 |
| | | CN 101473655 B | 08/06/2011 |
| | | CN 101491095 A | 22/07/2009 |
| | | EP 2008460 A1 | 31/12/2008 |
| | | EP 2008461 A1 | 31/12/2008 |
| | | EP 2025170 A1 | 18/02/2009 |
| | | EP 2030450 A1 | 04/03/2009 |
| | | JP 05054092 B2 | 03/08/2012 |
| | | JP 05055353 B2 | 03/08/2012 |
| | | JP 05055354 B2 | 03/08/2012 |
| | | JP 05055355 B2 | 03/08/2012 |
| | | JP 2009-532930 A | 10/09/2009 |
| | | JP 2009-532931 A | 10/09/2009 |
| | | JP 2009-532932 A | 10/09/2009 |
| | | JP 2009-532933 A | 10/09/2009 |
| | | JP 2009-532934 A | 10/09/2009 |
| | | KR 10-0934671 B1 | 31/12/2009 |
| | | KR 10-0934672 B1 | 31/12/2009 |
| | | KR 10-0934673 B1 | 31/12/2009 |
| | | KR 10-0934674 B1 | 31/12/2009 |
| | | KR 10-0934675 B1 | 31/12/2009 |
| | | KR 10-0937431 B1 | 18/01/2010 |
| | | KR 10-0943911 B1 | 24/02/2010 |
| | | KR 10-0949974 B1 | 29/03/2010 |
| | | KR 10-0949975 B1 | 29/03/2010 |
| | | KR 10-0949976 B1 | 29/03/2010 |
| | | KR 10-0949977 B1 | 29/03/2010 |
| | | KR 10-0949978 B1 | 29/03/2010 |
| | | KR 10-0949979 B1 | 29/03/2010 |
| | | KR 10-0949980 B1 | 29/03/2010 |
| | | KR 10-0949981 B1 | 29/03/2010 |
| | | KR 10-0949982 B1 | 29/03/2010 |
| | | KR 10-0949983 B1 | 29/03/2010 |
| | | KR 10-0959536 B1 | 27/05/2010 |
| | | KR 10-0959537 B1 | 27/05/2010 |
| | | KR 10-0959538 B1 | 27/05/2010 |
| | | KR 10-0966567 B1 | 29/06/2010 |
| | | KR 10-0966568 B1 | 29/06/2010 |

Form PCT/ISA/210 (patent family annex) (July 2009)

INTERNATIONAL SEARCH REPORT
Information on patent family members

International application No.

**PCT/KR2013/003459**

| Patent document cited in search report | Publication date | Patent family member | Publication date |
|---|---|---|---|
| | | KR 10-0966569 B1 | 30/06/2010 |
| | | KR 10-0998912 B1 | 08/12/2010 |
| | | KR 10-2007-0098428 A | 05/10/2007 |
| | | KR 10-2007-0098429 A | 05/10/2007 |
| | | KR 10-2007-0098430 A | 05/10/2007 |
| | | KR 10-2007-0098437 A | 05/10/2007 |
| | | KR 10-2007-0111947 A | 22/11/2007 |
| | | KR 10-2007-0111968 A | 22/11/2007 |
| | | KR 10-2007-0111969 A | 22/11/2007 |
| | | KR 10-2007-0116527 A | 10/12/2007 |
| | | KR 10-2007-0120416 A | 24/12/2007 |
| | | KR 10-2008-0007069 A | 17/01/2008 |
| | | KR 10-2008-0007086 A | 17/01/2008 |
| | | KR 10-2008-0007177 A | 17/01/2008 |
| | | KR 10-2008-0008944 A | 24/01/2008 |
| | | KR 10-2008-0015713 A | 20/02/2008 |
| | | KR 10-2008-0015714 A | 20/02/2008 |
| | | KR 10-2008-0015746 A | 20/02/2008 |
| | | KR 10-2008-0015760 A | 20/02/2008 |
| | | KR 10-2008-0022055 A | 10/03/2008 |
| | | KR 10-2008-0022063 A | 10/03/2008 |
| | | KR 10-2008-0035429 A | 23/04/2008 |
| | | KR 10-2008-0036910 A | 29/04/2008 |
| | | KR 10-2008-0050349 A | 05/06/2008 |
| | | KR 10-2008-0055685 A | 19/06/2008 |
| | | KR 10-2008-0055686 A | 19/06/2008 |
| | | KR 10-2010-0074314 A | 01/07/2010 |
| | | US 2009-0279608 A1 | 12/11/2009 |
| | | US 2009-0296811 A1 | 03/12/2009 |
| | | US 2010-0020870 A1 | 28/01/2010 |
| | | US 2010-0026882 A1 | 04/02/2010 |
| | | US 2010-0026883 A1 | 04/02/2010 |
| | | US 2010-0026884 A1 | 04/02/2010 |
| | | US 2010-0027653 A1 | 04/02/2010 |
| | | US 2010-0027654 A1 | 04/02/2010 |
| | | US 2010-0027659 A1 | 04/02/2010 |
| | | US 2010-0027660 A1 | 04/02/2010 |
| | | US 2010-0027682 A1 | 04/02/2010 |
| | | US 2010-0046619 A1 | 25/02/2010 |
| | | US 2010-0074334 A1 | 25/03/2010 |
| | | US 2010-0080293 A1 | 01/04/2010 |
| | | US 2010-0086036 A1 | 08/04/2010 |
| | | US 2010-0091843 A1 | 15/04/2010 |
| | | US 2010-0091844 A1 | 15/04/2010 |
| | | US 2010-0091845 A1 | 15/04/2010 |
| | | US 2010-0091883 A1 | 15/04/2010 |
| | | US 2010-0091884 A1 | 15/04/2010 |
| | | US 2010-0091885 A1 | 15/04/2010 |
| | | US 2010-0091886 A1 | 15/04/2010 |
| | | US 2010-0104012 A1 | 29/04/2010 |

Form PCT/ISA/210 (patent family annex) (July 2009)

65

INTERNATIONAL SEARCH REPORT
Information on patent family members

International application No.

**PCT/KR2013/003459**

| Patent document cited in search report | Publication date | Patent family member | Publication date |
|---|---|---|---|
| | | US 2010-0104014 A1 | 29/04/2010 |
| | | US 2010-0111169 A1 | 06/05/2010 |
| | | US 2010-0111170 A1 | 06/05/2010 |
| | | US 2010-0111171 A1 | 06/05/2010 |
| | | US 2010-0111172 A1 | 06/05/2010 |
| | | US 2010-0111173 A1 | 06/05/2010 |
| | | US 2010-0111174 A1 | 06/05/2010 |
| | | US 2010-0128787 A1 | 27/05/2010 |
| | | US 2010-0150234 A1 | 17/06/2010 |
| | | US 2010-0150235 A1 | 17/06/2010 |
| | | US 2010-0150236 A1 | 17/06/2010 |
| | | US 2010-0158112 A1 | 24/06/2010 |
| | | US 2010-0158113 A1 | 24/06/2010 |
| | | US 2010-0158114 A1 | 24/06/2010 |
| | | US 2010-0158117 A1 | 24/06/2010 |
| | | US 2010-0158118 A1 | 24/06/2010 |
| | | US 2010-0177824 A1 | 15/07/2010 |
| | | US 2010-0202519 A1 | 12/08/2010 |
| | | US 2010-0202521 A1 | 12/08/2010 |
| | | US 2010-0215100 A1 | 26/08/2010 |
| | | US 2010-0260265 A1 | 14/10/2010 |
| | | US 2010-0316135 A1 | 16/12/2010 |
| | | US 2010-0316136 A1 | 16/12/2010 |
| | | US 2010-0316360 A1 | 16/12/2010 |
| | | US 2010-0316361 A1 | 16/12/2010 |
| | | US 2010-0316362 A1 | 16/12/2010 |
| | | US 7782943 B2 | 24/08/2010 |
| | | US 7782944 B2 | 24/08/2010 |
| | | US 7782945 B2 | 24/08/2010 |
| | | US 7782946 B2 | 24/08/2010 |
| | | US 7782947 B2 | 24/08/2010 |
| | | US 7782948 B2 | 24/08/2010 |
| | | US 7782949 B2 | 24/08/2010 |
| | | US 7782950 B2 | 24/08/2010 |
| | | US 8170108 B2 | 01/05/2012 |
| | | US 8325814 B2 | 04/12/2012 |
| | | US 8363732 B2 | 29/01/2013 |
| | | US 8411744 B2 | 02/04/2013 |
| | | US 8428130 B2 | 23/04/2013 |
| | | US 8432972 B2 | 30/04/2013 |
| | | US 8457207 B2 | 04/06/2013 |
| | | US 8472519 B2 | 25/06/2013 |
| | | WO 2007-114608 A1 | 11/10/2007 |
| | | WO 2007-114609 A1 | 11/10/2007 |
| | | WO 2007-114610 A1 | 11/10/2007 |
| | | WO 2007-114611 A1 | 11/10/2007 |
| | | WO 2007-114612 A1 | 11/10/2007 |
| | | WO 2007-148906 A1 | 27/12/2007 |
| | | WO 2007-148907 A1 | 27/12/2007 |
| | | WO 2007-148909 A1 | 27/12/2007 |

Form PCT/ISA/210 (patent family annex) (July 2009)

INTERNATIONAL SEARCH REPORT
Information on patent family members

International application No.

**PCT/KR2013/003459**

| Patent document cited in search report | Publication date | Patent family member | Publication date |
|---|---|---|---|
| | | WO 2008-023967 A1 | 28/02/2008 |
| | | WO 2008-023968 A1 | 28/02/2008 |
| US 2010-0189173 A1 | 29/07/2010 | WO 2010-086500 A1 | 05/08/2010 |
| US 2008-0089428 A1 | 17/04/2008 | JP 04793366 B2 | 12/10/2011 |
| | | JP 2008-182669 A | 07/08/2008 |
| | | US 8139150 B2 | 20/03/2012 |
| US 2010-0091844 A1 | 15/04/2010 | BR PI0710048 A2 | 02/08/2011 |
| | | CA 2647735 A1 | 11/10/2007 |
| | | CN 101449585 A | 03/06/2009 |
| | | CN 101455082 A | 10/06/2009 |
| | | CN 101455082 B | 13/02/2013 |
| | | CN 101455084 A | 10/06/2009 |
| | | CN 101461242 A | 17/06/2009 |
| | | CN 101461242 B | 03/08/2011 |
| | | CN 101473655 A | 01/07/2009 |
| | | CN 101473655 B | 08/06/2011 |
| | | CN 101491095 A | 22/07/2009 |
| | | DE 202007019446 U1 | 05/09/2012 |
| | | DE 202007019454 U1 | 03/09/2012 |
| | | DE 202007019458 U1 | 13/09/2012 |
| | | DE 202007019459 U1 | 13/09/2012 |
| | | EP 2005752 A1 | 24/12/2008 |
| | | EP 2005753 A1 | 24/12/2008 |
| | | EP 2008460 A1 | 31/12/2008 |
| | | EP 2008461 A1 | 31/12/2008 |
| | | EP 2025170 A1 | 18/02/2009 |
| | | EP 2030450 A1 | 04/03/2009 |
| | | JP 05054092 B2 | 24/10/2012 |
| | | JP 05054092 B2 | 03/08/2012 |
| | | JP 05055353 B2 | 03/08/2012 |
| | | JP 05055354 B2 | 03/08/2012 |
| | | JP 05055355 B2 | 03/08/2012 |
| | | JP 2009-532930 A | 10/09/2009 |
| | | JP 2009-532931 A | 10/09/2009 |
| | | JP 2009-532932 A | 10/09/2009 |
| | | JP 2009-532933 A | 10/09/2009 |
| | | JP 2009-532934 A | 10/09/2009 |
| | | KR 10-0937431 B1 | 18/01/2010 |
| | | KR 10-0943911 B1 | 24/02/2010 |
| | | KR 10-0949974 B1 | 29/03/2010 |
| | | KR 10-0949975 B1 | 29/03/2010 |
| | | KR 10-0949976 B1 | 29/03/2010 |
| | | KR 10-0949977 B1 | 29/03/2010 |
| | | KR 10-0949978 B1 | 29/03/2010 |
| | | KR 10-0949979 B1 | 29/03/2010 |
| | | KR 10-0949980 B1 | 29/03/2010 |
| | | KR 10-0949981 B1 | 29/03/2010 |

Form PCT/ISA/210 (patent family annex) (July 2009)

# EP 2 838 264 A1

**INTERNATIONAL SEARCH REPORT**
Information on patent family members

International application No.

**PCT/KR2013/003459**

| Patent document cited in search report | Publication date | Patent family member | Publication date |
|---|---|---|---|
| | | KR 10-0949982 B1 | 29/03/2010 |
| | | KR 10-0949983 B1 | 29/03/2010 |
| | | KR 10-0959536 B1 | 27/05/2010 |
| | | KR 10-0959537 B1 | 27/05/2010 |
| | | KR 10-0959538 B1 | 27/05/2010 |
| | | KR 10-0966567 B1 | 29/06/2010 |
| | | KR 10-0966568 B1 | 29/06/2010 |
| | | KR 10-0966569 B1 | 30/06/2010 |
| | | KR 10-0966570 B1 | 29/06/2010 |
| | | KR 10-0998912 B1 | 08/12/2010 |
| | | KR 10-2007-0098428 A | 05/10/2007 |
| | | KR 10-2007-0098429 A | 05/10/2007 |
| | | KR 10-2007-0098430 A | 05/10/2007 |
| | | KR 10-2007-0098437 A | 05/10/2007 |
| | | KR 10-2007-0111947 A | 22/11/2007 |
| | | KR 10-2007-0111968 A | 22/11/2007 |
| | | KR 10-2007-0111969 A | 22/11/2007 |
| | | KR 10-2007-0116527 A | 10/12/2007 |
| | | KR 10-2007-0120416 A | 24/12/2007 |
| | | KR 10-2008-0007069 A | 17/01/2008 |
| | | KR 10-2008-0007086 A | 17/01/2008 |
| | | KR 10-2008-0007177 A | 17/01/2008 |
| | | KR 10-2008-0008944 A | 24/01/2008 |
| | | KR 10-2008-0015713 A | 20/02/2008 |
| | | KR 10-2008-0015714 A | 20/02/2008 |
| | | KR 10-2008-0015746 A | 20/02/2008 |
| | | KR 10-2008-0015760 A | 20/02/2008 |
| | | KR 10-2008-0022055 A | 10/03/2008 |
| | | KR 10-2008-0022063 A | 10/03/2008 |
| | | KR 10-2008-0035429 A | 23/04/2008 |
| | | KR 10-2008-0036910 A | 29/04/2008 |
| | | KR 10-2008-0050349 A | 05/06/2008 |
| | | KR 10-2008-0055685 A | 19/06/2008 |
| | | KR 10-2008-0055686 A | 19/06/2008 |
| | | KR 10-2010-0074314 A | 01/07/2010 |
| | | MX 2008012437 A | 18/11/2008 |
| | | US 2009-0279608 A1 | 12/11/2009 |
| | | US 2009-0296811 A1 | 03/12/2009 |
| | | US 2010-0020870 A1 | 28/01/2010 |
| | | US 2010-0026882 A1 | 04/02/2010 |
| | | US 2010-0026883 A1 | 04/02/2010 |
| | | US 2010-0026884 A1 | 04/02/2010 |
| | | US 2010-0027653 A1 | 04/02/2010 |
| | | US 2010-0027654 A1 | 04/02/2010 |
| | | US 2010-0027659 A1 | 04/02/2010 |
| | | US 2010-0027660 A1 | 04/02/2010 |
| | | US 2010-0027682 A1 | 04/02/2010 |
| | | US 2010-0046619 A1 | 25/02/2010 |
| | | US 2010-0074334 A1 | 25/03/2010 |
| | | US 2010-0080293 A1 | 01/04/2010 |

Form PCT/ISA/210 (patent family annex) (July 2009)

INTERNATIONAL SEARCH REPORT
Information on patent family members

International application No.

**PCT/KR2013/003459**

| Patent document cited in search report | Publication date | Patent family member | Publication date |
|---|---|---|---|
| | | US 2010-0086036 A1 | 08/04/2010 |
| | | US 2010-0091843 A1 | 15/04/2010 |
| | | US 2010-0091845 A1 | 15/04/2010 |
| | | US 2010-0091883 A1 | 15/04/2010 |
| | | US 2010-0091884 A1 | 15/04/2010 |
| | | US 2010-0091885 A1 | 15/04/2010 |
| | | US 2010-0091886 A1 | 15/04/2010 |
| | | US 2010-0104012 A1 | 29/04/2010 |
| | | US 2010-0104014 A1 | 29/04/2010 |
| | | US 2010-0111169 A1 | 06/05/2010 |
| | | US 2010-0111170 A1 | 06/05/2010 |
| | | US 2010-0111171 A1 | 06/05/2010 |
| | | US 2010-0111172 A1 | 06/05/2010 |
| | | US 2010-0111173 A1 | 06/05/2010 |
| | | US 2010-0111174 A1 | 06/05/2010 |
| | | US 2010-0128787 A1 | 27/05/2010 |
| | | US 2010-0150234 A1 | 17/06/2010 |
| | | US 2010-0150235 A1 | 17/06/2010 |
| | | US 2010-0150236 A1 | 17/06/2010 |
| | | US 2010-0158112 A1 | 24/06/2010 |
| | | US 2010-0158113 A1 | 24/06/2010 |
| | | US 2010-0158114 A1 | 24/06/2010 |
| | | US 2010-0158117 A1 | 24/06/2010 |
| | | US 2010-0158118 A1 | 24/06/2010 |
| | | US 2010-0177824 A1 | 15/07/2010 |
| | | US 2010-0202519 A1 | 12/08/2010 |
| | | US 2010-0202521 A1 | 12/08/2010 |
| | | US 2010-0215100 A1 | 26/08/2010 |
| | | US 2010-0260265 A1 | 14/10/2010 |
| | | US 2010-0316135 A1 | 16/12/2010 |
| | | US 2010-0316136 A1 | 16/12/2010 |
| | | US 2010-0316360 A1 | 16/12/2010 |
| | | US 2010-0316361 A1 | 16/12/2010 |
| | | US 2010-0316362 A1 | 16/12/2010 |
| | | US 7782943 B2 | 24/08/2010 |
| | | US 7782944 B2 | 24/08/2010 |
| | | US 7782945 B2 | 24/08/2010 |
| | | US 7782946 B2 | 24/08/2010 |
| | | US 7782947 B2 | 24/08/2010 |
| | | US 7782948 B2 | 24/08/2010 |
| | | US 7782949 B2 | 24/08/2010 |
| | | US 7782950 B2 | 24/08/2010 |
| | | US 8170108 B2 | 01/05/2012 |
| | | US 8325814 B2 | 04/12/2012 |
| | | US 8363732 B2 | 29/01/2013 |
| | | US 8411744 B2 | 02/04/2013 |
| | | US 8428130 B2 | 23/04/2013 |
| | | US 8432972 B2 | 30/04/2013 |
| | | US 8457207 B2 | 04/06/2013 |
| | | US 8472519 B2 | 25/06/2013 |

Form PCT/ISA/210 (patent family annex) (July 2009)

INTERNATIONAL SEARCH REPORT
Information on patent family members

International application No.

**PCT/KR2013/003459**

| Patent document cited in search report | Publication date | Patent family member | Publication date |
|---|---|---|---|
| | | WO 2007-114608 A1 | 11/10/2007 |
| | | WO 2007-114609 A1 | 11/10/2007 |
| | | WO 2007-114610 A1 | 11/10/2007 |
| | | WO 2007-114611 A1 | 11/10/2007 |
| | | WO 2007-114612 A1 | 11/10/2007 |

Form PCT/ISA/210 (patent family annex) (July 2009)